# EUROPEAN PATENT APPLICATION

(11) **EP 0 903 904 A2**
(43) Date of publication of application: **24.03.1999**
(21) Application number: 98307389.1
(22) Date of filing: 11.09.1998
(51) Int. Cl.: H04L 29/06, H04L 12/14

(54) **Network system, data distribution method, and recording medium on which distribution use data is recorded**

(30) Priority: 22.09.1997 JP 257394/97
(71) Applicant: Digital Vision Laboratories Corporation, Minato-ku, Tokyo 107-0052 (JP)
(72) Inventor: Maegawa, Hirotoshi, c/o Digital Lab. Corp., Tokyo 107-0052 (JP); Karasawa, Hideyasu, c/o Digital Lab. Corp., Tokyo 107-0052 (JP); Takano, Masaharu, c/o Digital Lab. Corp., Tokyo 107-0052 (JP)
(74) Representative: Hamilton, Alistair

(57) **Abstract**

A network system able to suitably distribute any content as a transactable product, comprising a data server means comprised on at least one node on the network and supplying through the network a data package (information package) having any content for which a boundary is set relating to a predetermined attribute for the transaction, information relating to the control for utilization of the content, and information of a predetermined attribute for the transaction, a data utilization means comprised on at least one node on the network, receiving the supplied data package, and substantially acquiring at least the content, and a transaction management means comprised on any node on the network and carrying out predetermined processing relating to the transaction based on the information of the predetermined attribute for the transaction of the content each time the content delineated by the boundary is newly substantially acquired by the data utilization means.

## Description

The present invention relates to a network system capable of distributing desired information in a desired format via the network, more particularly relates to a network system and a data distribution method capable of carrying out charging and other processing in the same way as normal packaged products and capable of distributing an information package as a product and a recording medium on which the data to be distributed is recorded and which can be read by a computer connected to the network.

Networks which connect various data processing apparatuses and which allow utilization of various types of information and various forms of data processing are now being constructed.

For example, the so-called "internet" and other large scale networks connecting a plurality of computer networks are being constructed in various areas.

Further, cable television (CATV) systems are also rapidly developing and are beginning to be used not only for simple distribution of television programs, but also as information network.

Other than this, digital exchange networks and ISDN are being set up, mobile communication networks are spreading, satellite communication services are being started, and other various types and various sizes of networks are spreading.

Then, it is anticipated that more effective information processing will be carried out by so-called "multimedia processing", that is, processing of video data, audio data, image data, text data, and other various forms of data linked together, through such a network. This is now being specifically realized along with the development of the network explained above.

As a basic type of processing, in recent years, video data, audio data, and other various types of content are now being circulated over networks.

Further, in broadcasting systems, digital satellite broadcasting and cable television systems are converting to multi-channel services. Systems are also appearing which distribute the content and program attribute information (service information) together.

In such an environment, there are growing expectations for electronic commerce where information on the network are treated as products and is circulated in the same way as existing packaged products on which information is recorded on a recording medium such as a CD or video tape.

Various means are starting to be proposed for describing the information circulating on such a network.

For example, Netscape Communications Corp. and Apple Computer Inc. of the U.S. have proposed a system referred to as a "meta content framework" (MCF).

In the MCF, the on-line content at web sites and the internet/intranet is handled as "meta content" in an abstract format. The aim is to impart commonality to the methods for handling content such as the specification of the sites, the attachment of search information, and the viewing of the content.

Further, it is considered that the use of the MCF will facilitate the positioning of sites for navigation, indexing for searches, monitoring of content, parental control, advanced control for the download of content, fetching of other content, etc.

Further, Microsoft Corporation and Marimba Co. are proposing specifications for distributing software via the internet (OSD: Open Software Description).

However, even such a method is insufficient as a framework for handling electronic information on the network as a product. There is a disadvantage that the broad spectrum of electronic information on the network cannot be suitably distributed by electronic commerce in the same way as the distribution of conventional packaged products where the information is recorded on conventional recording media such as CDs and video tapes.

For example, there is the disadvantage that processing relating to the charging and rights occurring along with transactions of goods has been carried out by specified methods for each individual application system heretofore and that no common method has been established.

At the present time, the main standardized system for sending data on a network is the HTML (data format of WWW). This cannot be further expanded for use for information products. It is possible to simply attach information for charging and rights in the system mentioned above, but no specification capable of handling an information structure as an information product has yet been reached.

Namely, all of these systems were devised with individual applications in mind such as the utilization of content and the distribution of programs and therefore cannot be applied to the broad area of distribution of information predicated upon electronic commerce.

Explaining this in more detail, for example, in services for distributing video data, audio data, and other information via current network systems, no system has yet been established for providing information for selecting whether or not to utilize the distributed information and no system has yet been established for payment of charges. Therefore, there is the disadvantage that it is difficult for users to safely use information.

In the case of already existing packaged goods such as CDs or video tapes, in the case for example of video content, still photos, information on the director and starring actors, information on the ranking of the American and global box office earnings, advertising copy, etc. are provided on the box, jacket, etc. A user judges whether or not he or she will buy information, that is, the video content, by referring to the information.

In movies etc. distributed via a network, however, in actuality, the only way content is being introduced is by enabling the user to preview a few minutes at the start. This is extremely sparse compared with the information in the above-mentioned case of packaged goods. In practice, therefore, the content is hard to understand. As a result, the product cannot be distributed in an attractive manner.

Further, at the present time, many of the charging systems which are being widely used for distributing movies and other video data have the users pay a standard contract fee for a certain contract period, for example, one week or one month. Such a system is effective for a user who routinely uses the service on a frequent basis, but a general user who desires to receive the content only when there is content that he or she desires to view must be careful with the contract. A type of distribution and a type of charging for such a format with which the user can easily obtain just the desired content when he or she wants it in the same way as when acquiring content by a CD or a video tape are therefore demanded.

In this way, services distributing information via a network cannot be said to have ever been effectively utilized equal to or more than formats which provide information by for example a CD or a video tape.

An aim of the present invention is to provide a network system capable of adequately and suitably distributing various types of information via a network upon demand and further suitably providing information concerning the content and capable of suitably carrying out the charging by a clear, common method so as to be able to suitably perform electronic commerce via the network.

Further, another aim of the present invention is to provide a data distribution method capable of adequately and suitably distributing various types of information via a network upon demand and further suitably providing information concerning the content and capable of suitably carrying out the charging by a clear, common method so as to be able to suitably perform electronic commerce via the network.

Further, still another aim of the present invention is to provide a recording medium which has recorded on it a data package (information package) which is suitable for use for electronic commerce via a network and which can be read by a computer, specifically one which has recorded on it various types of information in a predetermined format so as to enable information concerning the content to be suitably provided and the charging to be suitably carried out by a clear, common method and which can be read by a computer connected to the network so as to enable information to be adequately and suitably distributed upon demand.

To achieve the above aims first the invention was designed to set the boundaries for the framework of prices in the information package. Then, the invention was designed to dynamically change the boundaries along with the preparation, distribution, and utilization of the information package. For example, the invention was designed to assemble the information package in a form including other information packages.

Further, the invention was designed to attach attributes for indicating the type, nature, and restrictions of the content to the information package and set rules for controlling these attributes. These attributes are for example the data indicating content such as the owner, author, type of content, and type of service and the data used for the charging, license, and authentication.

Further, by making it possible to handle continuous media data in the information package, the invention was designed to handle multimedia data in the information package. Specifically, to enable the media data to be handled in spatial data such as structure description and attribute description, the invention was designed to express time series data by predetermined descriptors and process the time control. Further, the invention was designed to also provide a function for controlling the stream.

Further, the invention was designed to add control functions for extracting the content to the information package per se. These are for example for video and audio processing and the processing of authentication and charging.

Further, the invention was designed so that a plurality of information packages refer to each other. The invention was designed to change the interpretation in references dynamically in accordance with the state of the information package to be referenced and the content of the attributes of the reference. Further, it is desirable to be able to dynamically search for the destination of the reference.

Further, the invention was designed so that the information package describes the control for use for processing the information using its internal information or information of another structure referenced from this structure. The invention was designed so that this control covers not only the control inside this information package, but also the control until calling up the other structure and transferring control.

Further, the invention was designed so that the information package can be prepared and utilized by making clever use, at the time of the preparation and utilization, of the dispersed functions of the information package dispersed on the network by the server and client.

Further, the invention was designed to realize the function of determining the state of the information package being referenced and discarding it when it is deemed unnecessary.

Therefore, the network system of the present invention is a network system able to suitably distribute any content as a transactable product, comprising a data server means comprised on at least one node on the network and supplying through the network a data package (information package) having any content for which a boundary is set relating to a predetermined attribute for the transaction, information relating to the control for utilization of the content, and information of a predetermined attribute for the transaction, a data utilization means comprised on at least one node on the network, receiving the supplied data package, and substantially acquiring at least the content, and a transaction management means comprised on any node on the network and carrying out predetermined processing relating to the transaction based on the information of the predetermined attribute for the transaction of the content each time the content delineated by the boundary is newly substantially acquired by the data utilization means.

Further, the data distribution method of the present invention is a data distribution method in a network through which a plurality of nodes are connected for distributing any content as a transactable product to a data utilization means comprised of at least one node on the network, comprising sending a data package (information package) having any content for which a boundary is set relating to a predetermined attribute for the transaction, information relating to the control for utilization of the content, and information of a predetermined attribute for the transaction, receiving the data package supplied by the data utilization means, substantially acquiring at least the content, and carrying out predetermined processing relating to the transaction based on the information of the predetermined attribute for the transaction of the content each time the content delineated by the boundary is newly substantially acquired by the data utilization means.

Further, the recording medium of the present invention on which the distribution use data is recorded and which can be read by a computer is a recording medium on which a data package for distributing any content as a transactable product in a network through which a plurality of nodes are connected is recorded and which can be read by a computer substantially connected to the network, wherein a data package (information package) having any content for which a boundary is set relating to a predetermined attribute for the transaction, information relating to the control for utilization of the content, and information of a predetermined attribute for the transaction is recorded.

These and other aims and features of the present invention will become more apparent by the following description of the preferred embodiments given by way of example only with reference to the attached drawings, wherein:
Fig. 1 is a view explaining a network according to an embodiment of the present invention;
Fig. 2 is a view of a processing system relating to the present service loaded on a network system;
Fig. 3 is a first view for explaining a method of establishing synchronization between streams;
Fig. 4 is a second view for explaining the method of establishing synchronization between streams;
Fig. 5 is a view of a sequence designated by an information package;
Figs. 6A and 6B are views for explaining a description in a multimedia sequence description part of the information package, in which Fig. 6A is a view for explaining the description of pictures P1 to P4; and Fig. 6B is a view for explaining the description of Audio 1 and Audio 2;
Figs. 7A to 7C are views for explaining the description in the multimedia sequence description part of the information package, in which Fig. 7A is a view for explaining the description of Video 1; Fig. 7B is a view for explaining the description of animation 1; and Fig. 7C is a view for explaining the description of dialog 1;
Figs. 8A and 8B are views for explaining the description in the multimedia sequence description part of the information package, in which Fig. 8A is a view for explaining the description of a destination of output; and Fig. 8B is a view for explaining the description of the sequences of each of the streams shown in Figs. 6A, 6B and 7A to 7C;
Fig. 9 is a view of the dialog described in this information package;
Fig. 10 is a view of the content of the sequence and the flow of the sequence described in a first information package for distributing a movie list to the user and making him or her select the movie which he or she desires to be distributed;
Fig. 11 is a view for explaining the dialog in the sequence shown in Fig. 10;
Fig. 12 is a view of a title part of the first information package;
Fig. 13 is a view of the first half of a link part of the first information package;
Fig. 14 is a view of the latter half of the link part of the first information package;
Fig. 15 is a view of a content attribute part and a control attribute part of the first information package;
Fig. 16 is a view of a multimedia sequence part of the first information package;
Fig. 17 is a view of the content of the dialog of the multimedia sequence part shown in Fig. 16;
Fig. 18 is a view of the content of the sequence and the flow of the sequence described in a second information package for actually distributing the requested movie to the user;
Fig. 19 is a view of the title part and the link part of the second information package;
Fig. 20 is a view of the content attribute part of the first information package;
Fig. 21 is a view of the control attribute part of the first information package;
Fig. 22 is a view of the sequence part of the first information package;
Fig. 23 is a view of a third information package relating to the authentication;
Fig. 24 is a view of a fourth information package for charging an advertisement fee to an advertiser etc. by an information provider;
Fig. 25 is a view of a configuration of the information server of the processing system shown in Fig. 2;
Fig. 26 is a view of the configuration of a server unit of the information server shown in Fig. 25;
Fig. 27 is a view of the configuration of the information user of the processing system shown in Fig. 2;
Figs. 28A to 28D are views of a basic correspondence of a logical format of the information package and an internal expression inside the processing system;
Fig. 29 is a view for explaining the internal expression of the title part of the first information package shown in Figs. 12 to 17;
Fig. 30 is a first view for explaining the internal expression of the link part of the first information package;
Fig. 31 is a second view for explaining the internal expression of the link part of the first information package;
Fig. 32 is a view for explaining the internal expression of the content attribute part of the first information package;
Fig. 33 is a view for explaining the internal expression of the control attribute part of the first information package;
Fig. 34 is a first view for explaining the internal expression of the sequence part of the first information package;
Fig. 35 is a second view for explaining the internal expression of the sequence part of the first information package;
Fig. 36 is a third view for explaining the internal expression of the sequence part of the first information package;
Fig. 37 is a view for explaining the processing between the server unit of the information server and the information user;
Fig. 38 is a view explaining the processing method for the stream data on the network shown in Fig. 1;
Fig. 39 is a view of a state of generating a virtual stream object;
Fig. 40 is a view of a state when the transfer of the stream data is actually carried out;
Fig. 41 is a view of the content of a contents script for generating the virtual stream object;
Fig. 42 is a view of a state where the virtual stream object is generated based on the contents script shown in Fig. 41;
Fig. 43 is a view explaining the operation of each module when generating the virtual stream object in the data processing method shown in Fig. 38;
Fig. 44 is a view explaining the operation of each module when starting the transfer of the stream in the data processing system shown in Fig. 38;
Figs. 45A and 45B are views explaining the data processing method where the stream is combined, in which Fig. 45A is a view particularly showing the processing of combining two sources stored in one data processing apparatus; and Fig. 45B is a view particularly showing the processing of combining two sources stored in two data processing apparatuses by two virtual stream objects;
Fig. 46 is a view of the constitution of a stream combining unit of the data processing system shown in Figs. 45A and 45B;
Figs. 47A and 47B are views of the configuration of the data processing system where a plurality of streams are combined and transferred as one stream - a summary of which is shown in Fig. 45A;
Fig. 48 is a view of the configuration of the data processing system where a plurality of streams are individually transferred and combined - a summary of which is shown in Fig. 45B;
Fig. 49 is a schematic view for explaining the case where Fig. 48 is actually realized on a dispersed system;
Fig. 50 is a view of a state where the network is managed by a logical sub-network;
Figs. 51A and 51B are views for explaining a token, in which Fig. 51A is a view explaining the item contained in the token and a main content thereof; and Fig. 51B is a view of the example of the actually packaged token;
Fig. 52 is a view of the configuration of a mediator;
Fig. 53 is a view of the configuration of a token processing frame;
Fig. 54 is a view of a status transition at a task processing;
Fig. 55 is a view of the content of a potential geometry data base;
Fig. 56 is a view of the contents of node detail information stored in a domain node profile and neighboring node detail information stored in a neighboring mediator management unit;
Fig. 57 is a schematic view expressing propagation of mediation processing;
Fig. 58 is a view for explaining a method of management of the information package;
Fig. 59 is a view of an example where each information package stores a reference weight by storing a power of 2 in the method of management of the information package shown in Fig. 58;
Fig. 60 is a view for explaining a method of addition of a reference weight and a referenced object weight to the information package;
Fig. 61 is a view of the title part of a nesting type information package;
Fig. 62 is a view of a linkage part of this information package;
Fig. 63 is a first view of the content attribute part of this information package;
Fig. 64 is a second view of the content attribute part of this information package;
Fig. 65 is a view of the control attribute part of this information package;
Fig. 66 is a first view of the sequence part of this information package;
Fig. 67 is a second view of the sequence part of this information package;
Fig. 68 is a view of the flow of the sequence of this information package;
Fig. 69 is a view of the state of dialog of this information package;
Fig. 70 is a view of the title part to the control attribute part of the information package having the software program;
Fig. 71 is a first view of the sequence part of the information package having the software program;
Fig. 72 is a second view of the sequence part of the information package having the software program;
Fig. 73 is a view of the information package having the domain.

Below, an explanation will be made next of embodiments of the present invention.

In the present embodiment, the present invention will be explained by taking as an example a network system, information distribution method, format of distribution use data, a specific flow of the services, etc. in the case for example of distributing a movie or other information through a network for a fee.

### Network System

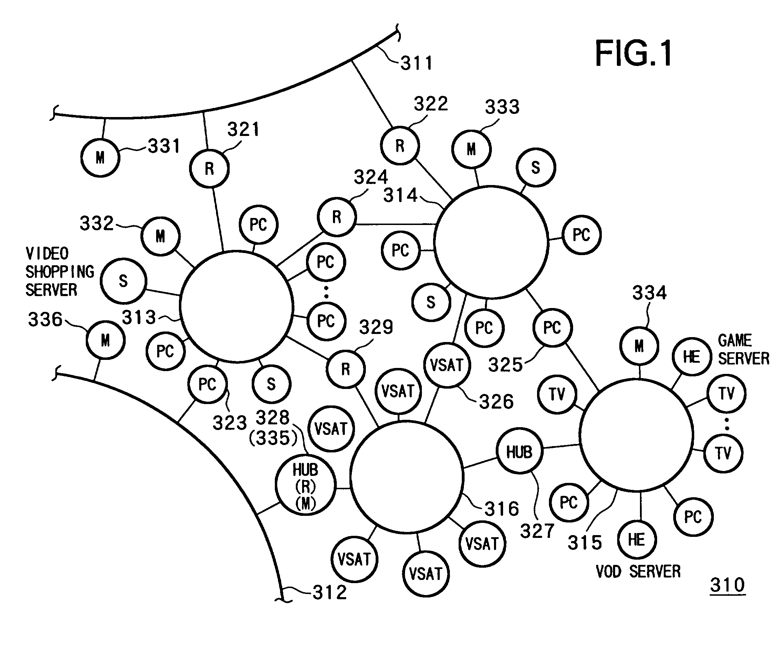

First, an explanation will be given of the network system as an environment making such utilization possible by referring to Fig. 1.

The network system shown in the present embodiment is more specifically a network connecting computer networks through which a plurality of computers are connected, the internet including such a network, and cable television (CATV), satellite communications, mobile communications, and other various types and various sizes of networks. By applying a network management apparatus, network management method, and transmission use information structure (transmission use information package) explained later to such a network, it is possible to effectively perform data transmission serving as the basis for the use and distribution of various types of multimedia information.

Figure 1 is a view of an example of such a network.

A network 310 shown in Fig. 1 has six physical sub-networks 311 to 316.

The sub-networks 311 and 312 are key networks that cover a wider area in comparison with the other sub-networks 313 to 316 and that comprise a plurality of sub-networks connected with each other and are constructed by for example private high speed digital lines.

The sub-networks 313 and 314 are ordinary local area networks (LAN) to which a large number of personal computers (PC) or servers (S) are connected and are mainly constituted by Ethernets or communication lines.

The sub-network 315 is a cable television network connected by fiber optic cables or coaxial cables and having connected to it a head end device (HE) in a broadcasting station, television receivers (TV) connected via a set top box, personal computers (PC) connected via cable modems, etc.

The sub-network 316 is a radio transmission network, specifically, a satellite communication system, comprised of a master station (HUB) having a host computer and centrally carrying out network monitoring and control and slave stations (VSAT) which use very small antennas and have personal computers, various types of communication apparatuses, monitors, etc., for carrying out bidirectional communications via a communication satellite.

The sub-networks 311 to 316 are connected as illustrated via routers (R) 321 to 329. The routers 321 to 329 exist as nodes with respect to two connected networks, have management information of both sub-networks to be routed, and output signals input via one network converted to a format which can be output to the other network. By this router, data can be transferred among computer networks 311 to 314, the cable television network 315, the satellite communication network 316, etc.

### Summary of Information Distribution Service

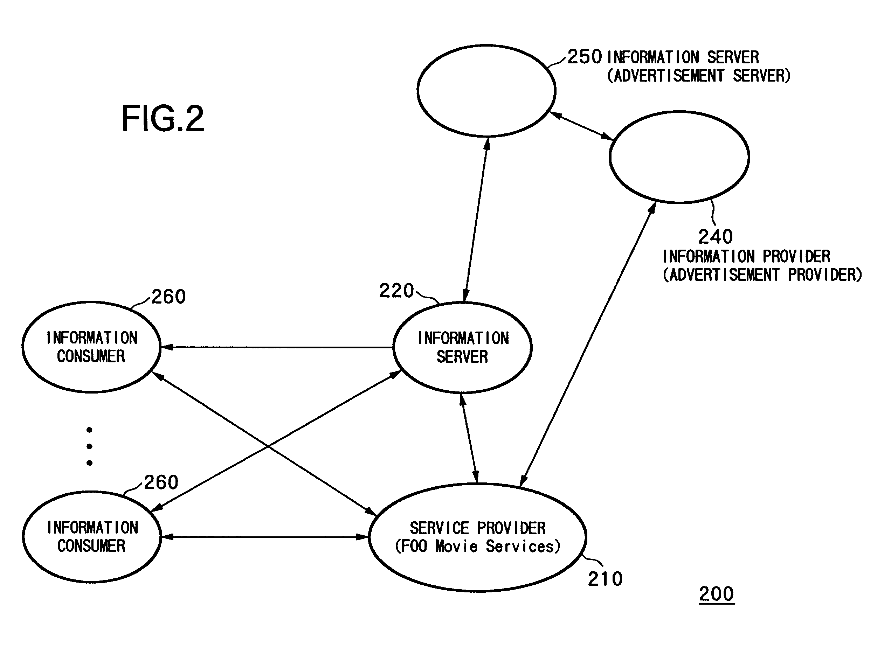

A brief explanation will be given next of an information distribution service as an example of the service to be provided in such a network system and used in the present embodiment by referring to Fig. 2.

The information distribution service illustrated in the present embodiment is a service by which the information provider, that is, a movie service company (FOO Movie Services), provides a movie via a network for a fee.

A typical type of the service is to send a desired list of movies and distribute a movie selected by the user from the list in accordance with a request of the user.

An explanation will be given next of a processing system loaded on any node in the network system shown in Fig. 1 so as to perform such a service referring to Fig. 2.

This service is provided by, as shown in Fig. 2, a service provider 210, an information server 220, an advertisement provider 240, an advertisement server 250 and an information consumer 260.

The service provider 210 to information consumer 260 are logical processing units. In actuality, they are processing systems or processing devices loaded on one node or a plurality of nodes on the network system.

Further, the service provider 210 to the information consumer 260 are connected via the network as mentioned above. A communication means is secured with respect to each other.

The service provider 210 is a subject node for providing the information distribution service and handles the subscription by the information consumer 260 and other management of the information user, charging of advertisement fees to the advertisement provider 240, and other overall management regarding services.

The information server 220 actually distributes the information to the information consumer 260 while appropriately using advertisements managed from the service provider 210 and transmitted from the advertisement server 250.

The advertisement provider 240 simultaneously transmits the advertisements which it requests be distributed to an entity such as the service provider 210 distributing the information to the information consumer 260.

The advertisement server 250 actually distributes the advertisement data to the information server 220 based on a request from the advertisement provider 240.

The information consumer 260 receives and utilizes the information transmitted from the information server 220 and is any system on the network, for example, a personal computer or a television receiver first of all.

Then, in order to provide the service as explained above by such a network or along with such a service, specifically the following processing is carried out among processing systems:

First, the information server 220 sends a list of movies which can be distributed in response to a request of the information consumer 260.

The information consumer 260 selects a desired movie from the list and requests its distribution.

The information server 220 adds the advertisement supplied from the advertisement server 250 and distributes that movie.

The service provider 210 carries out the charging for the viewing of the movie by the information consumer 260.

Further, the service provider 210 bills the distribution fee to the advertisement provider 240 for the distribution of the advertisement.

Further, the information consumer 260 subscribes to the service by the service provider 210 in advance by procedures for this. The information consumer 260 obtains a user number (account) by the subscription and becomes able to use the service.

Further, the information consumer 260 carries out the procedures for authentication for the information to be provided in accordance with need

### Information Structure Information Package)

Next, an explanation will be made of the format of transmission of information used for providing the service explained above on the network system explained above.

The processing systems on the above network system transmit among them the content to be distributed (movie in the present embodiment), written certification, bill, etc. and information for control by using a predetermined information structure (hereinafter referenced as an information package) according to the present invention.

This information package will be explained next.

Note that, in the following explanation, the information package is mainly denoted by a hyper text format based on the SGML (Standard Generalized Markup Language, ISO8879).

### Basic Configuration of Information Package

The information for distribution via the network, that is, the information package, is basically configured by combining the basic units, that is, the elements, in a predetermined format or connecting them hierarchically, but usually are configured by further combining structures obtained by combining elements or further connecting them hierarchically.

The basic unit, that is, the element, is denoted by the basic format as shown in (1) or (2): 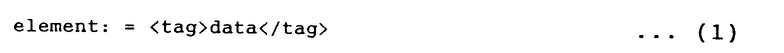 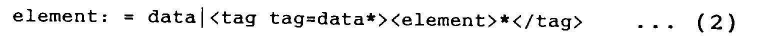 where, * is an arrangement of 0 or more

In (1), the pair of the <tag> and the </tag> will be referred to as a "tag" with respect to data enclosed by them and describes the processing on the data etc.

Further, a tag without a function is particularly expressed by <null>. Accordingly, <null>data</null> or <null>...</null> can be used as a delimiter sign.

A structure is configured by these elements connected for example hierarchically as shown in (3).

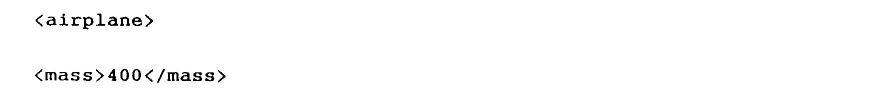

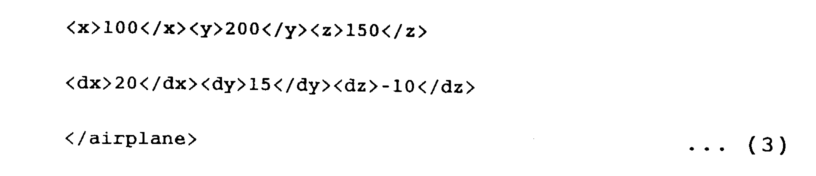

Further, by adding to this structure a description indicating a link as shown in (4), a linked structure is constituted.

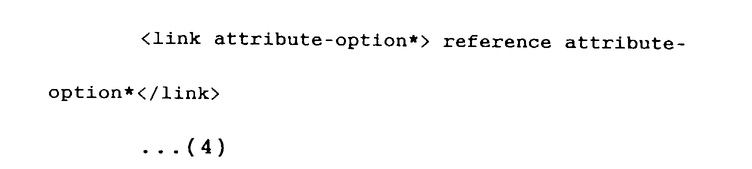

This link includes an internal link and an external link for indicating a logical boundary of the information package and is distinguished by an attribute. The range of connection by this internal link constitutes one information package.

Note that the reference in the link is given as &entity when the entity of the destination of the reference is expressed as in (5). When the entity is expressed by not a symbol, but a string, the link can be handled as a name. For example, when the entity of the destination of the reference is expressed as in (6), the name is given as &"Movie Star Wars". These reference and name are provided by the system or network handling the information package.

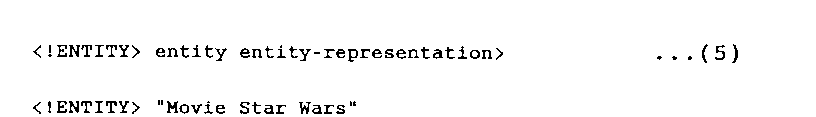

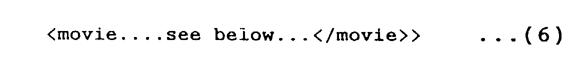

In the structure of such a basic format, the attributes of the tag and data thereof are designated.

The attribute of a tag is described by the format as shown in (7). 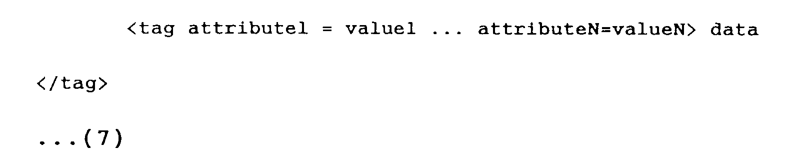 <tag attribute1 = value1 ... attributeN=valueN> data
</tag>
(7)

Further, the attribute of the data is described as in (8) by using the configuration of the structure as explained above. At this time, as shown in (9), it is also possible to describe the attribute as another structure and designate it by a link.

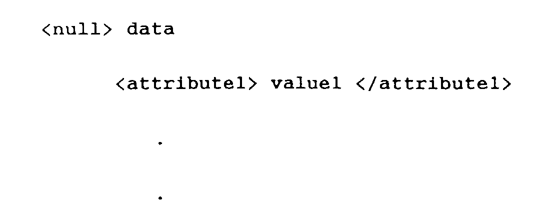

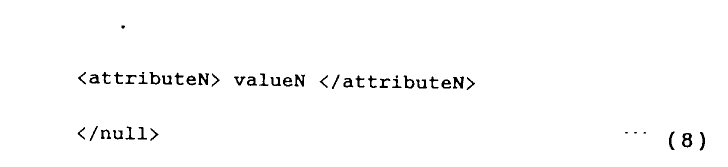

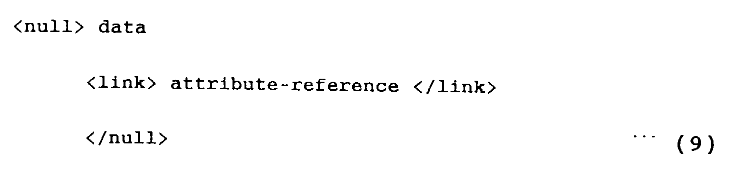

The information package is comprised by using such a description.

### Configuration of Information Package

The information package is configured by using structures having the functions as shown in Table 1 as basic structural elements, using the title part as a hub, and connecting the basic structural elements by links.

Note that, in the information package explained below, it is also possible to encipher one part of the construction of the structure.

**(Table 1)**

| | |
|---|---|
| Title part | Title information |
| Link part | Link among basic structural elements |
| Content attribute part | Bibliographic information |
| Control attribute part | Access control |
| Multimedia sequence part | Sequence realizing content |

### Title Part

The title part is further comprised by the information as shown in Table 2.

**(Table 2)**

| |
|---|
| Information package declaration |
| Cover |
| Name |
| Sort |
| Designation of processing system |
| Structure description |

The "cover" is a digest of the content and indicated by any format.

The "name" is the name or identifier of the information package of both of them.

The "sort" is expressed by a first sort indicating the item and a second sort indicating the content of the sort expressed as the data attribute of the first sort and shows the content as shown in Table 3.

**(Table 3)**

| | |
|---|---|
| First sort | Second sort (expressed as data attribute of first sort) |
| Content | Drama, movie, documentary, novel, advertisements, dictionary, user profile |
| Services | Calculations, shopping, various reservations, financial processing |
| Domain | Service range/coverage, user community |
| Voucher | Invoice, bill, receipt, reservation confirmation |
| Program | Execution environment(for example: Windows, Macintosh, UNIX) |
| Wrapped object | None |
| Universal container | None |

In Table 3, the "calculations" means for example use of high performance computation such as FFT remotely. Further, the "domain" is for handling sets such as information servers, user nodes, etc., the "voucher" is for transferring information between sites engaged in the transfer of the information package, the "wrapped object" is for providing any existing entity charging a fee by utilization thereof, and the "universal container" is for providing any entity within the framework of the information package.

Further, the "designation of processing system" of the title part is the description for designating the system for interpreting the content.

The "structure description" is the link of the information package to the parts other than the title, i.e., the link part, content attribute part, control attribute part, and multimedia sequence description part. The reference thereof is obtained by &entity by describing the parts by <!ENTITY entity entity-description>.

The configuration of the title part containing such a content is shown in (10).

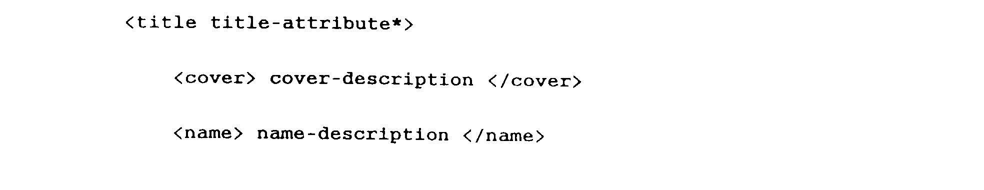

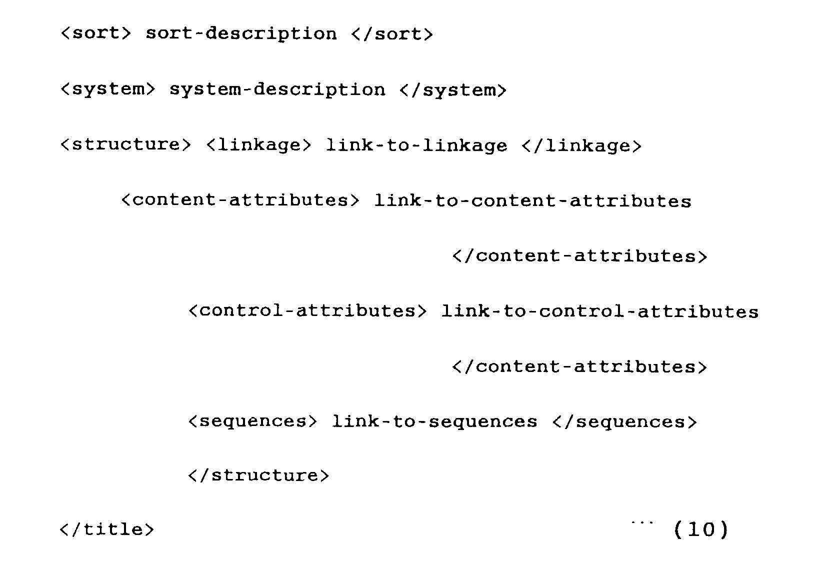

The title part, the link part expressed by link-to-linkage, link-to-content-attributes, link-to-content-attributes, and link-to-sequences, the content attribute part, the control attribute part, and the multimedia sequence description part are automatically linked into one structure by, preferably, an authoring tool at the time of generation thereof.

Further, particularly, a format provider mark etc. can be attached to the title tag as exemplified in (11).

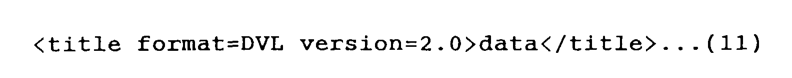

### Link Part

The link part of the information package is a set of links with the notation as shown in (12).

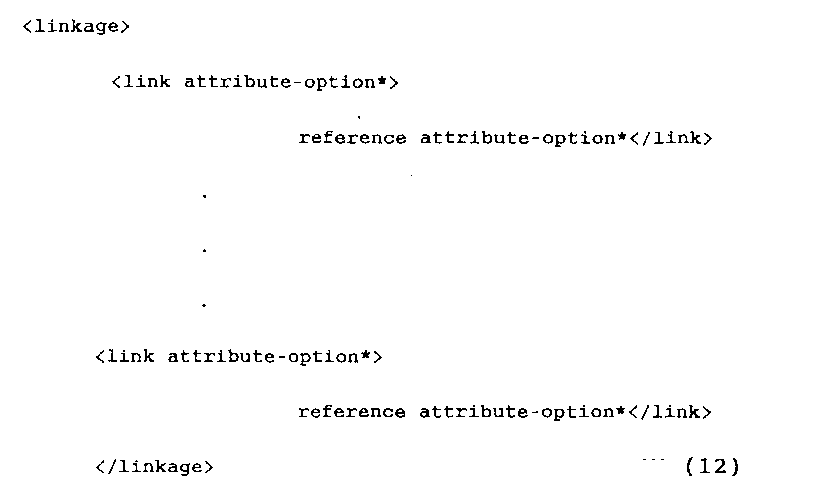

These links have formats as shown in (13). Other than the link information indicating the destination of the reference, as options, the label, control tag, content tag, and other information are described.

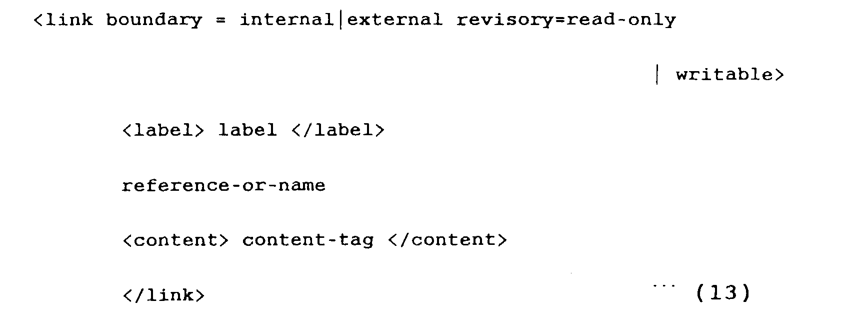

The control tag has described in it information of whether the reference is an internal reference or external reference, information as to whether revision is possible or not, or information on the agreements at the time of accessing, that is, the access control, as attributes of the link. Note that the default values for the reference and the possibility of revision are internal reference and revision impossible.

The content tag is the tag attached to the entity of the destination of the reference and is for enabling understanding of the content even without actually viewing the destination of the reference.

### Content Attribute Part

The content attribute part of the information package is a notation as shown in (14) and is a region in which any information such as the title, theme, author, publisher, supporter, preparation date, revision date, version, and language are described. As this content attribute information, the preparer can attached any one, but preferably a standardized one is used for circulation.

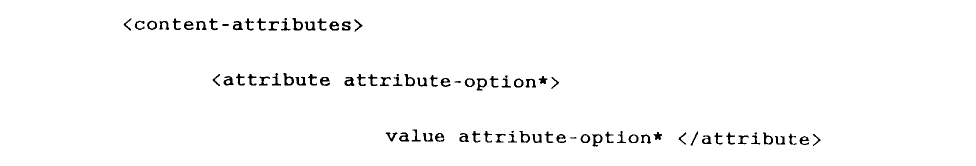

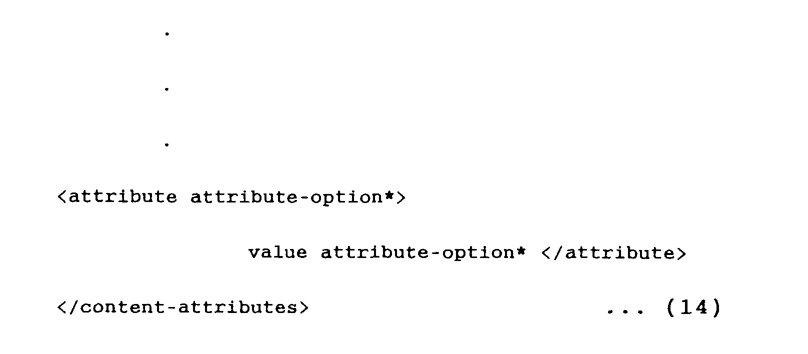

### Control Attribute Part

The control attribute part of the information package is a notation as shown in (15) and has described in it attributes such as charging, authentication, and operation. As this control attribute, the preparer may attach any one which is possible by processing provided by the network or system or processing designated by the processing system designation of the title part explained above, but preferably use is made of one which has been standardized for circulation.

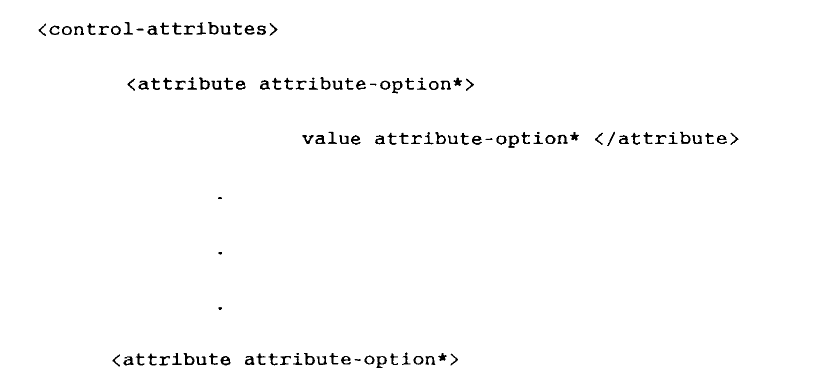

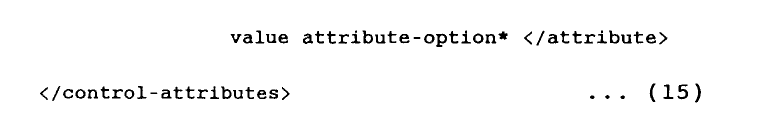

Examples of specific items of the control attributes and examples of the description thereof are shown in Table 4 and Table 5.

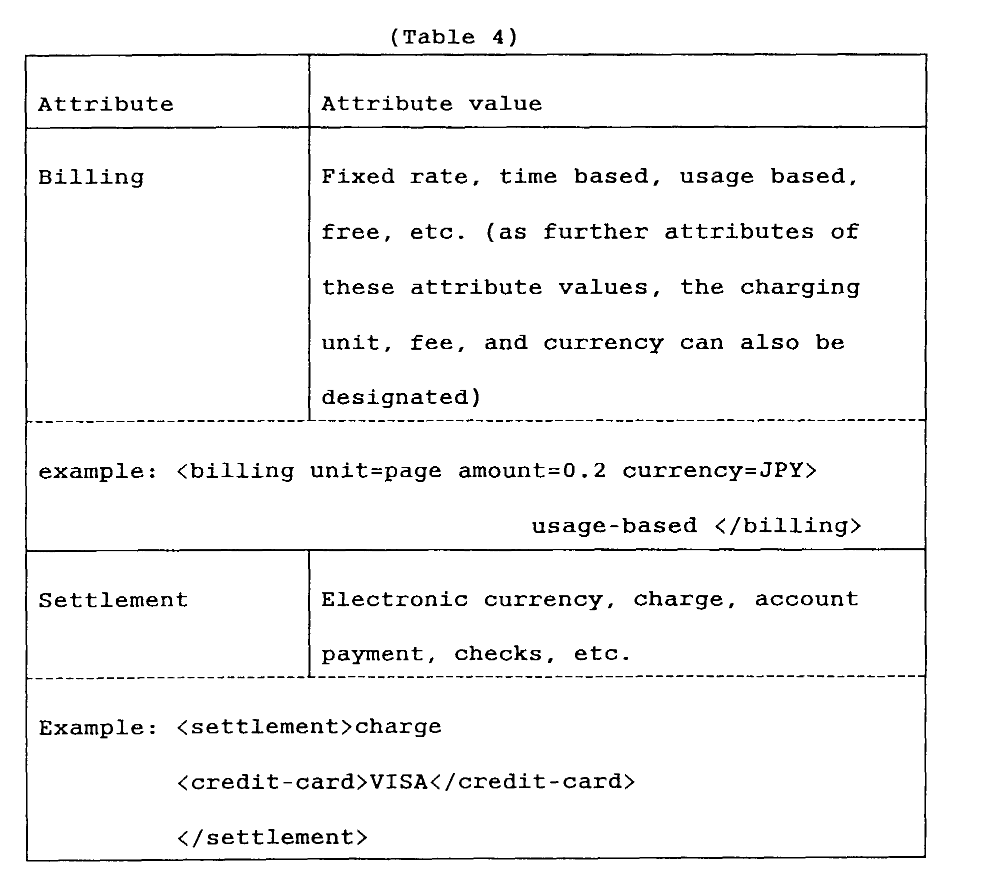

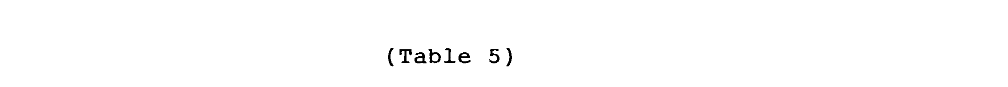

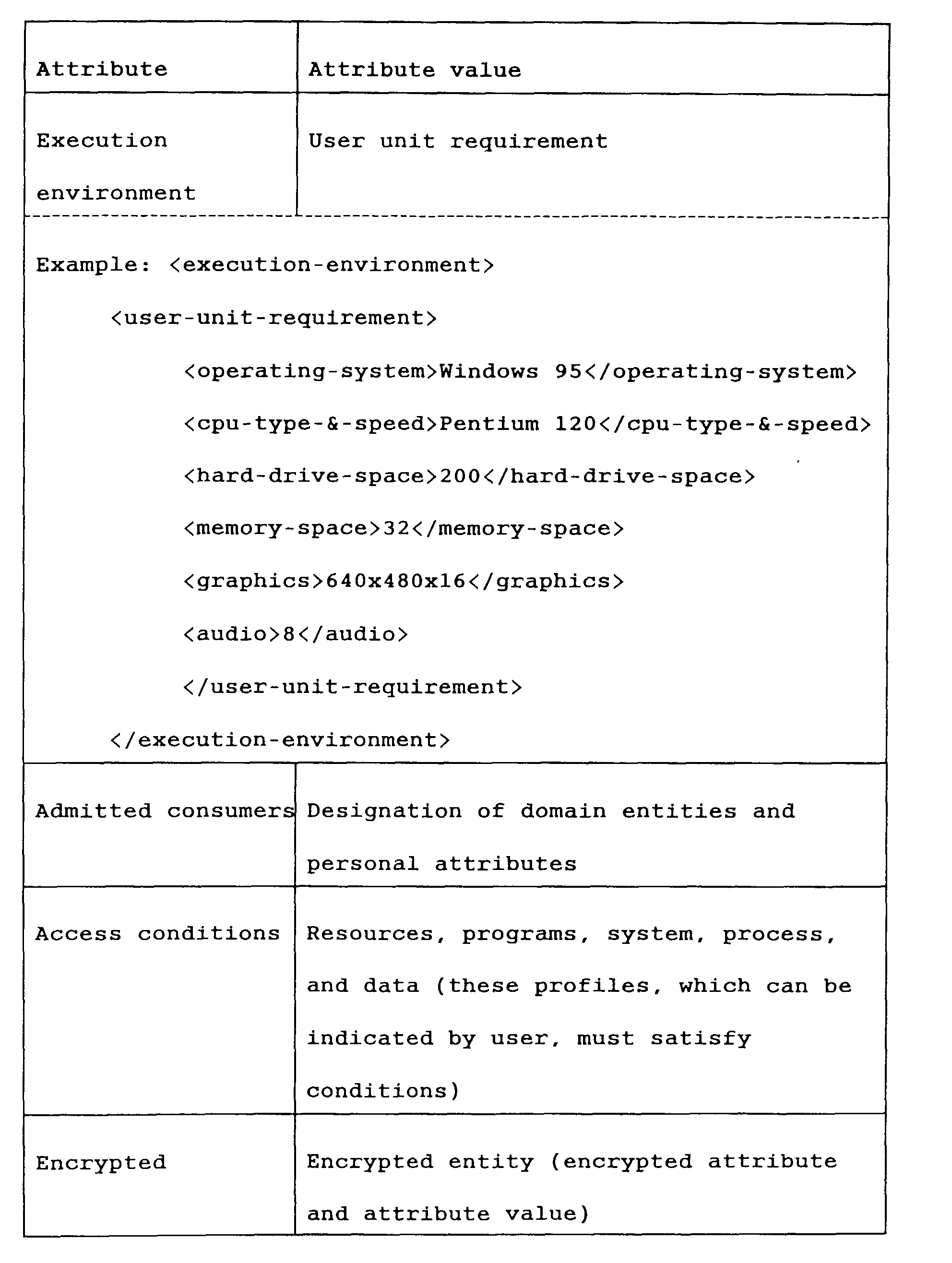

### Multimedia Sequence Description Part

The multimedia sequence description part of the information package describes the multimedia materials, produces outputs using them, and describes the control such as the synchronization.

### Basic Specifications

Examples of the multimedia materials and the basic description format are shown in (16) to (22).

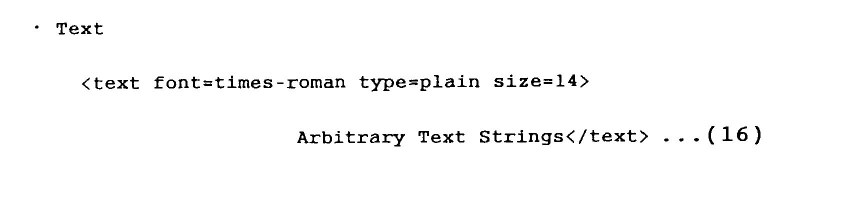

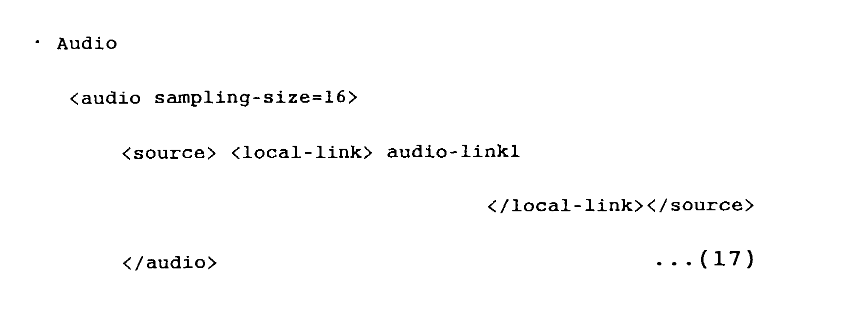

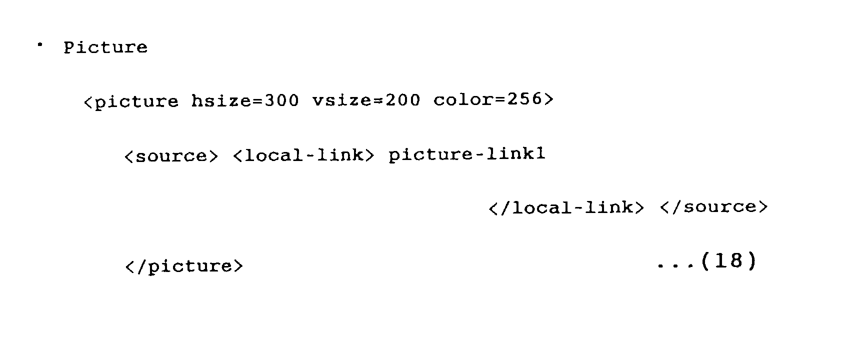

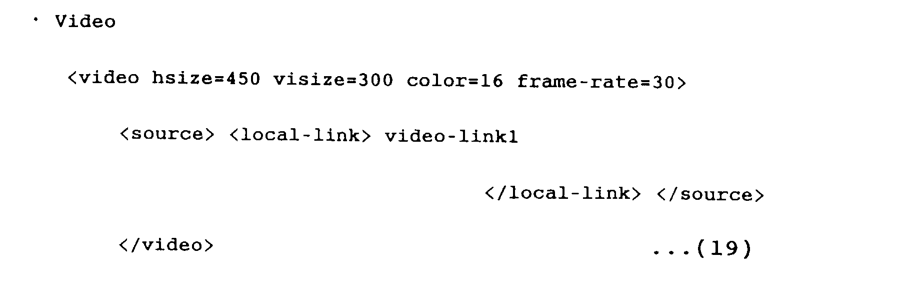

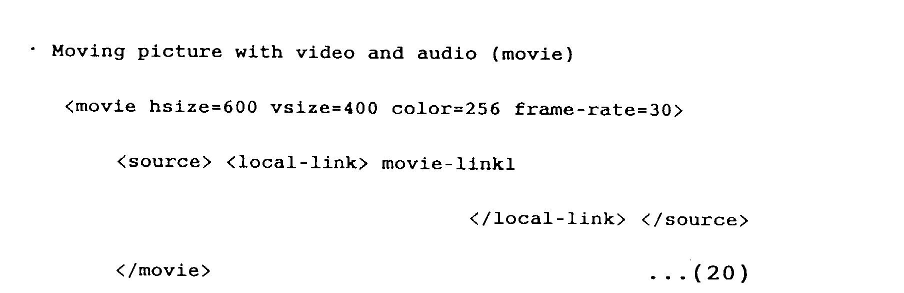

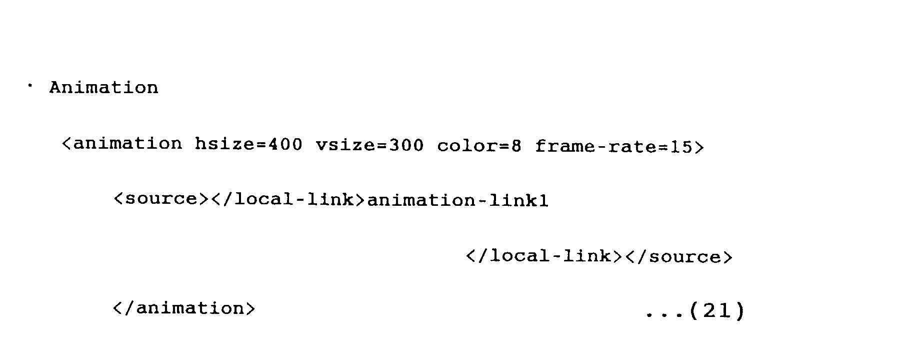

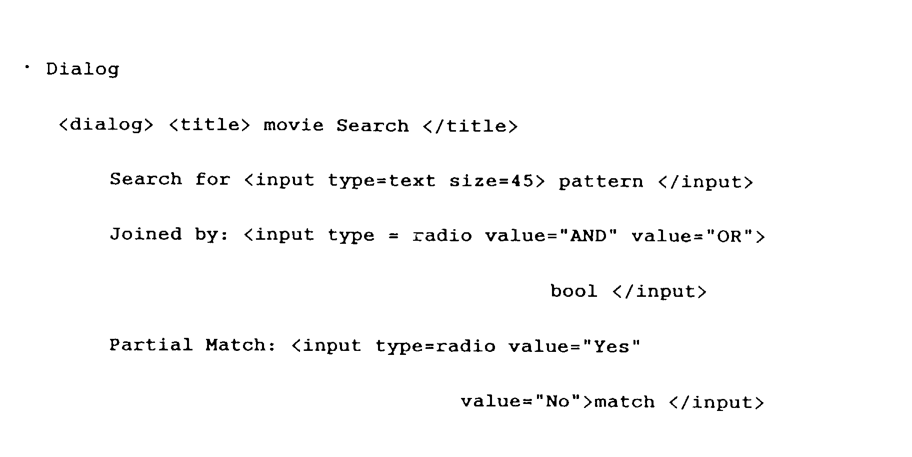

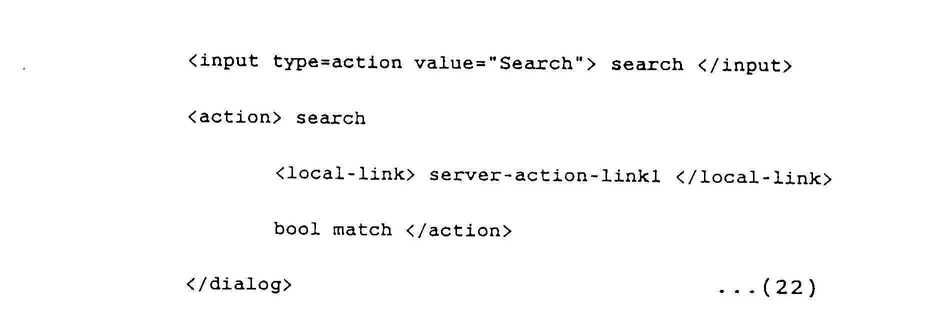

Further, the computer program is described by the type thereof and further by the format - examples of which are shown in (23) to (26).

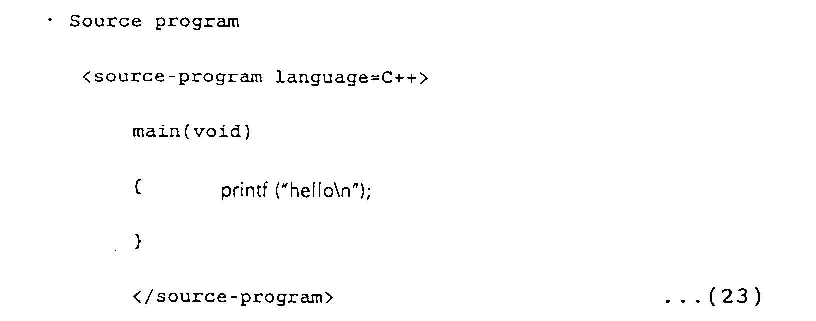

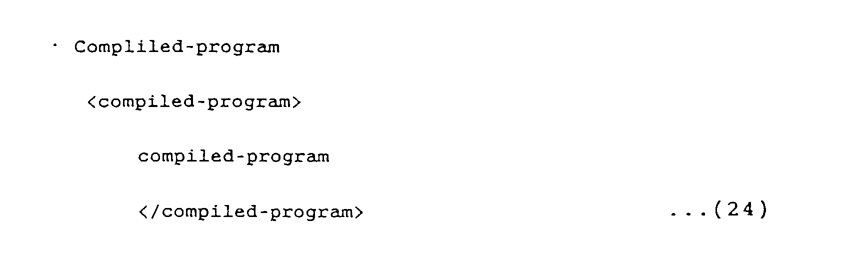

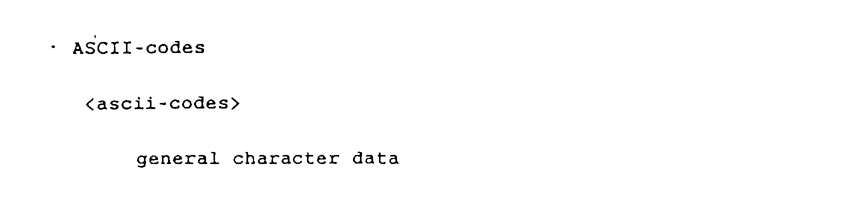

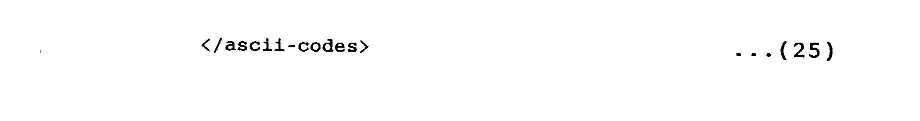

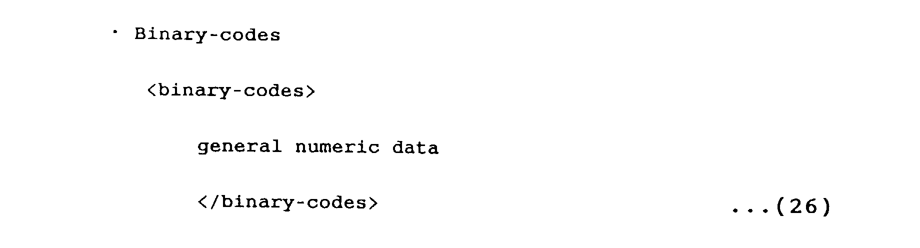

In examples of (16) to (26) mentioned above, the designation of the <source> is described by a local reference local-link to the link part in the information package so as to concentrate the reference thereof at the link part. In general, of course, it is also possible to directly write this as for example <source> net-resource://audio-server/audiol </source> (here, net-resource is the mechanism for solving the name and reference, while the part after this is the input to the mechanism. The output of the resolving result is the location thereof on the network) or it is also possible to directly describe the data (for example MPEG2 data) as <source format=MPEG2> mpeg2-data </source>.

Note that the expression of the link corresponding to the above example becomes that in (27). Note that in (27), the content tag is omitted.

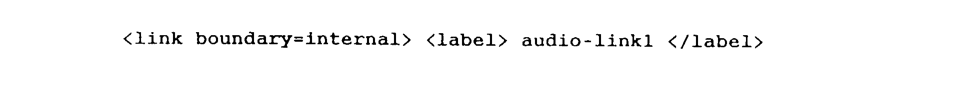

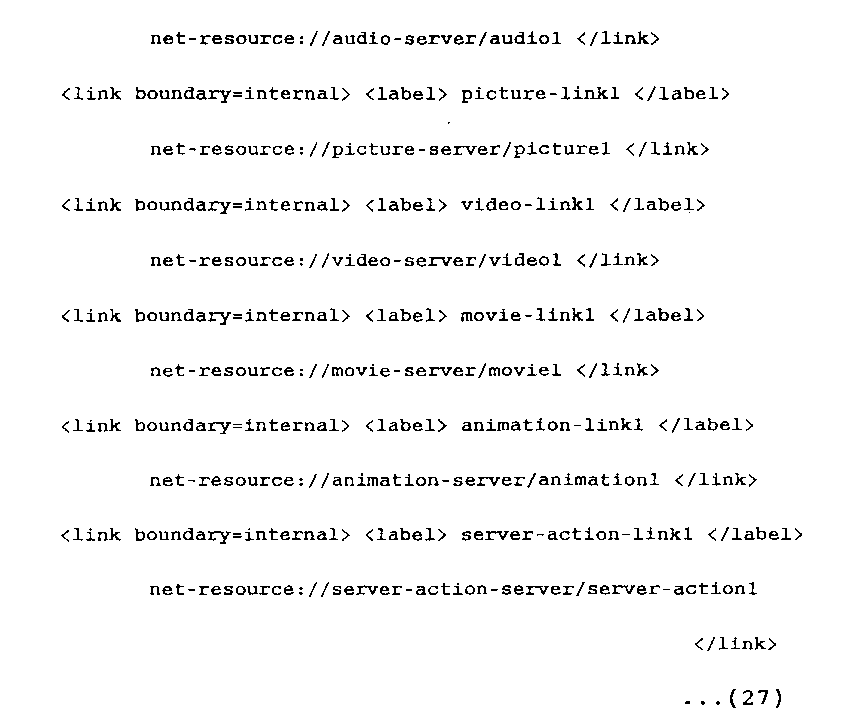

### Control of Synchronization Between Streams

The synchronization between two streams is designated and controlled by describing a relative time (time interval, deviation) between these streams. There are various methods for description of the deviation between these two streams according to situation of deviation, the position (starting point or end point) serving as the reference for each stream, etc., but here, use is simply made of "before" for designating the stream of a consecutive stage, "while" including another stream, and "cobegin" for simultaneously starting two streams.

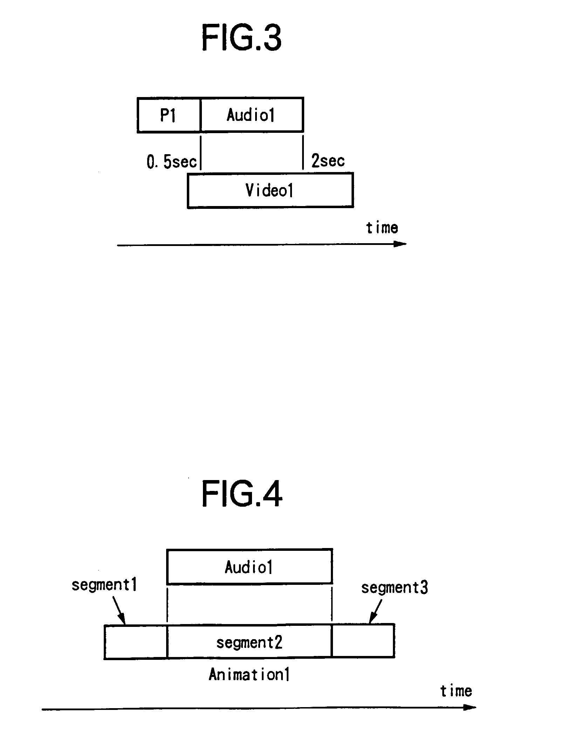

The notation regarding the synchronization between streams with respect to the picture 1 (P1), Audio 1 (Audio 1), and Video 1 (Video 1) having the relationship as exemplified in Fig. 3 is shown in (28).

Further, in Fig. 3, the designation using "cobegin" preferred for use in place of the designation using "while" when there is a relationship where Audio 1 (Audio 1) and Video 1 (Video 1) simultaneously start is shown in (29).

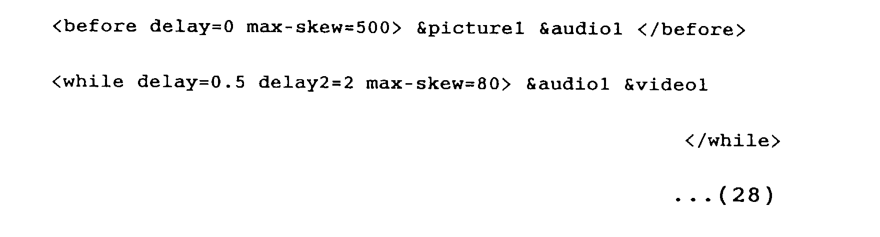

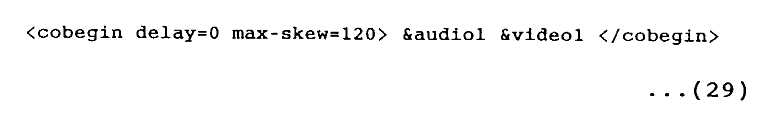

In (28) and (29), the unit of delay is a second. Further, "max-skew" is the permissible error (so-called Quality-of-Service (QoS)) in units of milliseconds (msec).

Further, in order to establish synchronization with another stream for a finer part of the stream as shown in for example Fig. 4, as shown in (30), the stream is divided into segments in advance and described, and the relationship with the other stream is designated by using "before", "while", and "cobegin" for this segment as shown in for example (31).

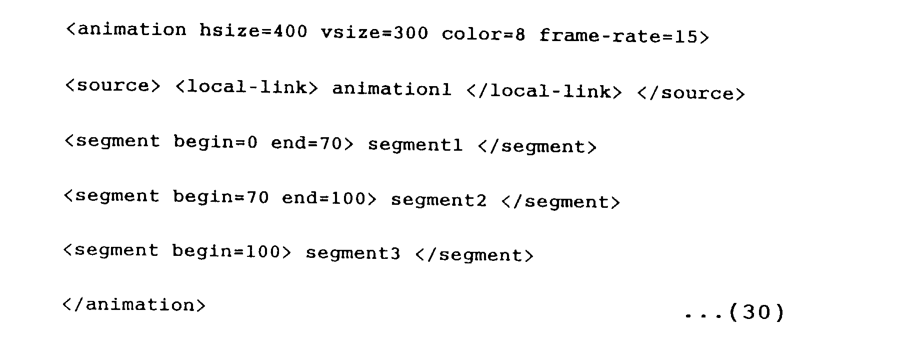

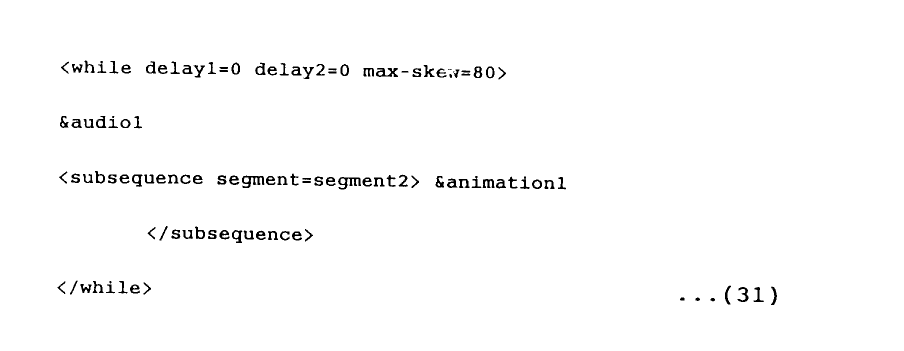

Note that, in the present embodiment, the sequence control is carried out based on the relative interval time, but it can also be time axis based and can also be control flow based etc.

### Example as Sequence Description Part

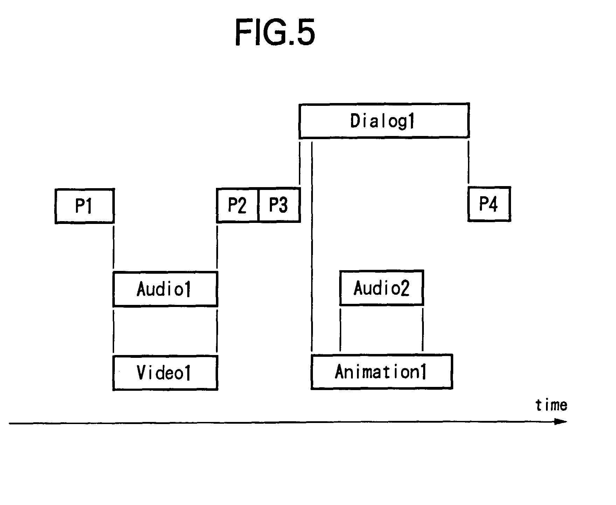

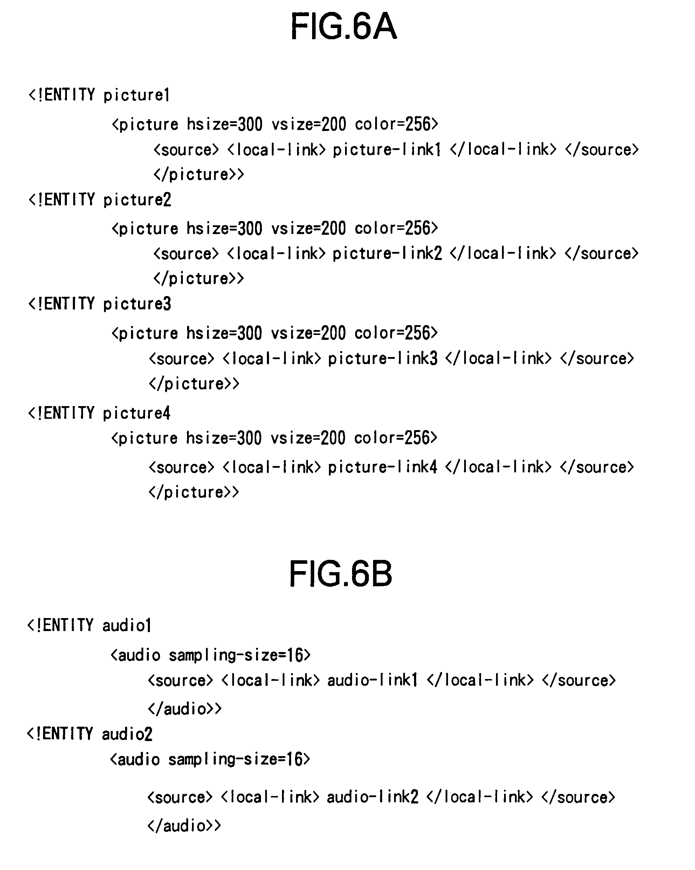

The case of describing the stream as shown in Fig. 5 in the multimedia sequence description part of the information package based on such a basic specifications is shown in Figs. 6A to 8B as a more practical example of description.

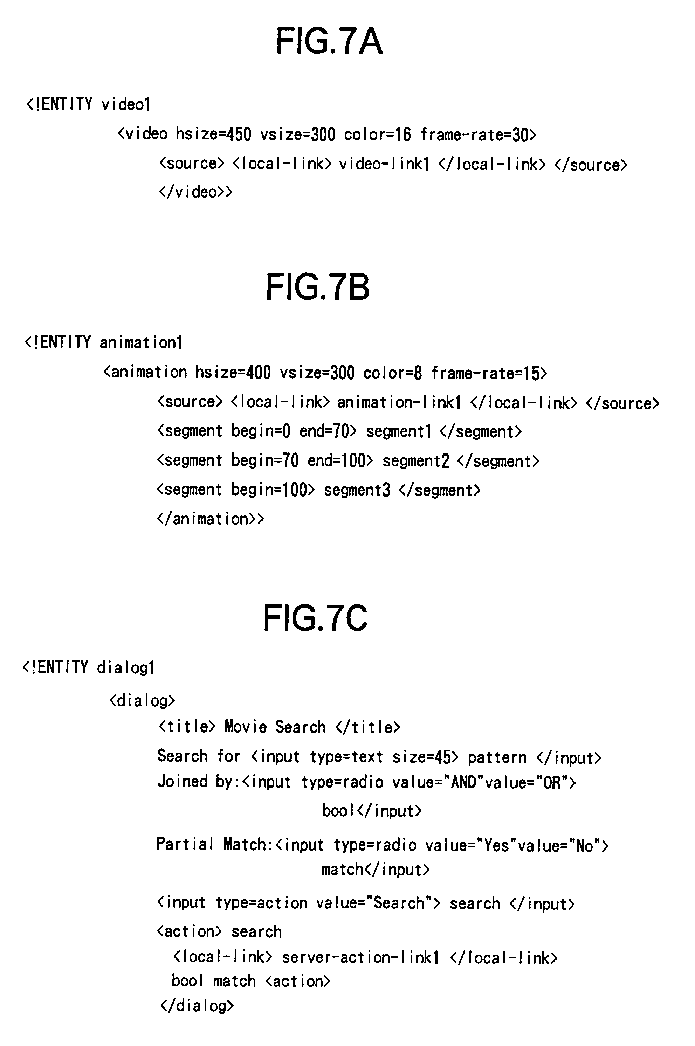

First, Figs. 6A, 6B and 7A to 7C are descriptions of materials, in which Fig. 6A is a description of the pictures P1 to P4; Fig. 6B is a description of AUDIO 1 and AUDIO 2; Fig. 7A is a description of videol; Fig. 7B is a description of animationl; and Fig. 7C is a description of dialog1.

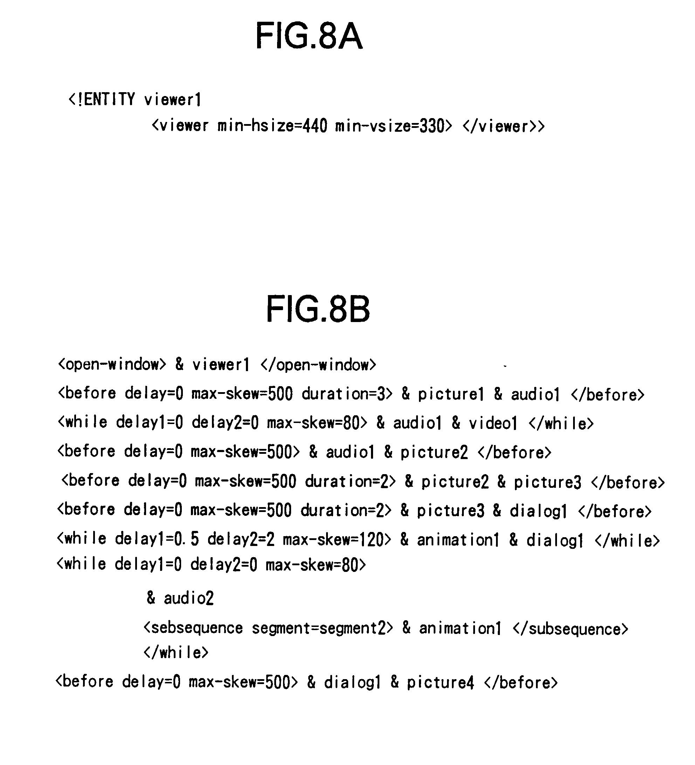

Then, Fig. 8A is a description of the destination of output and indicates that the sequence of each stream as shown in Fig. 5 is to be displayed on a viewer.

Further, Fig. 8B is a description of the sequence and prescribes that each stream is displayed by sequence as shown in Fig. 5.

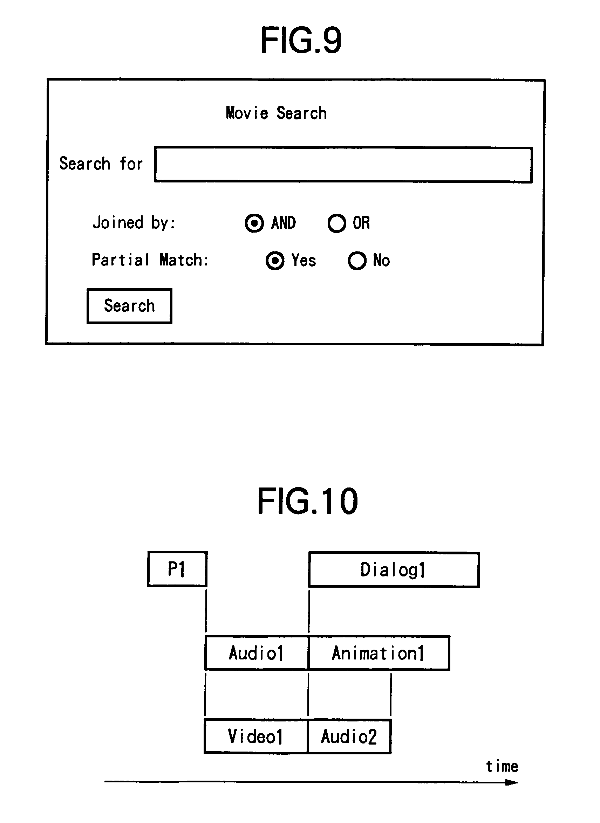

By such a description, the streams are displayed on the viewer according to the sequence as shown in Fig. 5. At this time, an indication use object displayed by the description of the "dialog" shown in Fig. 7C is shown in Fig. 9.

Note that the last picture 4 of the sequence is displayed until the state of the viewer is changed.

### Information Distribution Service

The movie distribution service briefly explained above is carried out by using the information package mentioned above. Below, however, the specific format of the information package, the configuration of each processing system, the flow of processing, etc. will be explained in detail.

### Information Package

A specific explanation will be given next of four information packages based on the configuration explained above which relate to the main processing of the movie distribution service of the present embodiment.

### First Information Package

First, the first information package is the information package for sending the movie list to the user and making him or her to select the movie desired to be distributed.

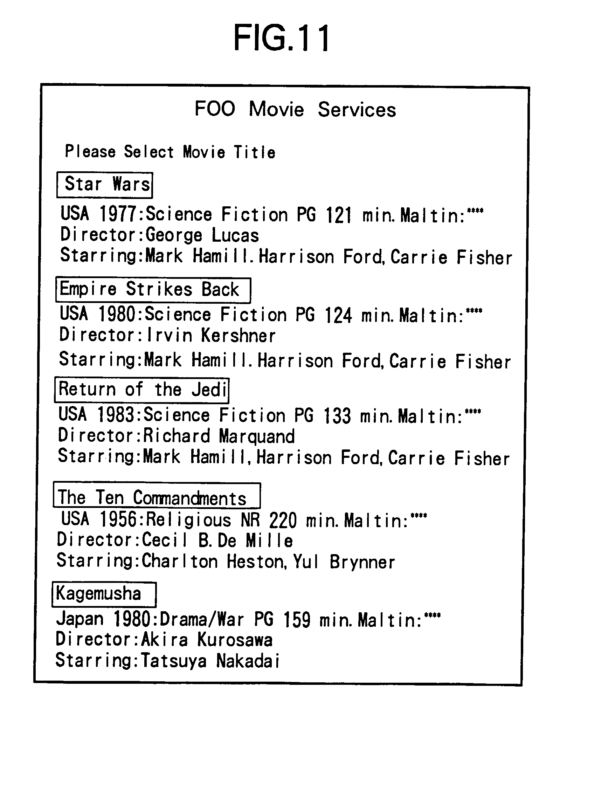

The content of the stream described by this first information package and the flow of the stream are shown in Fig. 10, and the dialog displayed by this first information package is shown in Fig. 11.

According to this first information package, as shown in Fig. 10, the Picture P1 is displayed at first. This Picture P1 is a stationary screen on which information, the title screen, the copyright, etc. are displayed. After this Picture P1, a summary of the service and promotional information are given by Audio 1 and Video 1. Then, next, simultaneously with the display of the movie selection screen as "Dialog 1" as shown in Fig. 11, information on utilization is sent by the selection screen by Audio 2 and Animation 1.

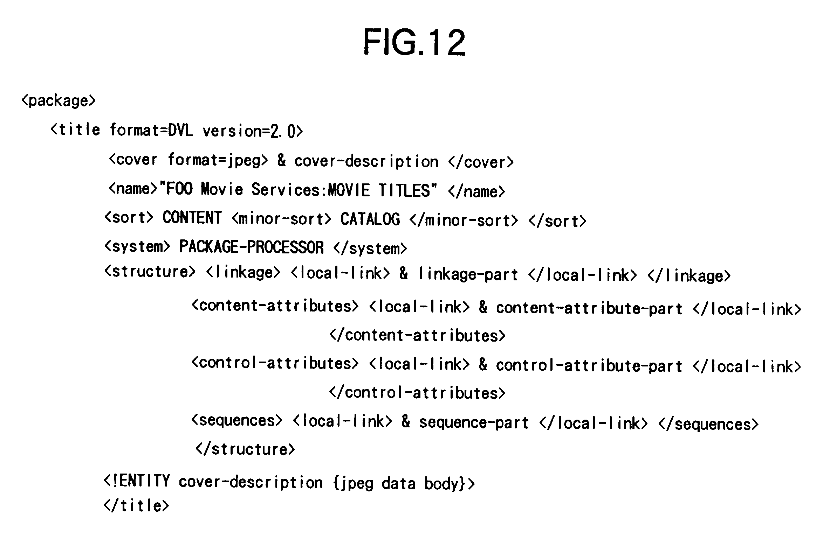

The specific configuration of the first information package for carrying out such an operation is shown in Figs. 12 to 17 by the hypertext format.

Figure 12 is a view of the title part of this first information package.

In this title part shown in Fig. 12, for example the cover data of the JPEG format is designated or the fact that the name of this package is "FOO Movie Services: MOVIE TITLES", the processing system for interpreting the content is "PACKAGE-PROCESSOR", and so on are designated.

Further, as the structure description (<structure>), the link to the link part in the package (<linkage>), content attribute part (<content-attributes>), control attribute part (<control-attributes>), and multimedia sequence part (<sequences>) are described.

Further, in the attribute of for example the title tag, the provider (for example, DVL) of this format etc. are described.

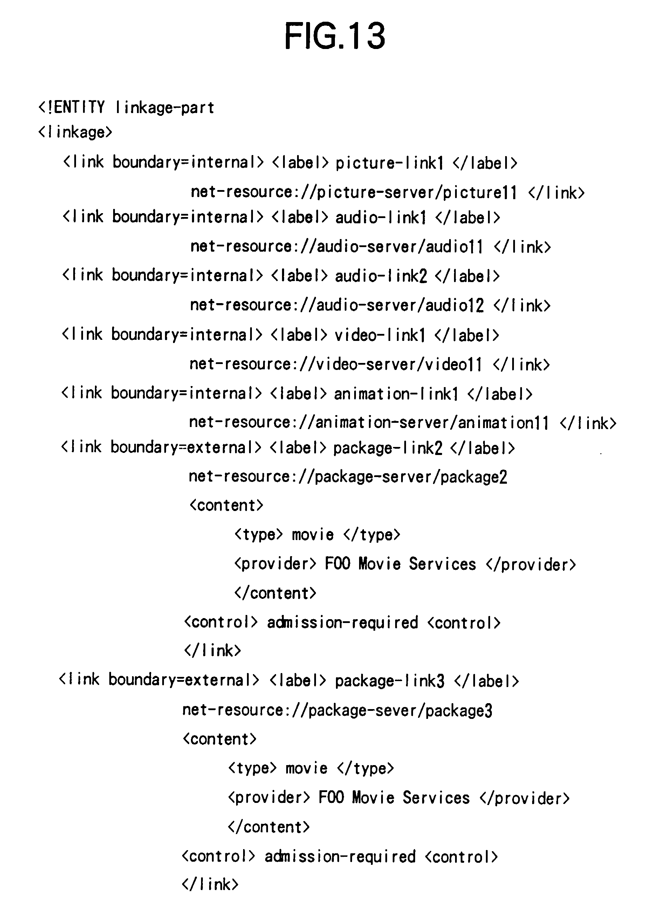

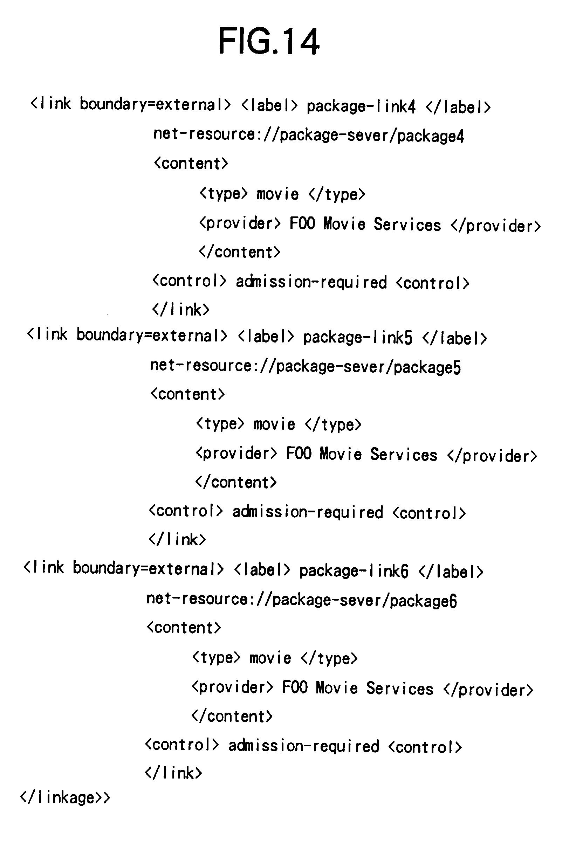

Figure 13 and Fig. 14 are views of the link part of this first information package.

In the link part, streams other than Dialogl shown in Fig. 10, that is, the streams of Picture P1, Audio 1, Audio 2, Video 1, and Animation 1, and linkages with respect to the packages (package 2 to package 6) of five movies' ("Star Wars", "Empire Strikes Back", "Return of the Jedi", "The Ten Commandments", and "Kagemusha") offered in the selection of Dialog 1 shown in Fig. 11 are described.

For example from the description of Fig. 13 and Fig. 14, it is seen that the link with respect to the streams of the Picture P1, Audio 1, Audio 2, Video 1, and Animation 1 is the internal link, and the link with respect to the package of the movie to be selected is the external link, and so on.

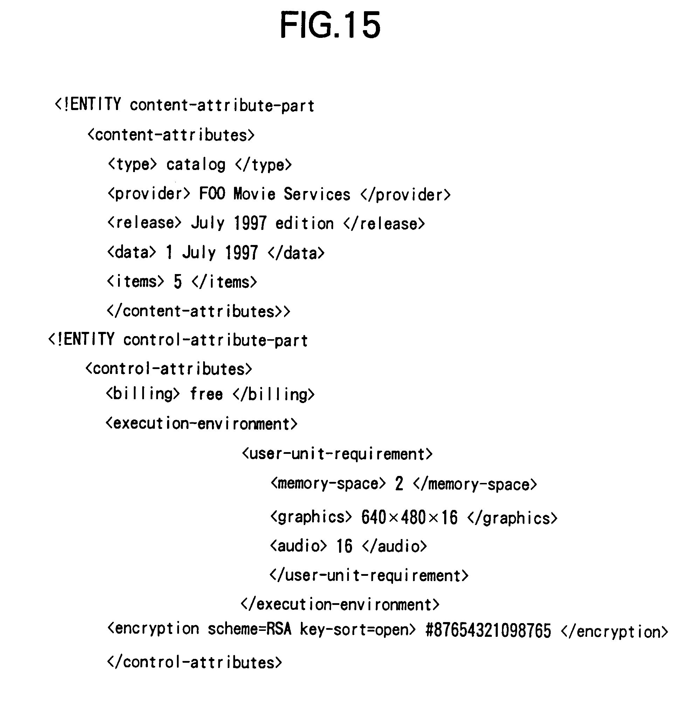

Figure 15 is a view of the content attribute part and control attribute part of this first information package.

In the content attribute part, it is described that the publisher of this package is "FOO Movie Services" and that the package was published in July 1997.

Further, in the control attribute part, it is described that this information is information regarding the operation of this information package and, for example, the fact that, regarding the charging, this information package is free, the operating environment required for the user, and the key for authentication, etc.

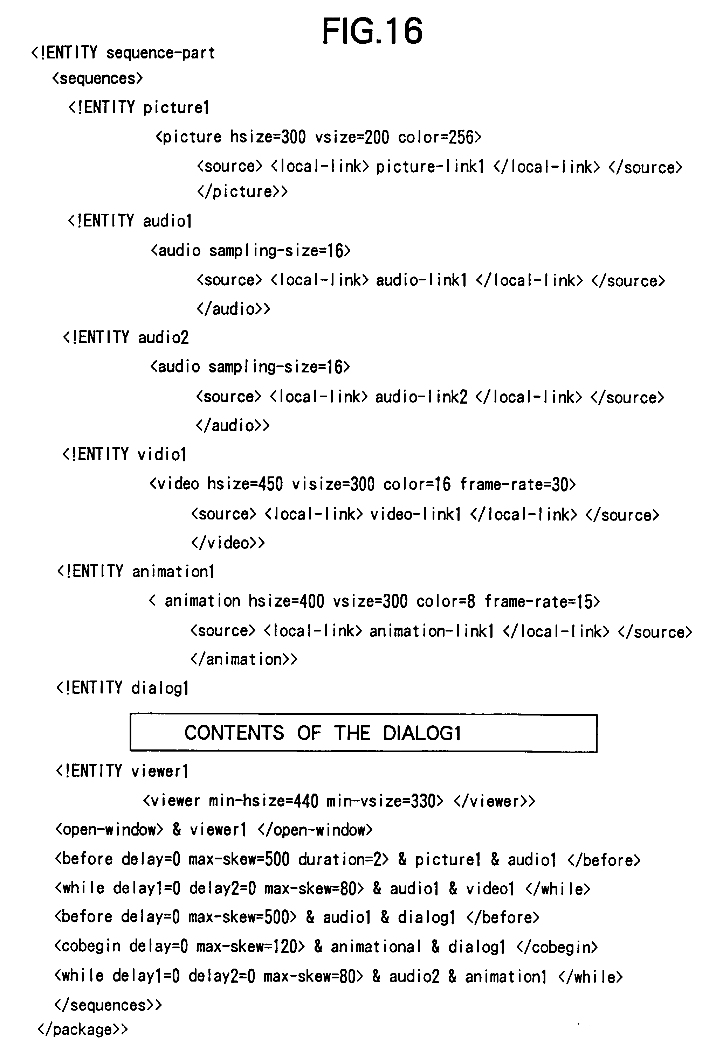

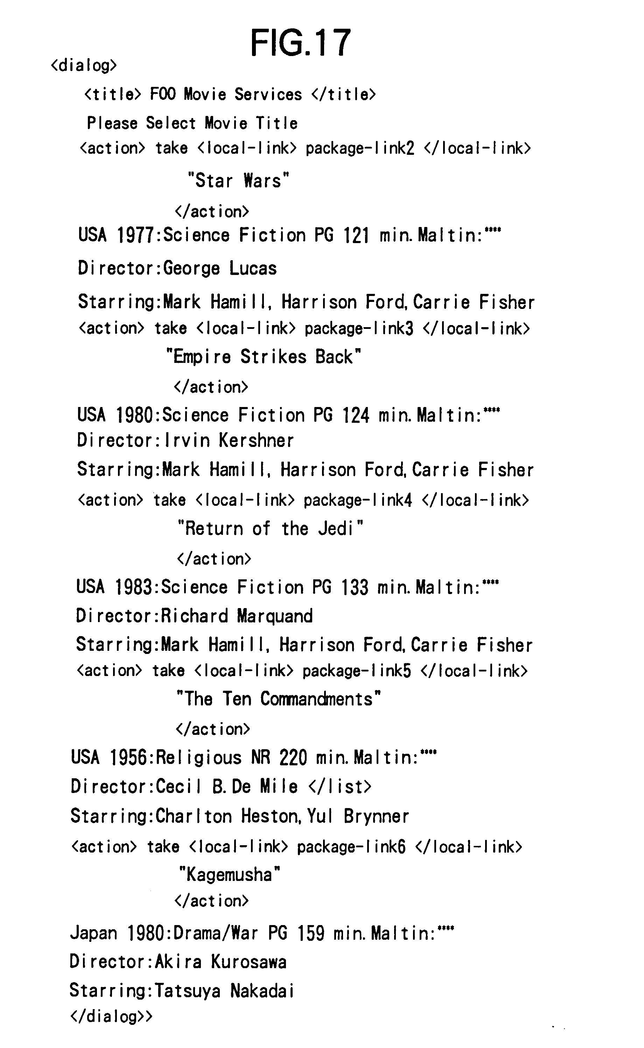

Further, Fig. 16 and Fig. 17 show the multimedia sequence part of this first information package. Note that, Fig. 17 is a view of the content of the dialog of the multimedia sequence part shown in Fig. 16.

In this sequence part, the materials of the streams of the Picture P1, Audio 1, Audio 2, Video 1, Animation 1, and Dialog 1 shown in Fig. 10 are described. In practice, materials of streams other than Dialog 1 are designated by links. Further, these links are concentrated at the linkpart mentioned above, therefore this is described here as the local reference to the link part.

Note that, for Dialog 1, a description concerning the dialog as shown in Fig. 11 is completely directly described in this sequence part as shown in Fig. 17.

Further, in this sequence part, a description of the destination of output (viewer) of these streams and a description of these sequences are given.

Explaining the description content in detail, the description of the sequence is to send Audio 1 immediately after the Picture P1 without delay (<before delay=0 max-skew=500 duration=2> &picture1 &audio1 </before>), send the Video 1 so that both of start and end coincide with respect to Audio 1, that is, simultaneously with Audio 1 (<while delay1=0 delay2=0 max-skew=80> &audio1 &video1 </while>), display Dialog 1 immediately after Audio 1 without delay (<before delay=0 max-skew=500> &audio1 &dialog1 </before>), start Animation 1 simultaneously with Dialog 1 (<cobegin delay=0 max-skew=120> &animation1 &dialog1 </cobegin>), and further start Audio 2 simultaneously with Animation 1 (<while delay1=0 delay2=0 max-skew=80> &audio2 &animationl </while>).

When the processing is carried out according to this description, streams are displayed by the sequence as shown in Fig. 10.

### Second Information Package

A second information package is the information package for actually distributing the movie requested by the user.

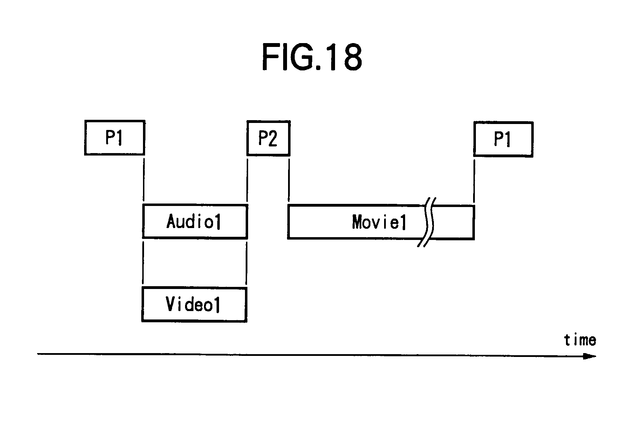

The content of the stream described by this second information package and the flow of the stream are shown in Fig. 18.

According to this second information package, as shown in Fig. 18, the Picture P1 is first displayed. On this Picture P1, the information, title screen, copyright, etc. are displayed. After this Picture P1, the advertisement is displayed by Audio 1 and Video 1. When the advertisement is terminated, the title screen of the service provider is displayed by the Picture P2. Then, after the Picture P2, the Movie 1 itself is finally displayed. When the Movie 1 is terminated, the first Picture P1 on which the information, title screen, copyright, etc. are displayed is terminated again and the display of the stream is terminated.

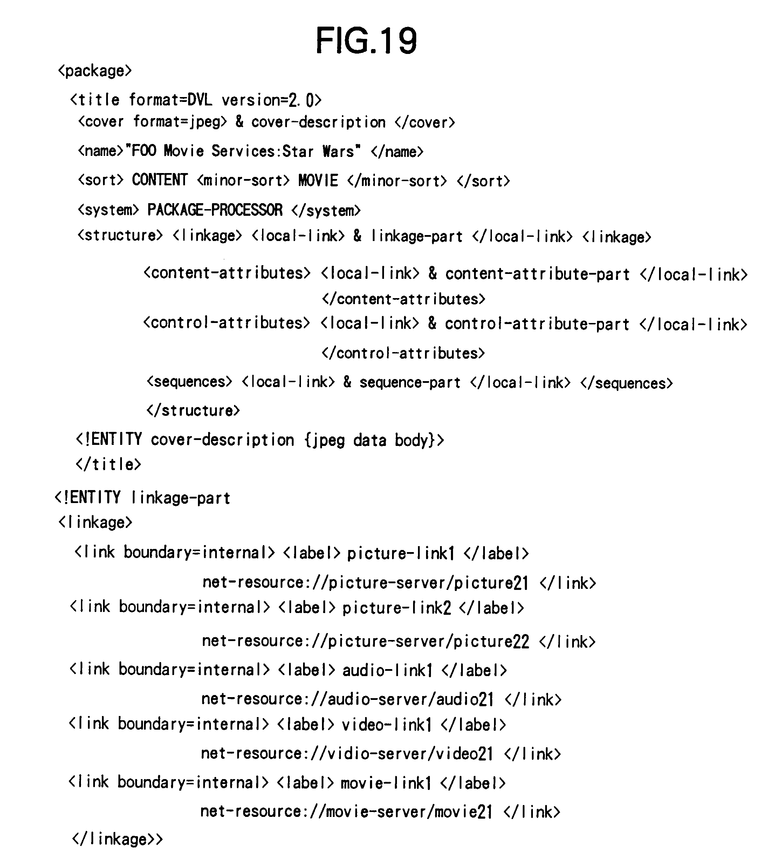

The specific configuration of the second information package for carrying out such an operation is shown in Fig. 19 to 22.

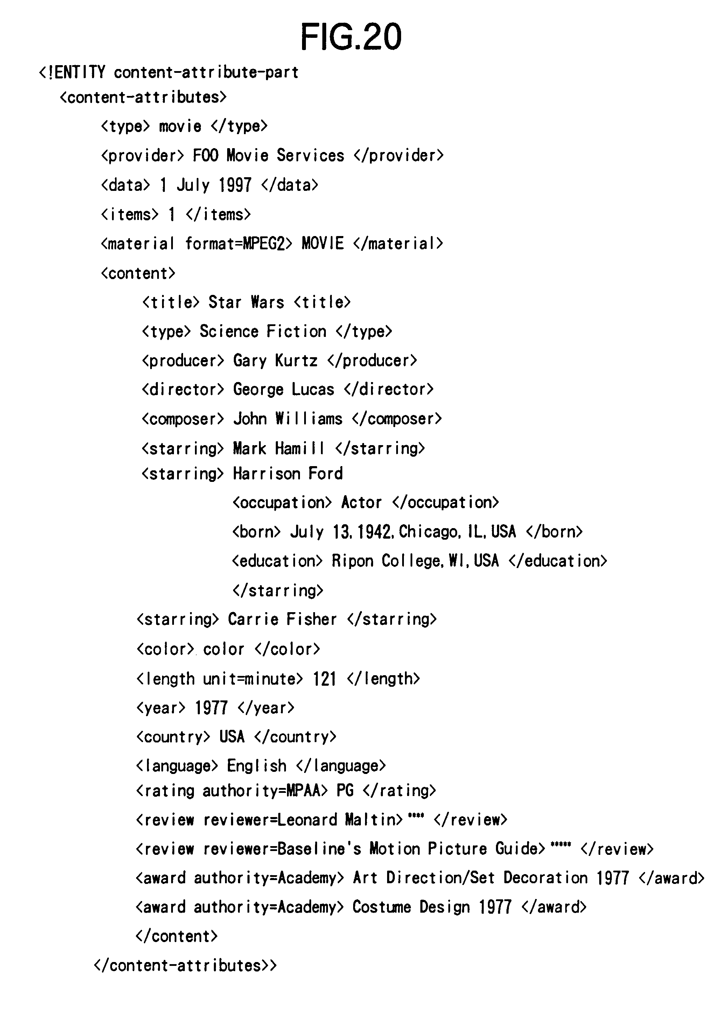

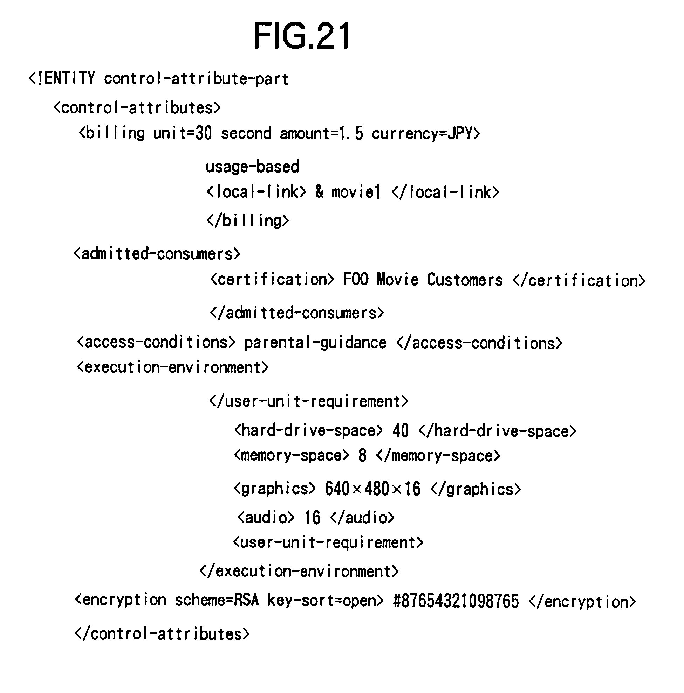

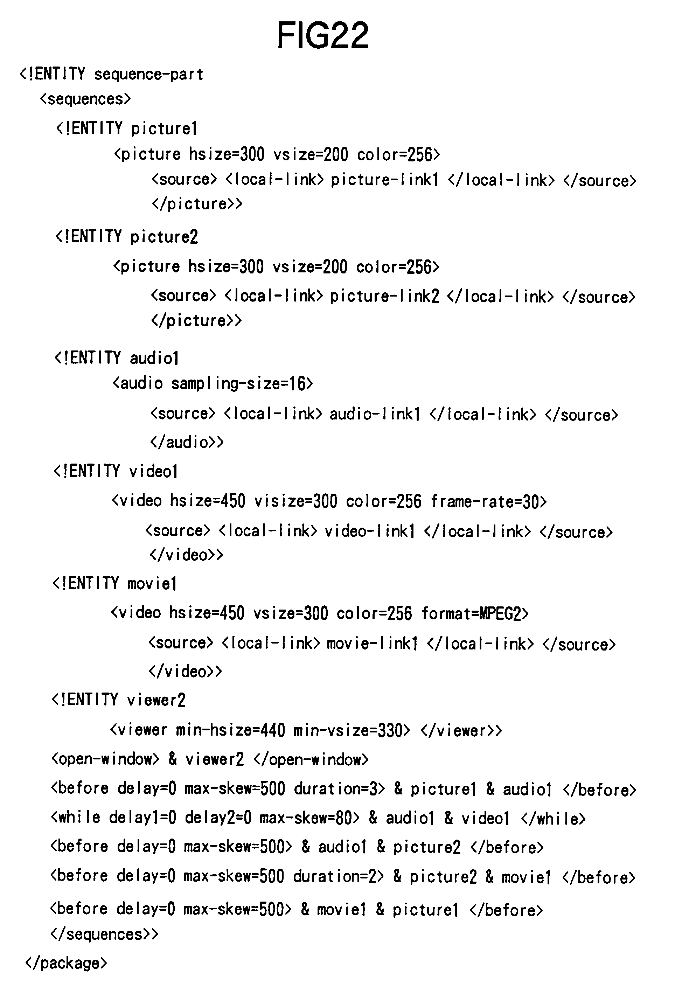

Figure 19 is a view of the title part and the link part of this second information package; Fig. 20 is a view of content attribute part of this second information package; Fig. 21 is a view of the control attribute part of this second information package; and Fig. 22 is a view of the sequence part of this second information package.

The contents of the parts are substantially the same as those of the case of the first information package explained above, but this second information package is a package having a movie as its content and whose main object is the distribution thereof, therefore various information concerning the movie is described in the content attribute part shown in Fig. 20. The characteristic feature is that the amount of information of this content attribute part has become large.

### Third Information Package

The third information package is an information package for authentication sent to the information provider when a user is trying to obtain an information package requiring authentication.

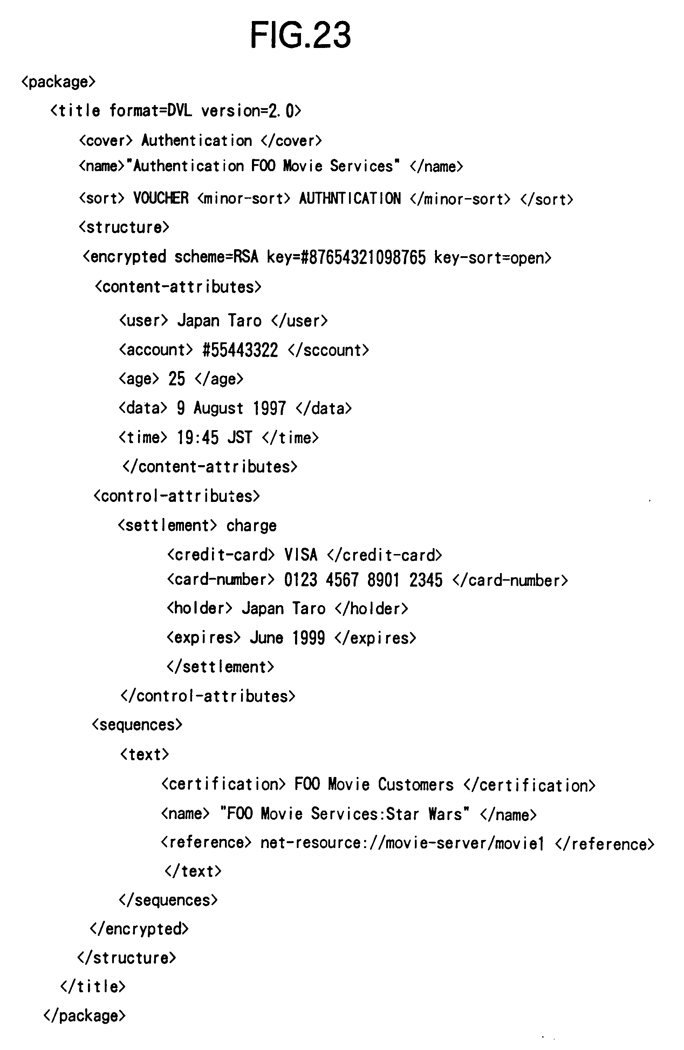

The specific configuration of this third information package is shown in Fig. 23.

As shown in Fig. 23, in this information package, the name of the user, user number, age, authentication date and time, etc. are described in the content attribute part. Further, in the control attribute part, as the charging method, information such as the credit card name, credit card number, holder, etc. are described.

Note that, part of the important information of this third information package is encrypted by an "public key" disclosed by the information provider. The information provider decrypts the encryption by a "private key", interprets the content, and carries out the processing for authentication.

By distributing such an information package to the information provider when obtaining information requiring authentication, if the content is suitable, the user can suitably obtain the information requiring authentication.

### Fourth Information Package

The fourth information package is an information package corresponding to a bill sent to a party to the transaction when the information provider charges an advertisement fee etc. to an advertiser or other party to the transaction. In the present embodiment, it is assumed that this fourth information package is sent together one time a month in the same way as a usual bill.

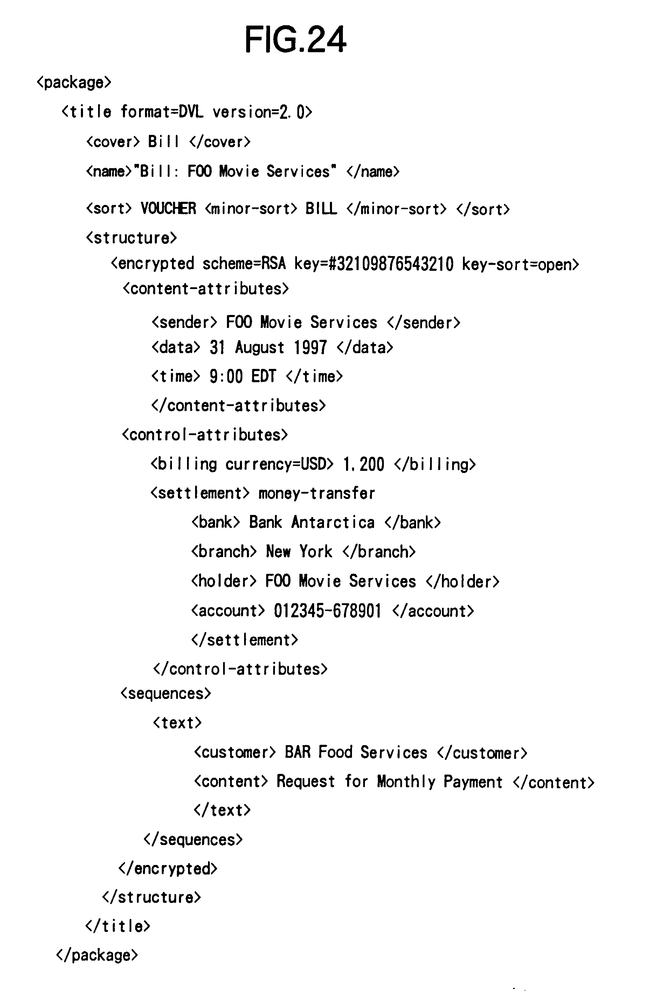

A specific configuration of this fourth information package is shown in Fig. 24.

As shown in Fig. 24, in this information package, the name of the information provider as the charging side, the date and time of issuance of the bill, etc. are described in the content attribute part. Further, in the control attribute part, a payment method is described. In the example shown in Fig. 24, information such as the name of the bank as the destination of transfer, the name of the branch, the account number, the holder, etc. are described.

Part of the important information of this fourth information package is encrypted in the same way as the third information package. In this case, the information provider encrypts the information by an "public key" disclosed by the advertiser or other party to the transaction. The party to the transaction decrypts the encryption by a "private key" and interprets the content.

### System Configuration

The configuration of the system for this movie distribution service was briefly explained by referring to Fig. 2, but this will be explained again in detail and specifically.

As mentioned above, this movie distribution service is realized by loading the processing system as shown in Fig. 2 on any node on the network system having the structure as shown in Fig. 1 and by using the information package mentioned above.

The service provider 210 is the subject node of the information distribution service. This node carries out only the management of the information user such as subscription by the information consumer 260 and the overall management relating to the service such as the billing of advertisement fees to the advertisement provider 240. The processing relating the actual distribution of information is carried out by the information server 220 based on instructions from the service provider 210.

The information server 220 is managed from the service provider 210 as mentioned above and actually sends the information to the information consumer 260 while appropriately using the advertisement transmitted from the advertisement server 250.

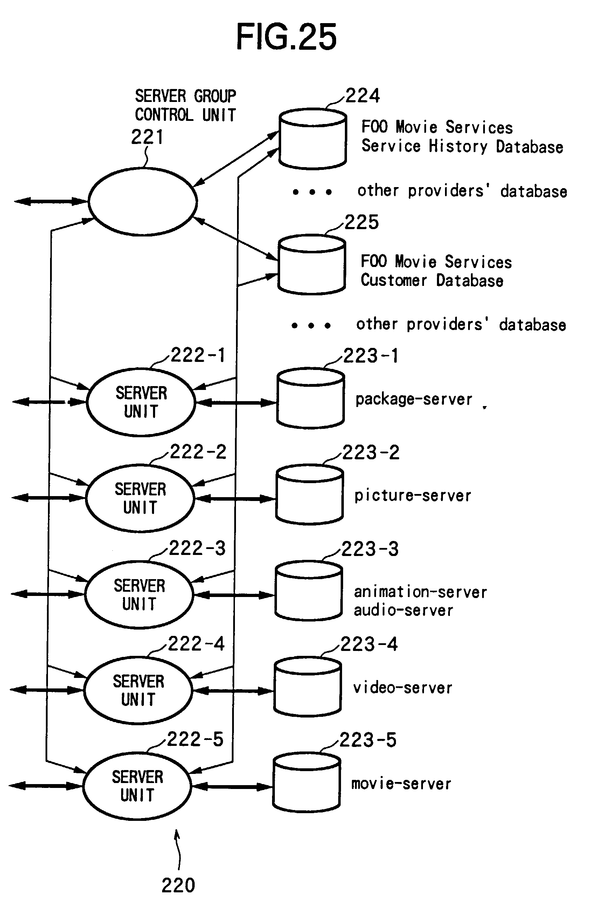

The configuration of the information server 220 will be explained by referring to Fig. 25.

As shown in Fig. 25, the information server 220 has a server group control unit 221, data bases 223₋₁ to 223₋₅ for each type of source and data as shown in for example Fig. 25, server units (source) 222₋₁ to 222₋₅ respectively corresponding to the data bases 223₋₁ to 223₋₅, a service history data base 224, and a customer data base 225.

The server group control unit 221 controls the server units 222₋₁ to 222₋₅ and, at the same time, refers to and updates the service history data base 224 and the customer data base 225 along with each request and distribution of the information.

The server unit 222₋ᵢ (i = 1 to 5) actually carries out various processing for providing the information corresponding to each data base 223₋ᵢ to the information consumer 260.

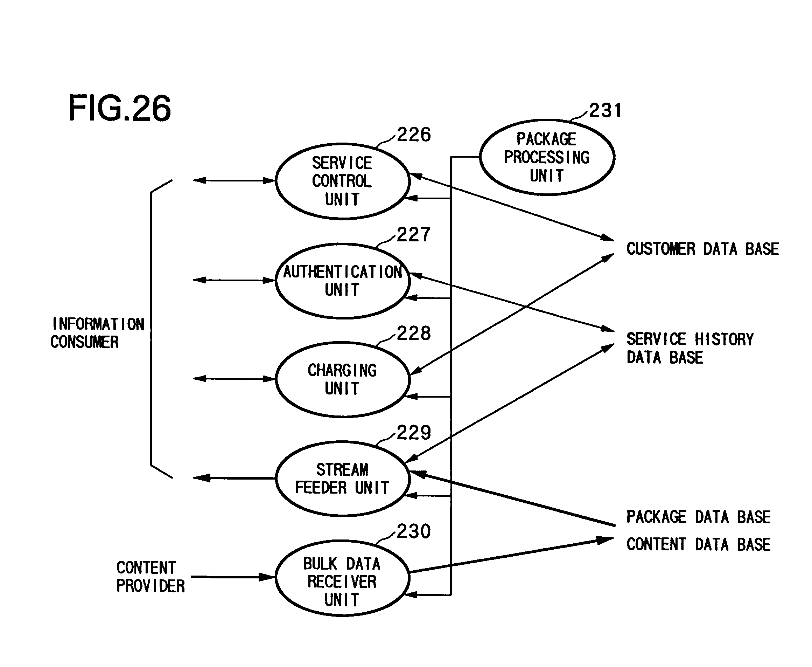

A more detailed configuration of the server unit 222 is shown in Fig. 26.

As shown in Fig. 26, the server unit 222₋ᵢ has a service control unit 226, a authentication unit 227, a charging unit 228, a stream feeder unit 229, a bulk data receiver unit 230, and a package processing unit 231.

The service control unit 226 controls the units constituting the server unit 222₋ᵢ and controls the overall service to the information consumer 260.

The authentication unit 227 carries out the authentication processing based on the information package transmitted from the information consumer 260 provided for authentication, for example, the third information package mentioned above, and, where the authentication is adequately carried out, carries out the processing giving permission for transmission of the stream to the stream feeder unit 229 and so on.

The charging unit 228 carries out the charging processing accompanying the distribution of information based on the information on the charging substantially permitted by the information consumer 260. Then, the charging information obtained as a result of distribution of a series of information is written into the customer data base 225 at the end of the distribution etc.

The stream feeder unit 229 reads and fetches the desired content of the corresponding data base 223₋ᵢ and transmits the same to the information consumer 260.

The bulk data receiver unit 230 writes the information input for every predetermined unit into the data base 223₋ᵢ for storing the data in the corresponding data base 223₋ᵢ. In the example shown in Fig. 2, the advertisement data sent by the information server 220 is transmitted to the information server 220 in advance. The advertisement data is transferred from the advertisement server 250 to the information server 220 via the bulk data receiver unit 230.

The package processing unit 231 decrypts the information package transmitted from the service provider 210, the advertisement server 250, or the information consumer 260, appropriately applies the service control unit 226 to the bulk data receiver unit 230 for the data based on the content thereof, and successively executes the processing according to the content. Note that, the processing in this package processing unit 231 will be explained in further detail later.

The component units of the information server 220 are usually configured across the network and constitute a dispersed server.

Further, this information server 220 is not provided corresponding to a specific provider, but stores and sends desired information based on instructions from a plurality of providers.

Accordingly, the service history data base 224 and the customer data base 225 are provided for every provider. Note that the service history data base 224 and the customer data base 225 shown in Fig. 25 are data bases of the service provider 210 of Fig. 2, that is, the "FOO Movie Services".

Further, similarly, the data bases 223₋₁ to 223₋₅, the service history data bases 224, and the customer data base 225 are not provided corresponding to this information server 220, but can be utilized by a plurality of information servers on the network. Particularly, as the picture, animation, audio, video, movie, and other content data bases 223₋₂ to 223₋₅, those widely stored on the network are frequently utilized.

In this case, the desired content data base is specified on the network by the name resolving mechanism referred to as "net-resource" of the resource location described in the link part of the above information package.

The advertisement provider 240 transmits an advertisement which it is requesting distribution of to someone distributing information to the information users such as a service provider 210. Also, this advertisement provider 240 carries out only the processing concerning the overall management with the destination of distribution of advertisement and the processing concerning the payment of the advertisement fee in the same way as the service provider 210. The processing regarding actual distribution of the advertisement is carried out by the advertisement server 250.

The advertisement server 250 actually sends the advertisement data to the information server 220 based on a request from the advertisement provider 240. This advertisement server 250 is different from the above information server 220 in only the information to be sent. The configuration etc. of this are the same.

The information consumer 260 receives and utilizes the information which is provided by the service provider 210 and actually transmitted from the information server 220. This information consumer 260 is also not limited to various types of terminal equipment such as personal computers and apparatuses comprised mainly of television receiver and can be a system constructed on the network.

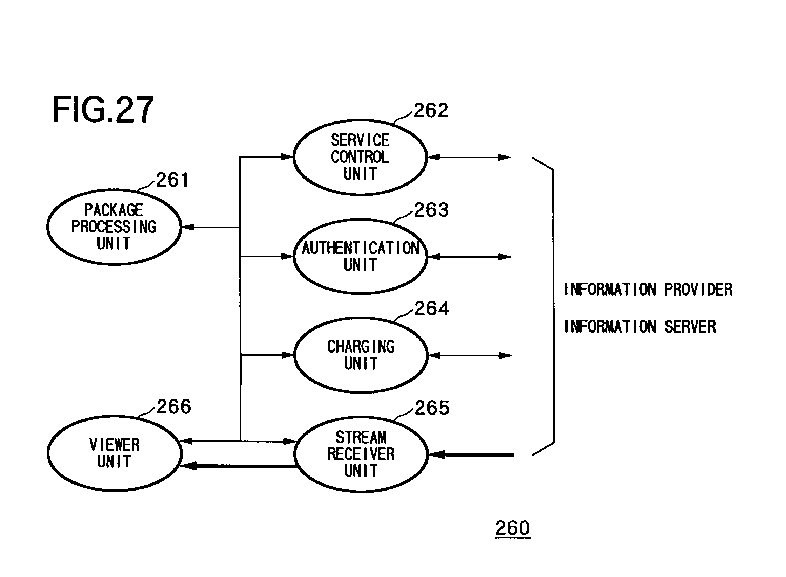

An explanation will be given next of the configuration of this information consumer 260 by referring to Fig. 27.

The information consumer 260 has a package processing unit (consumer, client) 261, a service control unit 262, a authentication unit 263, a charging unit 264, a stream receiver unit 265, and a viewer unit (sink) 266.

The package processing unit 261 appropriately applies the service control unit 262 to the viewer unit 266 based on the content of the information package transmitted from the service provider 210 and the information server 220 and successively executes the processing according to the content. The processing of this package processing unit 261 will be explained in further detail below.

The service control unit 262 to the stream receiver unit 265 perform processing selected and applied by the package processing unit 261.

The service control unit 262 coordinates with the service provider 210 and the information server 220 so that a suitable information package is suitably transmitted among the information consumer 260, the service provider 210, and the information server 220.

The authentication unit 263 transmits the information package provided for authentication like for example the above third information package to the information server 220 and requests the authentication processing.

The charging unit 264 transmits the information for permission for charging along with a request for information to the information server 220.

The stream receiver unit 265 receives the stream transmitted from the information server 220. The received stream is output to the viewer unit 266 and output in predetermined formats. Note that, here, it is assumed that the stream also contains a picture.

Further, the information package transmitted from the network is also received here and sent to the package processing unit 261.

The viewer unit 266 controls the viewer for receiving and utilizing the desired information. Specifically, it carries out the processing such as the display of the stream to the viewer and interaction by dialog. The control of this viewer is designated by the description in for example the information package like the description concerning the viewer existing also in the example of the information package mentioned above and carried out by instruction from the package processing unit 261 analyzing this.

### Processing in Package Processing Unit

Next, a more detailed explanation will be given of the processing of the package processing unit 231 of the server unit 222 of the information server 220 and the package processing unit 261 of the information consumer 260.

Both of the package processing units 231 and 261 decrypt the transmitted information package, appropriately apply the service control unit 262 to the viewer unit 266 based on the content thereof, and successively execute the processing according to the content.

The processing in this package processing unit can, in more detail, be divided to a parser and an evaluation system.

The parser converts the information package to the corresponding internal expression if the received information package has a logical format. Where the transmitted information package has the logical format as exemplified in for example Figs. 12 to 17, Figs. 19 to 22, Fig. 23, and Fig. 24, this is converted to the internal expression to be used in the information consumer 260. The conversion of this information package from the logical format to the internal expression will be explained in further detail later.

The evaluation system repeats the processing for calling up the required function while interpreting the converted internal expression. Namely, tags appear when executing the processing, therefore the system repeats the processing for calling up the functions determined by the tags and further reading the next content.

The processing called up at this time are functions such as charging, authentication, stream distribution, control of the viewer, and acquisition of a new information package provided by the authentication unit, charging unit, stream feeder and receiver unit, viewer unit, etc. in the server unit 222 and the information consumer 260 as mentioned above.

Each of these called up functions simultaneously carries out the processing of a plurality of users, therefore, at the callup of these functions, the identifier of the user (or service and account) and the identifier of the information package during processing are simultaneously transferred to the processing unit where they are distinguished.

A set of these identifiers, that is, the state of the service, is recognized and controlled at the service control units 226 and 262.

Further, in the process of this processing, since the structure has a graph structure in which a plurality of partial structures are derived from one portion, there are cases where there are a plurality of other functions to be called up from a certain function. Further, in general cases, there are cases where a certain information package is being processed, another information package is obtained, and the processing of the original information package is continued after this processing is terminated. For this reason, the package processing unit stores the intermediate state during execution as an "evaluation state".

### Conversion of Information Package to Internal Expression

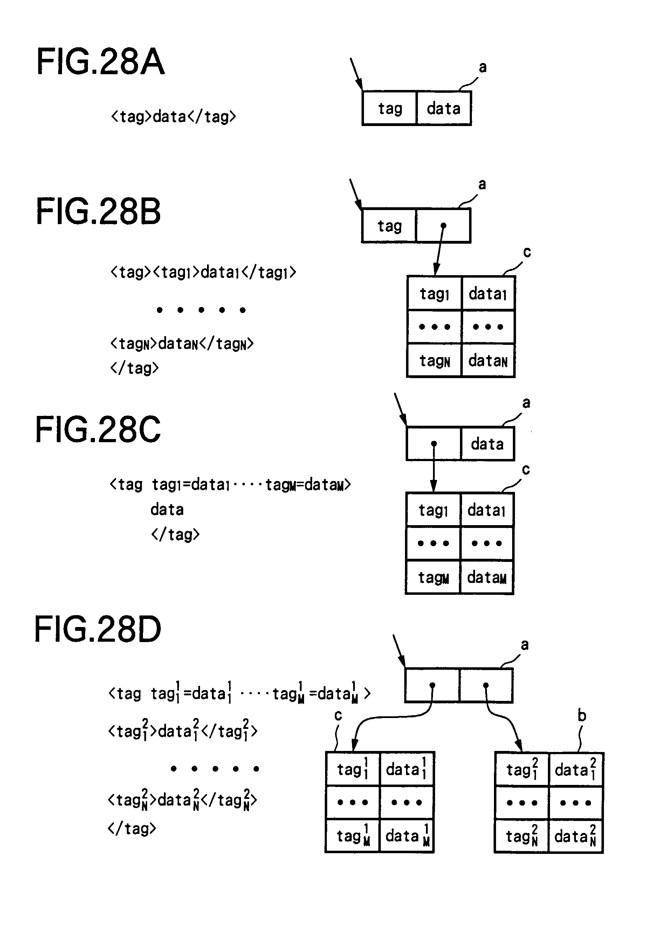

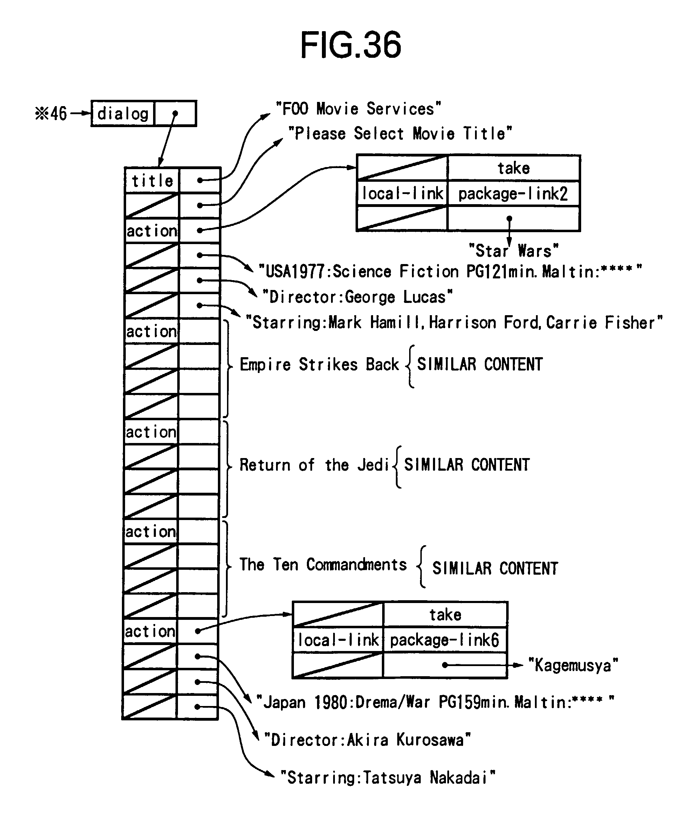

Here, a specific explanation will be given of the conversion of the information package from the logical format to the internal expression in the parser of the package processing unit 261 mentioned above by referring to Fig. 28 to Fig. 36.

In the internal portion of the information consumer 260 or other processing system, each item of the information package is loaded. Several units comprised of sets of tags indicating the processing or item with respect to the data and the data with respect to this are combined and handled in the form of a structure.

The basic correspondence between this internal expression and the logical format used in the explanation heretofore will be shown in Fig. 28.

In Figs. 28A to 28D, the left side of each is a view indicating the logical format, and the right side is a view schematically showing the internal expression.

First, the element of the information package as shown in (1) shown in Fig. 28A is expressed in the internal portion of the processing system by the internal basic format of correspondence between a tag and data as indicated by "a" in Fig. 28A.

As shown in Fig. 28B, when the data part of Fig. 28A is a combination of a plurality of elements, it is internally expressed by a structure "b" comprised of the linked internal basic formats corresponding to these plurality of elements and the internal basic format "a" where the data part becomes a pointer pointing to the front position of the structure "b".

Further, as shown in Fig. 28C, when the tag part of Fig. 28A has a plurality of attributes, it is internally expressed by a structure "c" comprised of the linked attributes and attribute values corresponding to the plurality of attributes and the internal basic format "a" where the tag part becomes a pointer pointing to the front position of the structure "c".

Further, as shown in Fig. 28D, a logical format such as one where the tag part has a plurality of attributes and the data part has a plurality of elements is internally expressed by a structure "b" comprised of linked internal basic formats corresponding to the plurality of elements, a structure "c" comprised of linked attributes and attribute values corresponding to the plurality of attributes, and an internal basic format "a" where the tag part becomes a pointer pointing to the front position of the structure "c" and the data part becomes a pointer pointing to the front position of the structure "b".

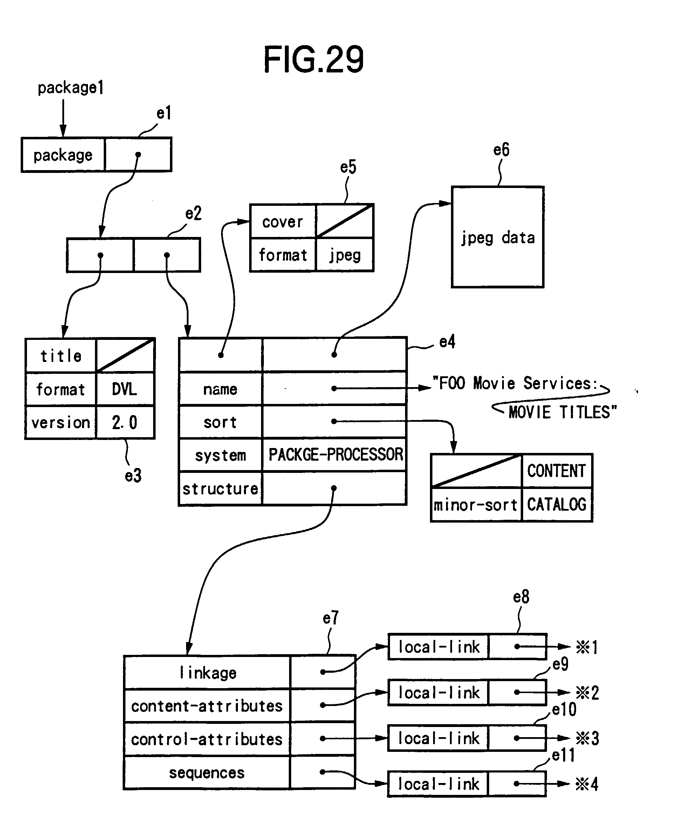

As a more actual specific example, the internal expression of the first information package shown in Figs. 12 to 17 is shown in Figs. 29 to 36.

First, as shown in Fig. 29, an original internal basic format el where the data part becomes a pointer to an internal basic format e2 in which the attribute of the title part and the pointer to the structure of the data are described is provided corresponding to the tag <package>.

The tag part of the internal basic format e2 becomes a pointer to a structure e3 in which the content of the tag of the title part, that is, data that the format provider is DVL and the version is 2.0, is described. Further, the data part of the internal basic format e2 becomes a pointer to a structure e4 in which the content of the title part, that is, the cover, name, type, etc. are described.

In this way, the reason why the data is referenced by using two stages of internal basic formats at the original part of the information package is that by rewriting only the internal basic format e2 during this time, it is possible to replace just the content of the package without changing the reference to the package - which is very convenient.

The tag part of the cover of this structure e4 becomes a pointer to a structure e5 comprised of a basic format indicating that it is the cover and a basic format indicating that the format is the JPEG. The data part of the cover becomes a pointer to a JPEG data e6.

Further, the data of the structure of the structure e4 becomes a pointer to a structure e7 which indicates the structure by using the linkage part, content attribute part, control attribute part, and sequence part as tags.

The data other than the title part to the information package refers to the pointer indicated in the data part of each item of this structure e7 and is referenced by the pointer indicated in the data part via the internal basic formats e8 to e11 each indicating that it is a local link.

These internal basic formats e8 to e11 are internal basic formats e for connection - of which single stages are used so as to enable just one to be rewritten when referring to data via the network.

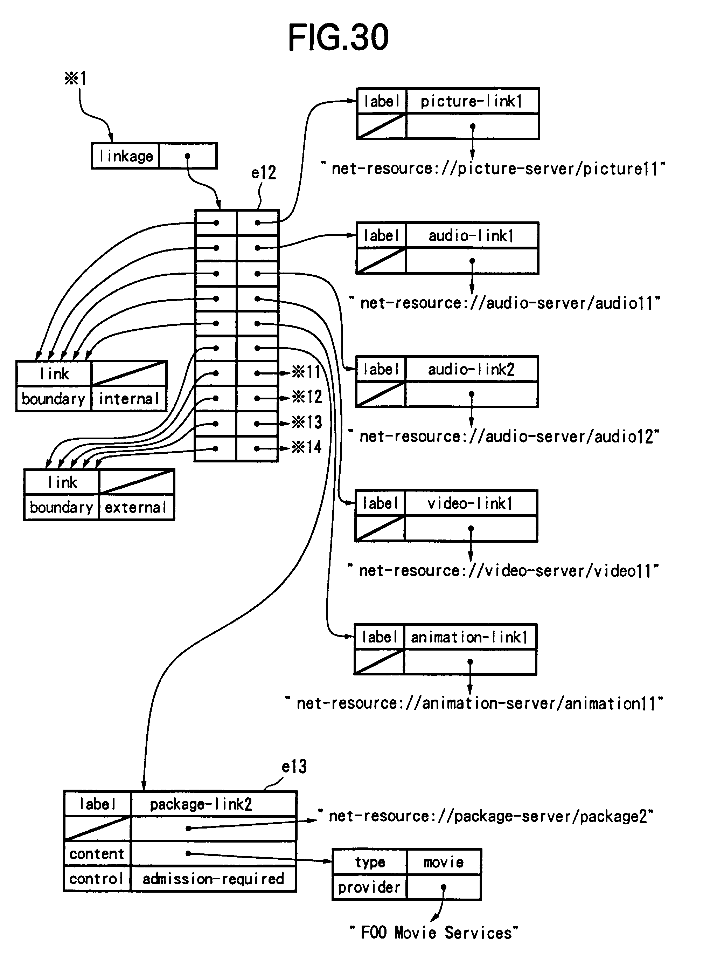

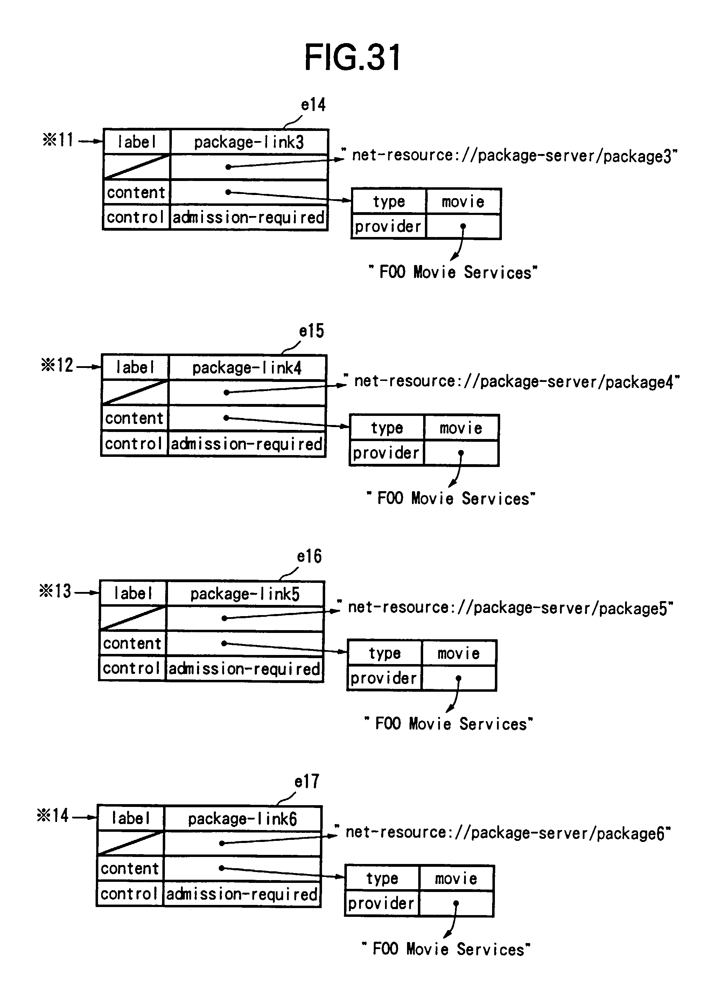

Figure 30 and Fig. 31 are views of the internal expression of data of the link part referenced by the internal basic format e8. In this, the structures e13 to e17 shown in Fig. 30 and Fig. 31 are structures indicating the existing location, content, etc. for the data to be externally referenced indicated by the structure e12 of Fig. 30.

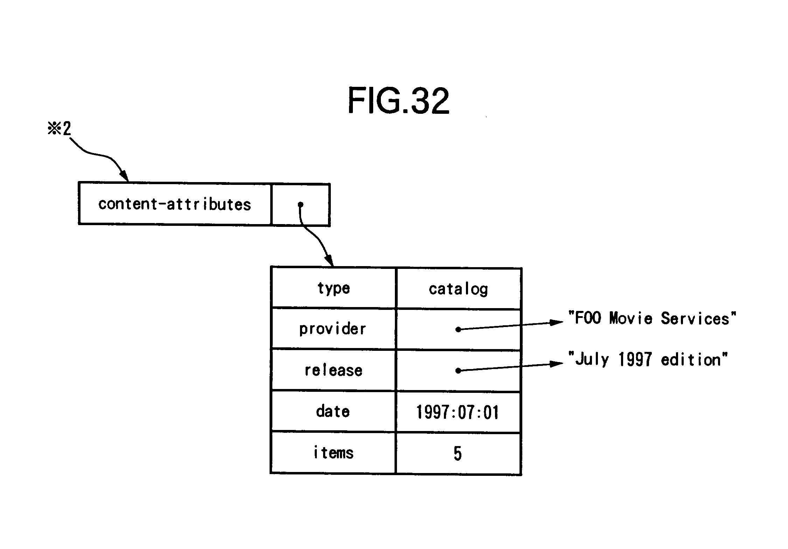

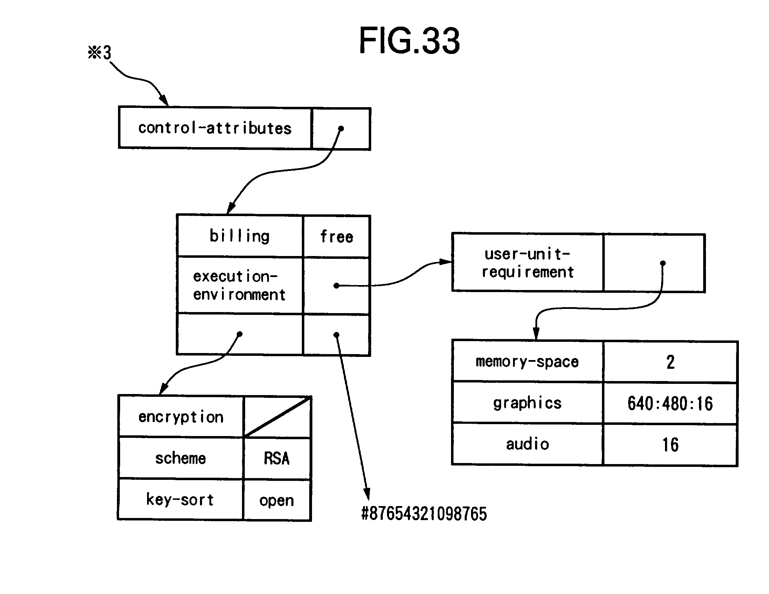

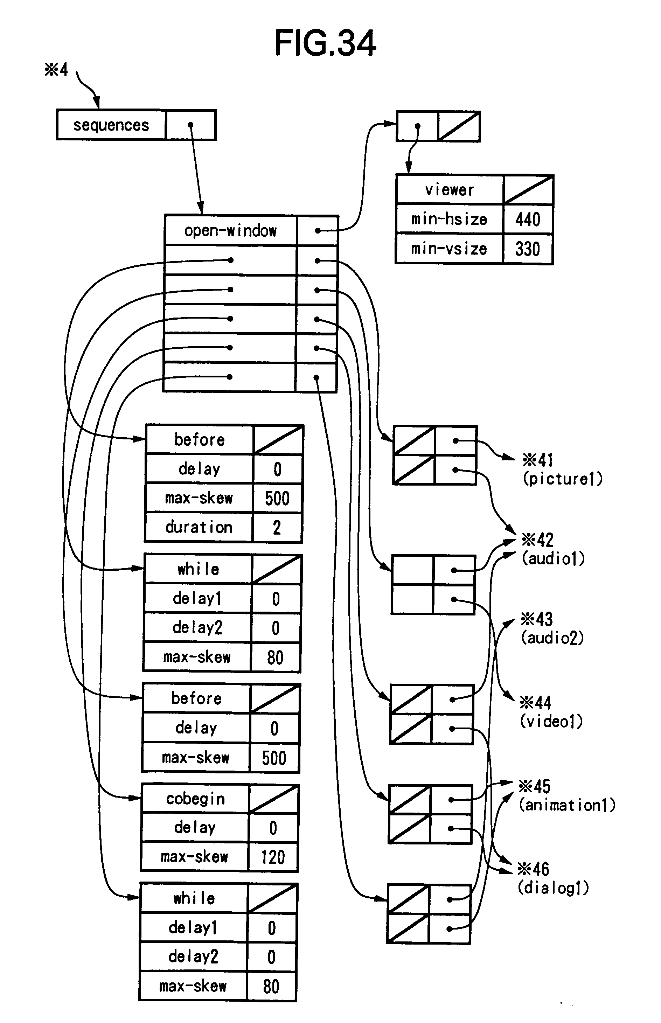

Further, Fig. 32 is a view of the internal expression of the data of the content attribute part referenced by the internal basic format e9; Fig. 33 is a view of the internal expression of the data of the control attribute part referenced by the internal basic format e10; and Fig. 34 to Fig. 36 are views of the internal expression of the data of the sequence part referenced by the internal basic format e11.

### Flow of Distributed Service

A detailed explanation will be given next of the flow of the distributed service of the information actually provided by using the information package as mentioned above under the network environment and the processing environment at the nodes as explained heretofore.

Where a certain information consumer 260 tries to receive the information distribution service provided by the service provider 210 (FOO Movie Services), he or she first applies for subscription to the service. By this, the service provider 210 prepares the data of the information consumer 260 in the service history data base 224 and the customer data base 225 so as to enable management relating to the information consumer 260.

Where the information consumer 260 actually tries to receive the service from the service provider 210, first, the information consumer 260 requests a service list from the information server 220. In response to this, the information server 220 transmits a service list like the first information package as shown in for example Fig. 12 to 17 to the information consumer 260. At this time, the history of the transmissions is held in the service history data base 224 of the information server 220.

The information consumer 260 analyzes the received first information package at the package processing unit 261 and converts this to an internal expression. Then, by this, the package processing unit 261 decrypts the content of this first information package as the multimedia content and starts the processing of the multimedia sequence. Specifically, the package processing unit 261 appropriately obtains the source of the material content by access on the network according to the content of the sequence as shown in Fig. 10 described in that information package. At this time, the information server 220 transmits the desired content to the information consumer 260 upon demand. By this, the multimedia sequence as shown in Fig. 10 described in the first information package is output to the viewer unit 266 of the information consumer 260.

Then, assume that the user selects "Star Wars" when the dialog as shown in Fig. 12 is displayed. The information consumer 260 then requests the distribution of the selected movie to the information server 220, in other words, requests transmission of the second information package as shown in Figs. 19 to 22 for distributing the desired movie.

As a result, the second information package is distributed from the information server 220 to the information consumer 260, and the multimedia sequence as shown in Fig. 18 is successively output to the viewer unit 266 of the information consumer 260. However, at this time, the stream to be charged, that is, the movie data (Movie 1), is successively transmitted based on the result of processing for authentication explained next.

The necessity of authentication is indicated in the description of the link to "Star Wars" of the control attribute part of the first information package. In order to obtain such a content, the information consumer 260 must perform the processing for authentication. Namely, the information consumer 260 also transmits the third information package regarding the authentication as shown in Fig. 23 to the information server 220. Part of the content of this third information package is encrypted by an "public key" disclosed by the service provider 210 (FOO Movie Services).

The package processing unit 231 of the server unit 222 of the information server 220 decrypts the encryption by the "private key" of the service provider 210 (FOO Movie Services), interprets the content, and carries out the processing for authentication. If the content of authentication is suitable, it allows the transmission so that the request of the information consumer 260 can be subsequently responded to, that is, the transmission of the movie or other content stream to be charged can be subsequently carried out.

Further, the information server 220 will not transmit the movie or other content stream if the authentication cannot be confirmed.

Note that it is also possible to perform the processing for authentication by the transmission of this third information package simultaneously with the request for distribution of the second information package or perform this when the program information, title, and advertisement (P1, P2, Audio 1, Video 1) are displayed after the reception of the second information package.

After the distribution of the movie is commenced, the server unit 222 of the information server 220 and the information consumer 260 link up and perform the processing for usage-based charging for charging according to stream obtained.

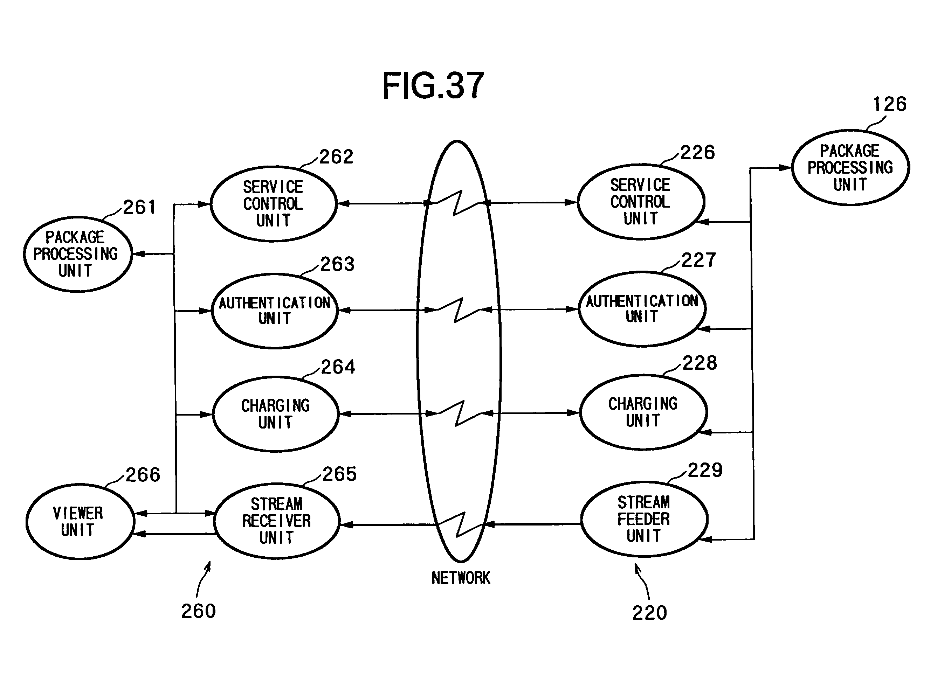

An explanation will next be given of the processing of this usage-based charging by referring to Fig. 37.

As explained above, in order to obtain the second information package, the third information package for authentication is transmitted from the authentication unit 263 of the information consumer 260 to the authentication unit 227 of the information server 220, the authentication processing is carried out at the information server 220 based on this, and if it is suitable, the feeder of the stream is commenced from the stream feeder unit 229 of the information server 220 to the stream receiver unit 265 of the information consumer 260.

After the transmission of this stream is commenced, when the reception of the stream is subsequently requested at the information consumer 260, the function of the charging unit 264 is called up in units of periods of for example about 30 seconds. By this, the charging unit 264 allows the charging of a fee corresponding to 30 seconds to the charging unit 228 of the information server 220, in other words, notifies the payment of a fee corresponding to 30 seconds.

The charging unit 228 of the information server 220 allows the further transmission of the stream to the information consumer 260 commensurate to the paid fee to the stream feeder unit 229. The stream is transmitted by this.

If the information consumer 260 does not desire further reception of the stream, by for example instructing the charging unit 264 not to notify payment to the charging unit 264, the information server 220 also not longer issues permission for the stream transmission from the charging unit 228 to the stream feeder unit 229. Thus, the feeder of the stream is stopped.

Then, at the end of the distribution of a series of streams etc., the information server 220 stores the total amount of charging control information of the information consumer 260 in the customer data base 225.

Further, it counts the reproduction onto the viewer unit 266 of advertisements (video 1, audio 1 in the package of Fig. 18) in the information consumer 260 and also records this in the customer data base 225.

Then, the service provider 210 (FOO Movie Services) reads the utilization fee of the information consumer 260 from the customer data base 225 every predetermined period, for example, every month, and charges it to the credit card shown in the third information package at the time of authentication.

Further, the service provider 210 (FOO Movie Services) sends the fourth information package of the bill of the advertisement fee as shown in Fig. 24 to the advertisement server 250 based on the count of advertisements on the information server 220 every preparation period, for example, every month. The content (part thereof) has been encrypted by an "public key" disclosed by the advertisement provider 240. The advertiser decrypts the content by a "private key" and carries out the processing for payment of the advertisement fee etc.

### Modification

In the above format, all of the information package except the link destination (material portion) from the link-part is transferred to the information consumer 260. The package processing and other processing is carried out at the side of the information consumer 260.

However, where the capability of the system of the user is small, it is possible for the information server 220 to perform the package processing and send for example only the sequence part is sent to the information consumer 260 and for the information consumer 260 to only display the content to the viewer unit 266. In such a case, both of the charging and authentication are carried out at the information server 220 by the contract content in advance or the recognition of the apparatus of the information consumer 260.

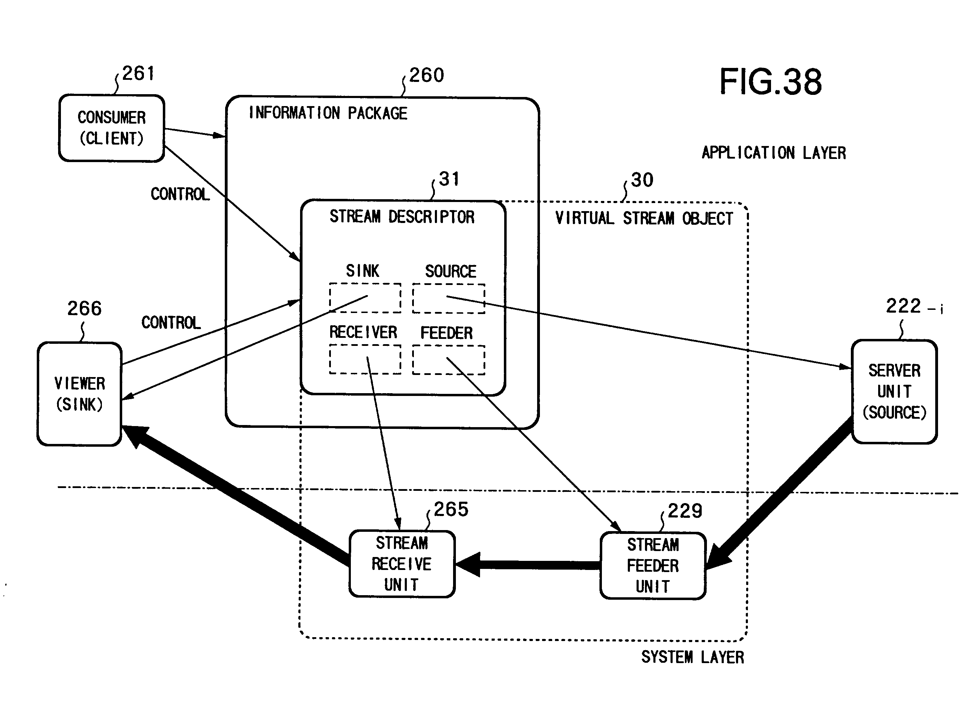

At this time, the link from the information package body to the sequence description part (*4 of example of internal expression of the link part shown in Fig. 29) becomes a reference via the network. The sequence part is sent to the user after generating and linking a stream object in advance after the "source" tag of the material position. Then, the information package containing the stream object is transferred on the network according to the stream data processing method explained later by referring to Figs. 38 to 54.

At this time, when the package processing unit 261 of the information consumer 260 is called up, the partial structure of the information package to be processed as the "evaluation state" of the package processing unit explained above is transferred to the opposing processing function. The receiver executes the processing of the partial structure viewing this "evaluation state". When the processing there is terminated, the "evaluation state" at this time and the partial structure at this time are transferred to the processing function of the information server 220, and the processing is further executed.

The callup among the processing functions is carried out through the service control units 226 and 262 managing the state of the service as mentioned above.

### Distribution of Stream Data

Next, an explanation will be given of the method of actually transferring the video data, audio data, and other stream data on the network in such a distribution service by referring to Fig. 38 to 44.

As explained above, since the information to be provided exists on a node different from the information consumer 260, it is transferred to the information consumer 260 via the network by the distribution of information. In order to suitably transfer the video data, audio data, and other stream data by appropriately responding to fast forward, stop, rewind, and other instructions from the information consumer 260, sophisticated stream control via the network is necessary.

Below, an explanation will be made of such a control method and transfer method.

Figure 38 is a view explaining the data processing method.

Figure 38 is a view of a state where the package processing unit 261 of the information consumer 260 uses the stream data supplied from the server portion 222₋ᵢ via a virtual stream object 30. The entity of the stream data is transferred to the viewer unit 266 corresponding to the viewer portion 266 of the information consumer 260 from the server portion 222₋ᵢ after passing through the complex procedure at the system level. This figure shows a state where they can be handled as if they were one stream object 30 from the package processing unit 261.

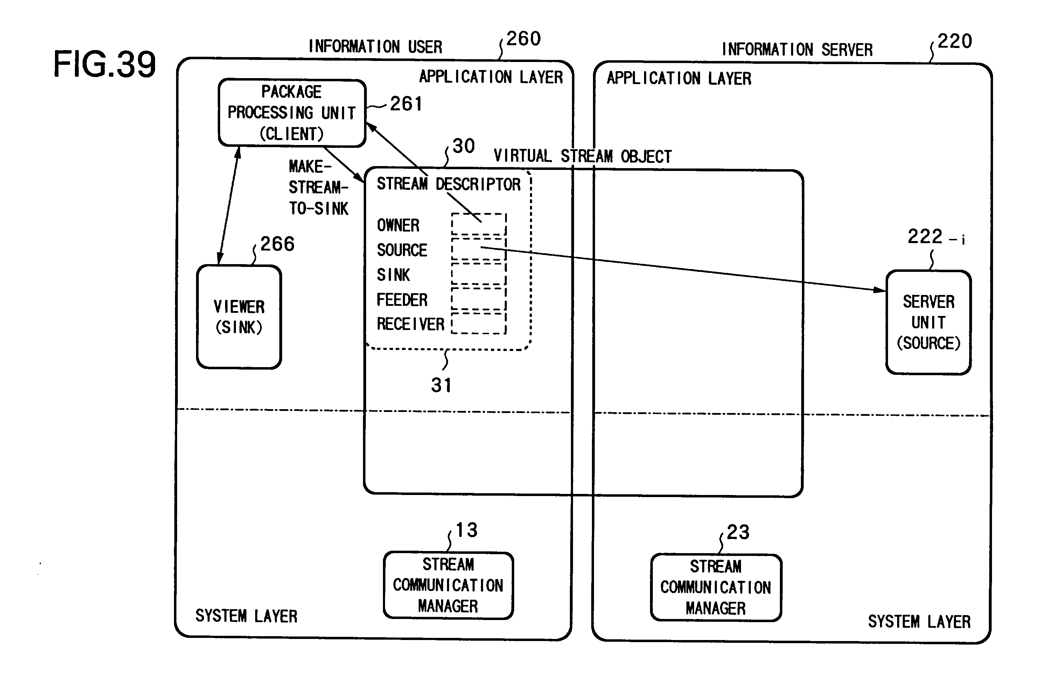

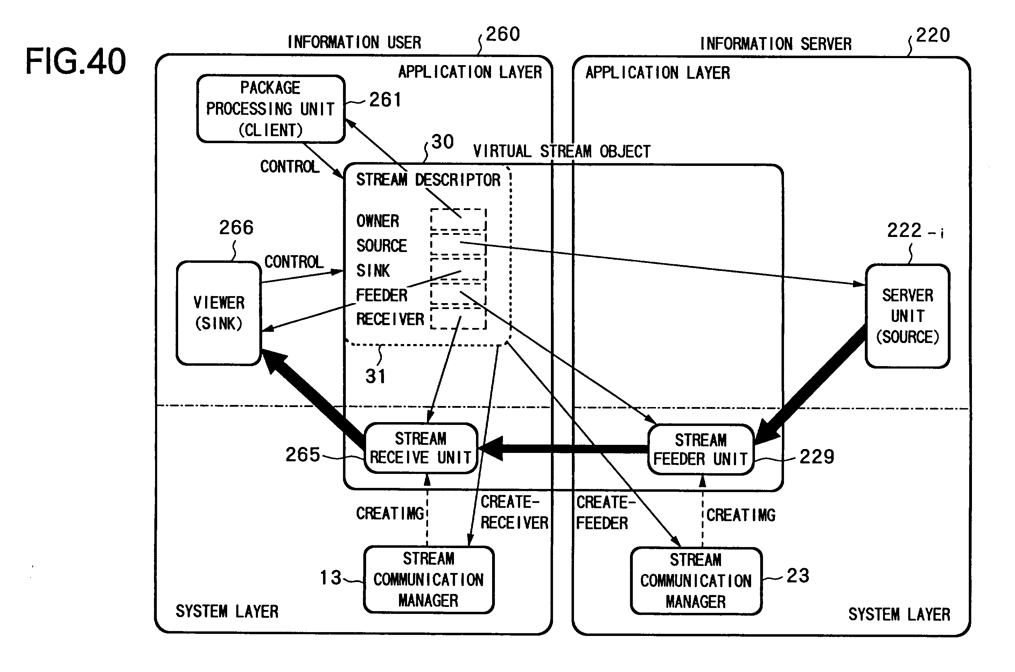

Figures 39 and 40 are views explaining the data processing method in the actual data processing mechanism, in which Fig. 39 is a view of the state for generating the virtual stream object 30; and Fig. 40 is a view of the state when the transfer of the stream data is actually carried out.

Below, the function of modules shown in Figs. 38 to 40 will be explained and, at the same time, the operation at each module at the actual data processing will be explained.

First, an explanation will be made of modules.

The package processing unit 261 is an application module using the video data, audio data, and other stream data.

An information package 40 contains the data for generating the stream descriptor module 30 as the multimedia data structure in the application layer, and usually generated on the node of the information consumer 260 by the package processing unit 261.

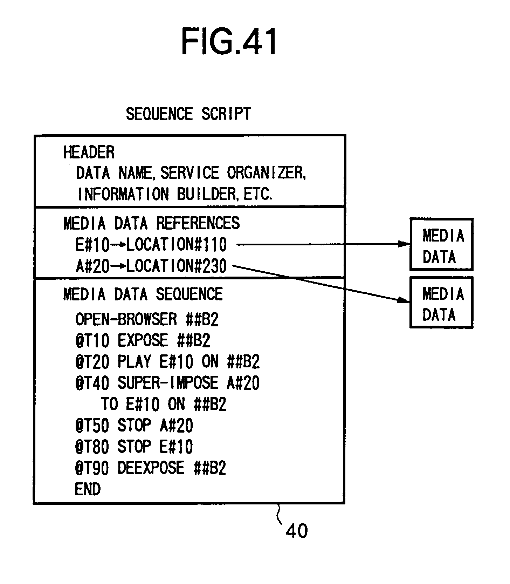

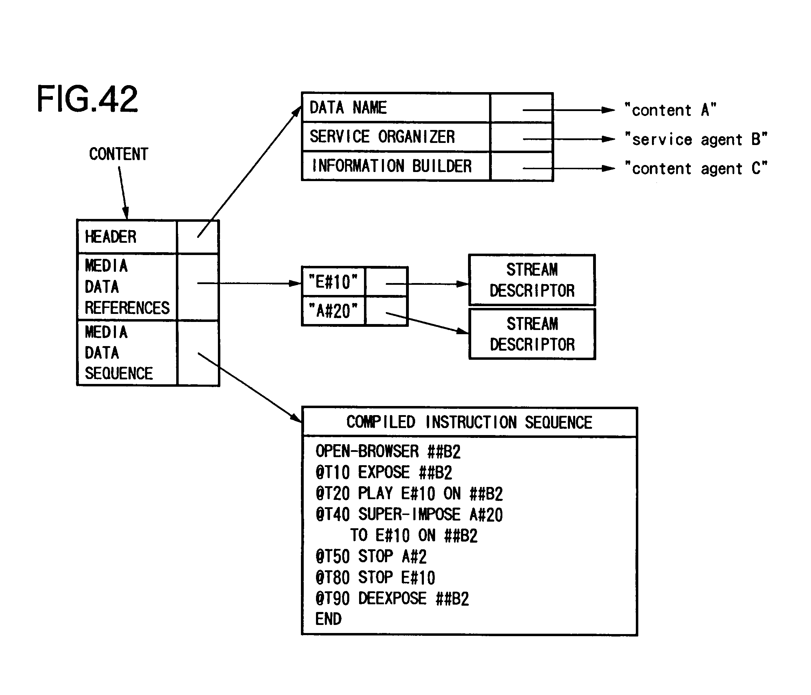

The information package is like the first information package as shown in for example Figs. 12 to 17 and has been already explained in detail, but Fig. 41 is a view of the configuration simplified for the explanation. Further, corresponding to Fig. 41, a state where the multimedia structure as shown in for example Figs. 29 to 36 is generated from the information package 40 is shown in Fig. 42.

As shown in Fig. 41, the information package 40 has a header part, a media data reference part, and a media data sequence part. As shown in Fig. 42, it can be said that the header part is a set of the data for specifying the data stream structure, the reference information of the source media data is stored in the media data reference part, and the instructions with respect to the media data are indicated in the media data sequence part.

The virtual stream object 30 is stored in the server unit 222₋ᵢ and is a module for handling a stream data requiring complex system level procedures for use as if it were a stream of simple material.

The virtual stream object 30 is configured by a stream descriptor module 31, a stream feeder unit 229, and a stream receiver unit 265.

The stream descriptor module 31 is a module for interfacing with the package processing unit 261 and the modules of the system level and, at the same time, controlling the modules of the system level and making them perform a desired operation with respect to the stream data. With respect to the stream descriptor module 31, a variable owner indicating the package processing unit 261 as the master module, a variable source indicating the streaming data to be processed, a variable sink designating the viewer unit 266 receiving the stream data, a variable feeder indicating the transmission unit 229 of the stream, and a variable receiver indicating the reception unit 265 of the stream are defined as instance variables.

The stream feeder unit 229 is a module corresponding to the stream feeder unit 229 of the information server 220, for reading the stream data from the source module of the stream data in accordance with the request of the stream receiver unit 265, and outputting this to the stream receiver unit 265 according to a predetermined protocol.

The stream receiver unit 265 corresponds to the stream receiver unit 265 of the information consumer 260, outputs the transmission request of the stream data to the stream feeder unit 229 under the control from the stream descriptor module 31 and, at the same time, outputs the transmitted stream data to the viewer unit 266 controlled by the package processing unit 261.

Note that, the protocol between the stream feeder unit 229 and the stream receiver unit 265 is XTP. By this, correct control is made possible with respect to transfer delay according to the degree of congestion of the network and the deviation of time due to the fact that the stream feeder unit 229 and the stream receiver unit 265 are operating by different clocks.

A stream communication manager 13 and a stream communication manager 23 shown in Figs. 39 and 40 are processing modules for generating the stream feeder unit 229 and the stream receiver unit 265 according to need and are stationed in the system.

The server unit 222₋ᵢ is a module existing in the apparatus for storing the stream data and for supplying the stream data.

The viewer unit 266 is a module corresponding to the viewer unit 266 of the information consumer 260 and receiving the stream data and actually utilizing it.

In the data processing system of such a module configuration, the virtual stream object 30 is generated as shown in Fig. 39 by just designating the source stream data from the package processing unit 261. By executing the processing by using this as the stream data after this, the desired processing can be carried out. At the time of this data processing, as shown in Fig. 40, the modules link together to control the transfer etc. of the stream data. It is sufficient that the processing be carried out from the package processing unit 261 with respect to the virtual stream object 30.

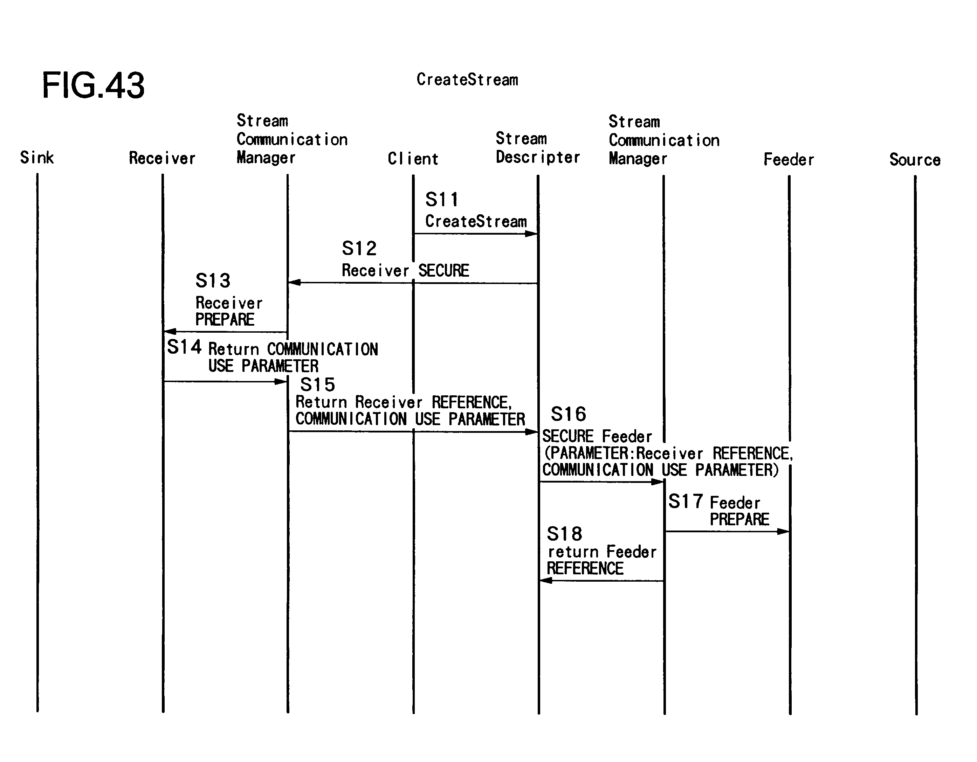

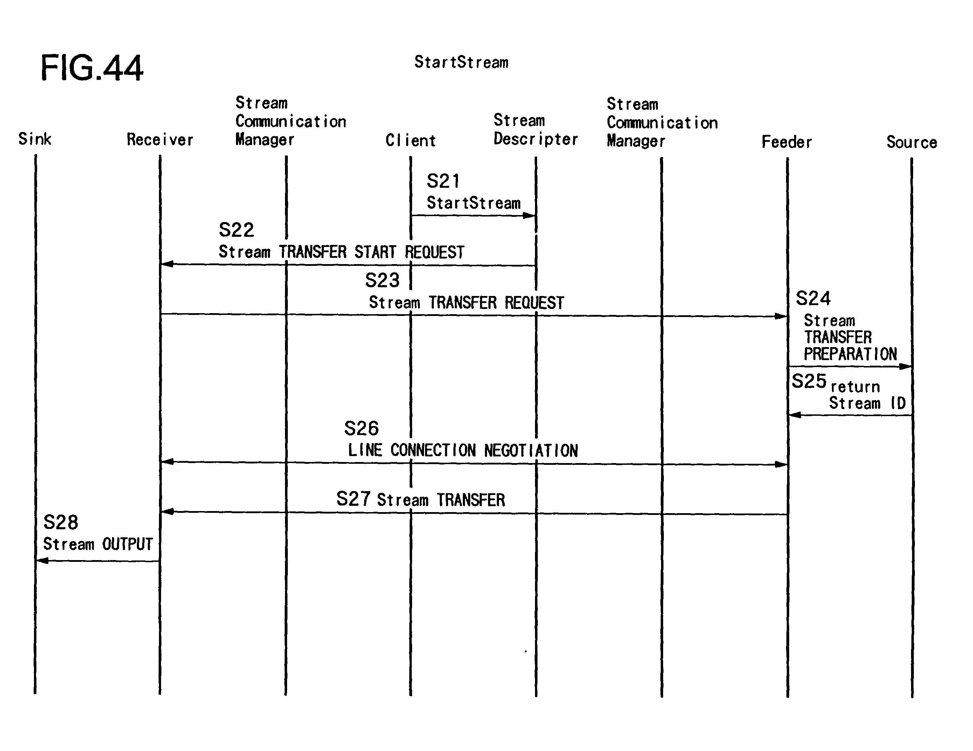

Next, an explanation will be made of the flow of the procedure and the operation at the modules when the actual data processing is carried out in such a data processing system by referring to the specific example shown in Figs. 43 and 44.

First, an explanation will be given of the operation of generating the virtual stream object by referring to Fig. 43.

First, the stream descriptor module 31 is generated at the information consumer 260 based on the data source described in the information package 40 received by for example the package processing unit 261.

Then, the package processing unit 261 in the information consumer 260 calls up the method createStream to the stream descriptor module 31 and requests the generation of the stream communication mechanism shown in Fig. 40 (step S11).

Next, the stream descriptor module 31 requests acquisition of the stream receiver unit 265 to the stream communication manager 13 (step S12). The stream communication manager 13 generates a stream receiver unit 265 in response to this (step S13). The generated stream receiver unit 265 returns a communication parameter such as destination data for the stream feeder unit 229 as the return value (step S14). The stream communication manager 13 further adds the reference of the stream receiver unit 265 and returns the return value to the stream descriptor module 31 (step S15).

When the generation of the stream receiver unit 265 is terminated, the stream descriptor module 31 transmits the reference and communication parameter of the stream receiver unit 265 to the information server 220, and indicates the generation of the stream feeder unit 229 with respect to the stream communication manager 23 of the information server 220 (step S16). In response to this, the stream communication manager 23 generates the stream feeder unit 229 (step S17). Then, the stream communication manager 23 returns the reference of the stream feeder unit 229 to the stream descriptor module 31 (step S18).

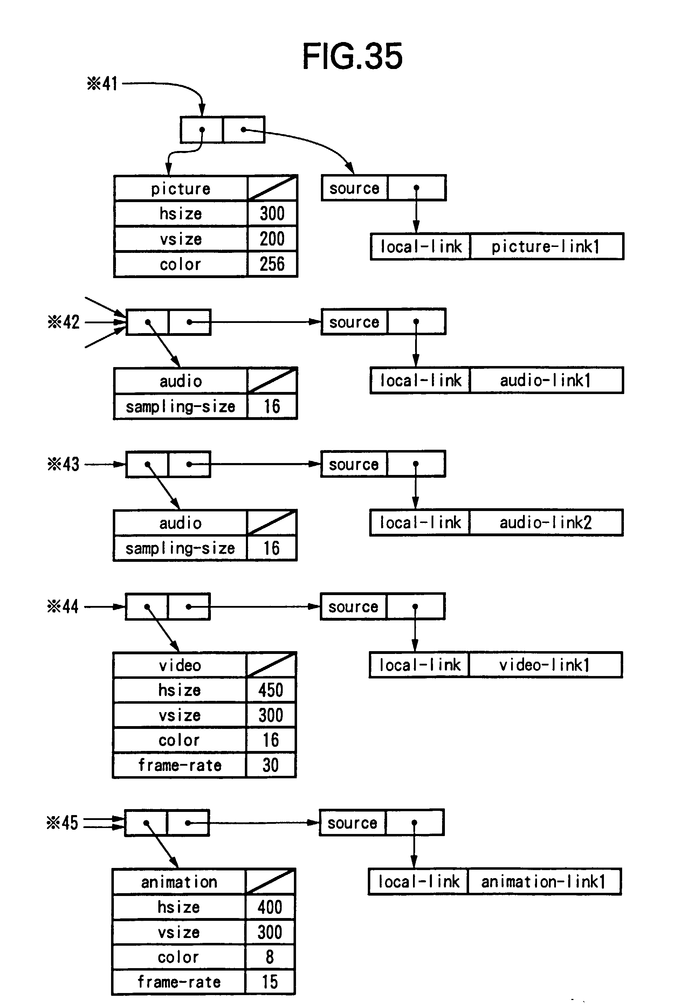

Then, in the movie distributing system, when the first information package as shown in for example Figs. 12 to 17 is transformed into the internal expression shown in Figs. 29 to 36, the pointers appearing after the "source" tag indicating the location of materials shown in Fig. 35 are switched from the cells of the local-link tag to the pointers pointing to the stream-object. For this purpose, the local-link thereof is pulled in to obtain the resource identifier (net-resource://.....) from the information of the link part and generate a stream-object defining this as the source of the internal variable. By such a processing, the stream descriptor module 31 using the stream-object and the virtual stream object 30 containing the stream feeder unit 229 and the stream receiver unit 265 are generated.

Note that, along with the generation of this stream object 30, the pointer of the information package 40 for referring to the source thereof is replaced by the pointer to this stream object. Specifically, in the internal expression as shown in Fig. 35, the pointer at the right side of SOURCE is replaced by the pointer to the generated stream object.

Next, an explanation will be given of the operation for the transfer of the stream by the virtual stream object by referring to Fig. 44.

First, the package processing unit 261 in the information consumer 260 requests the method startStream from the stream descriptor module 31 (step S21). The stream descriptor module 31 requests the start of transfer to the stream receiver unit 265 (step S22). Then, the stream receiver unit 265 requests transfer of the stream to the stream feeder unit of the information server 220 (step S23). Further, in the information server 220, the stream feeder unit 229 requests the transfer of the stream to the server unit 222₋ᵢ (step S24).

The server unit 222₋ᵢ returns the stream ID and, at the same time, successively outputs streams to the stream feeder unit 229 in accordance with the request (step S25). Then, the stream feeder unit 229 and the stream receiver unit 265 cooperate to secure a transmission line (step S26) and transfer the stream output from the server unit 222₋ᵢ from the stream feeder unit 229 to the stream receiver unit 265 (step S27). The stream receiver unit 265 successively outputs the received streams to the viewer unit 266 (step S28).

The streams are then successively transferred via the secured route.

Note that the StartStream may be requested while the stream descriptor module 31 carries out the processing of CreateStream. In this case, the stream descriptor module 31 starts the processing of StartStream immediately after the end of the processing of CreateStream.

Similarly, the operation for temporarily stopping the transfer of a stream, the operation for restarting the transfer again, the operation for ending the transfer of the stream, and the processing for closing down the stream transfer mechanism etc. are appropriately carried out.

Accordingly, conventionally, when the stream data must be transferred from the network through communication, processing such as the generation of the transmission module and reception module, connection of them, and transmission, stop, and retransmission of the stream had to be carried out one by one, but in this data processing system, no fine control need be carried out for these.

Note that other various modifications are possible for this data processing method.

For example, the relationship between the supplying side of the stream data and the utilization side of the stream data can be any relationship so far as the data transfer can be carried out. The distance between them, type of network, type of the mounted processing device, etc. do not matter.

Further, it is also possible to adopt a configuration of virtual stream object whereby a plurality of stream data can be handled in parallel or simultaneously

Further, it is also possible to provide a more sophisticated processing function other than the transfer of the stream data to the virtual stream object. For example, not only functions of reverse reproduction, shuttling transfer, and fast feed, but also a simple image processing function, for example, application of a certain filter to the transferred video data, can be imparted.

Further, it is also possible to impart a function for combining a plurality of streams received from a plurality of information sources in the virtual stream object 30 and utilizing this as the virtual stream object.

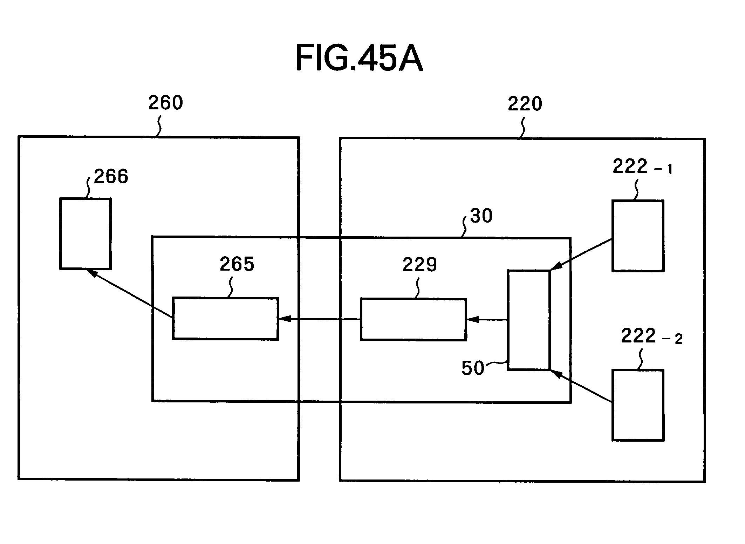

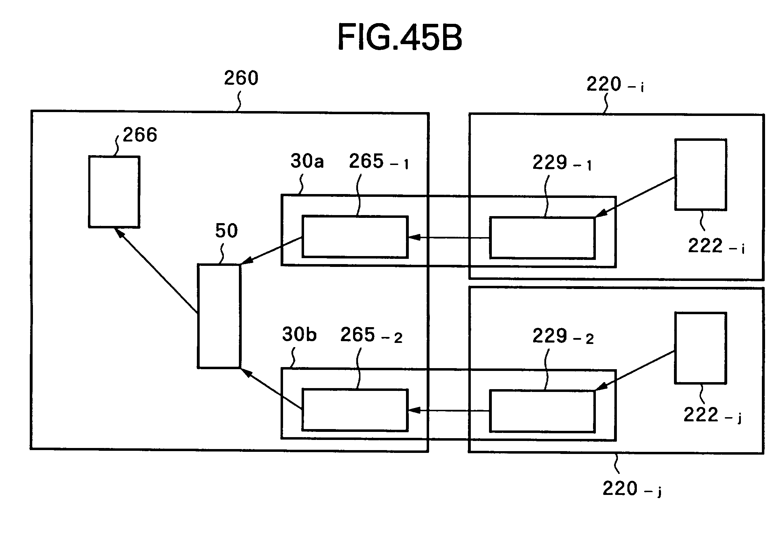

As the format of the data processing system where such a stream is combined, various formats can be considered. Examples thereof are shown in Figs. 45A and 45B.

For example, where two sources stored in one information server 220 are combined, as shown in Fig. 45A, it is sufficient so far as one virtual stream object 30 is generated in the same way as the present embodiment, a stream combining unit 50 is provided on the stream feeder unit 229 side thereof, the source data read from for example two server units 222₋₁ and 222₋₂ is combined to obtain one stream, and this is transferred to the stream receiver unit 265.

Further, where two sources stored in two information servers 220₋₁ and 220₋₂ are combined, as shown in Fig. 45B, two virtual stream objects 30a and 30b are generated, stream transmission units 229₋₁ and 229₋₂ are respectively generated at the information servers 220₋₁ and 220₋₂ in which sources to be combined exist, and the source data read from the server units 222₋ᵢ and 222₋ⱼ are transferred by two virtual stream objects 30a and 30b. Then, on the stream receiver unit 265 side, these two streams are combined by the stream combining unit 50 and output to the viewer unit 266.

Note that, in Fig. 45B, for explanation, the stream combining unit 50 is regarded as another module from the virtual stream objects 30a and 30b, but in actuality, this stream combining unit 50 is any one of the modules of the combination of the stream contained in the virtual stream objects 30a and 30b.

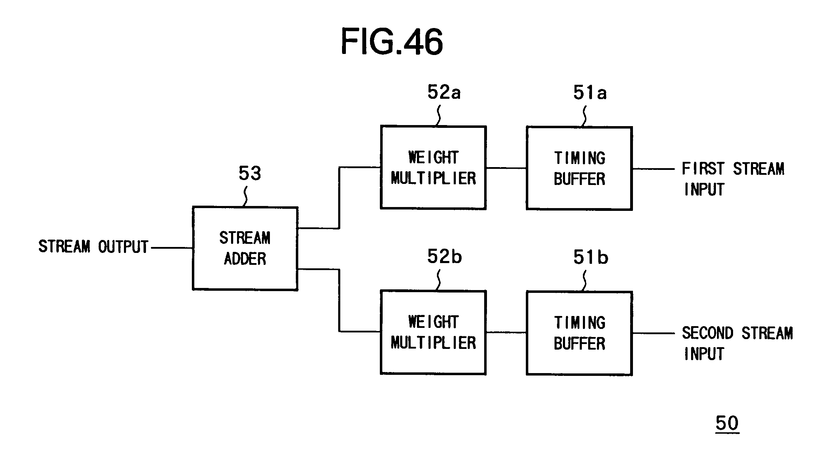

Further, an example of the configuration of the stream combining unit 50 used in Fig. 45A and 45B is illustrated in Fig. 46.

The stream combining unit 50 is configured by two timing buffers 51a and 51b, two weight multipliers 52a and 52b, and a stream adder 53 corresponding to the two input streams.

In the stream combining unit 50, the synchronization of input first and second data streams is established at the timing buffers 51a and 51b. For example, if the input data stream is video data, frame synchronization is established at the timing buffers 51a and 51b. Then, at the weight multipliers 52a and 52b, multiplication is carried out by predetermined weights set by a not illustrated control signal, and the two weighted streams are added at the stream adder 53 to produce one output stream.

Note that the data processing as shown in Figs. 45A and 45B is applied for realizing the SUPER-IMPOSE function in the information package 40 and the functions of "while" and "cobegin" in the first information package shown in Figs. 12 to 17.

When this type of additional function is processing that is carried out by using a module of the system level, for example, depends upon the hardware or complex processing, it becomes possible to easily perform the processing by adding such a function to the virtual stream object, therefore the invention is further effective.

Even if such a function is added, this can be handled in the interface with the application just by increasing the definitions of the method functions.

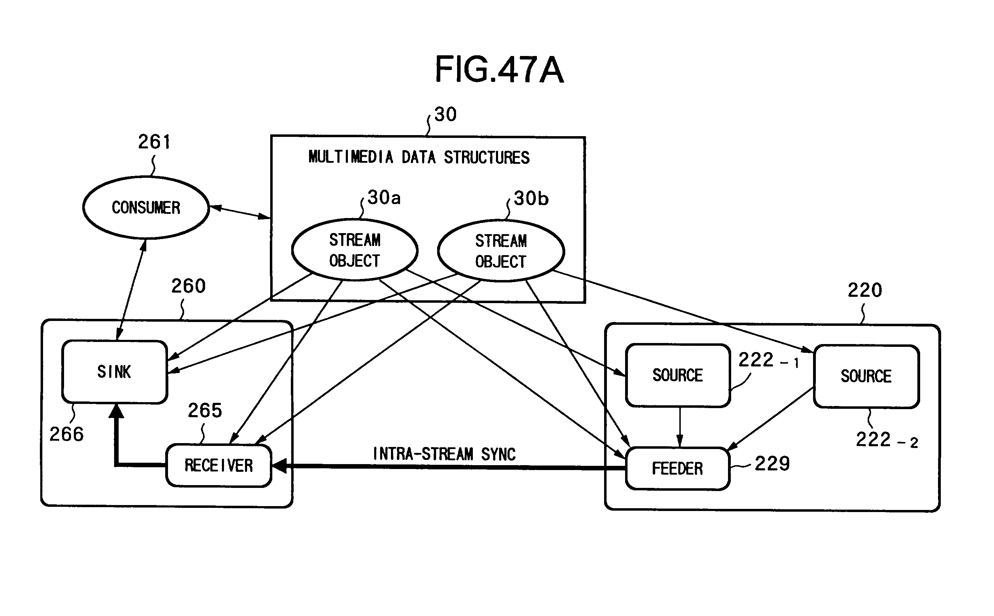

The form of utilization of a plurality of streams explained in brief with reference to Figs. 45A, 45B, and 46 will be more shown in more detail by Figs. 47A, 47B, 48, and 49.

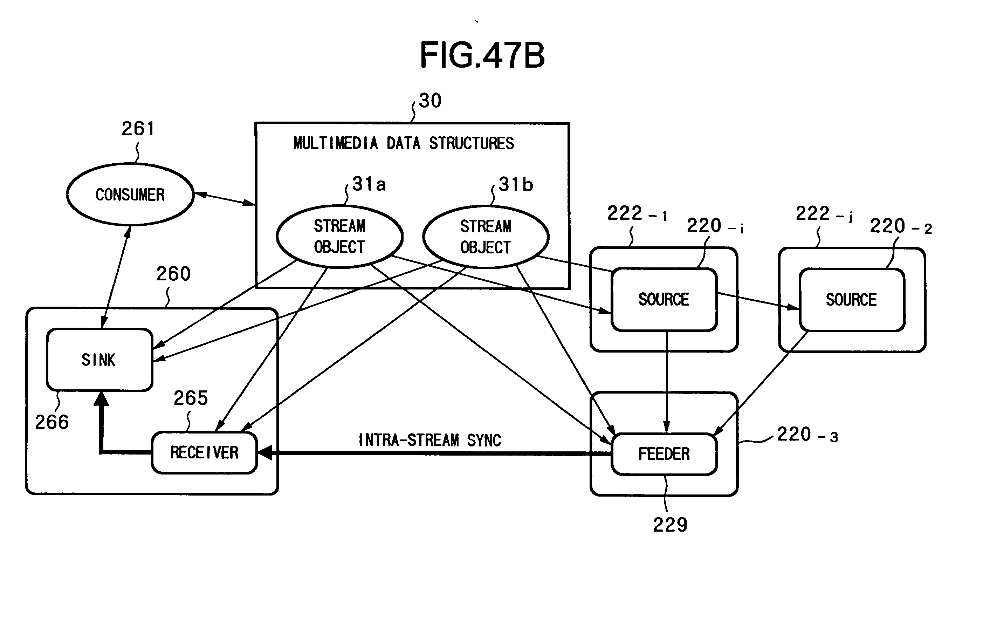

Figures 47A and 47B correspond to the example explained in brief in Fig. 45A and are views showing the configuration of a data processing system where a plurality of streams are combined and transferred as one stream.

Figure 47A is a view of the configuration of a data processing system wherein two server units (SOURCE) 222₋₁ and 222₋₂ and the stream feeder unit 229 are configured on one information server 220.

Figure 47B is a view of the configuration of a data processing system where two server portions 222₋ᵢ and 222₋ⱼ and the stream feeder unit 229 are configured on different information servers 220₋₁ to 220₋₃.

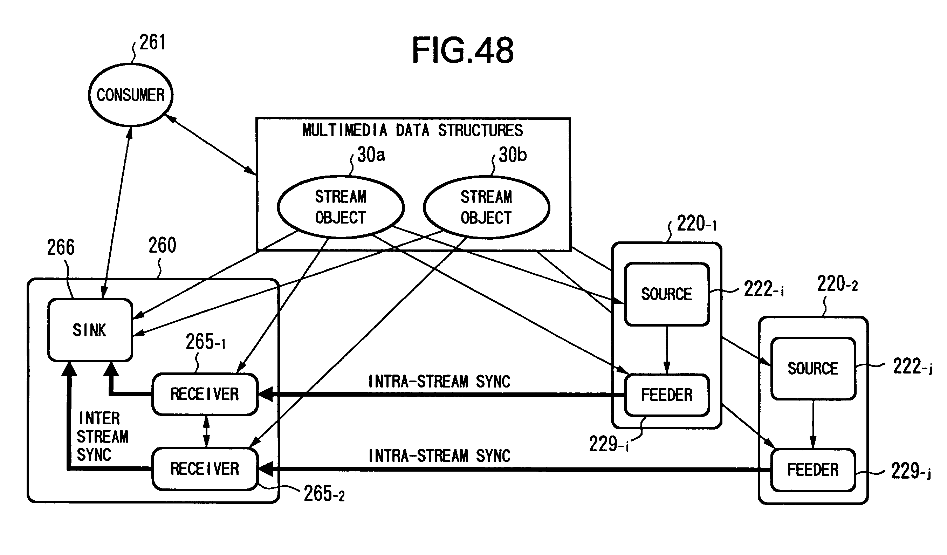

Figure 48 corresponds to the example explained in brief in Fig. 45B and is a view of the configuration of the data processing system where a plurality of streams are individually transferred and combined.

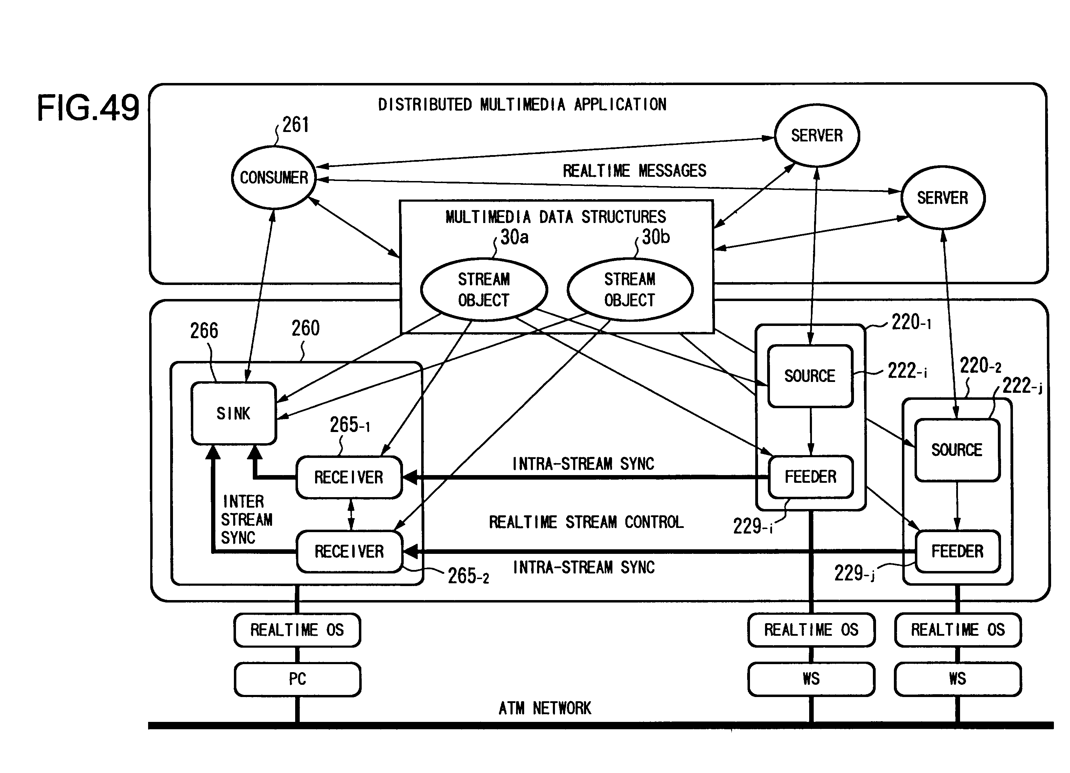

Further, Fig. 49 is a schematic view for explaining the case where Fig. 48 is actually realized on a dispersed system.

In the example shown in Figs. 48 and 49, the synchronization is directly established between two stream receiver units 265₋₁ and 265₋₂ and two streams are substantially processed. Viewing this from the viewpoint of the control of the communication on the network, this is because it is preferred that the stream receiver unit 265 perform the control of the data transfer including the control of the feeder, therefore the function of the combining unit 50 including the timing buffers 51a and 51b of Fig. 46 is internally located in the stream receiver unit 265. When actually constructing a system on the dispersed processing environment, such a configuration is sometimes exhibited, but these configurations are also within the substantial scope of the system explained by using Figs. 45A and 45B explained above.

The audio data, video data, and other stream data can be processed among any nodes while avoiding any complexity and trouble of processing by using the application programming interface for handling the stream processing function referred to as the virtual stream object as explained above.

### Network Connection

Next, an explanation will be given of the network connection and the method of management of the network system when accessing the link in a case where the actual location of each content etc. is retrieved or when searching for each processing system as shown in Fig. 2 on the network by referring to Fig. 1 and Figs. 50 to 57.

### Connection Method

During the processing of the distribution service as explained above, the package processing unit 261 of the stream receiver unit 265, the package processing unit 231 of the information server 220, etc. recognize the name mechanism thereof ("net-resource") when the resource identifier is obtained and specifies the actual position of the resource by the function.

This method usually locally holds the resolving result. A method of simply referring to this and a method of inquiring to the server which manages each resource are used.

In the network system of the present embodiment, further, a managing means is provided for every local area. By calling up this managing means, the position of the resource can be searched for. This method will be mentioned later.

When the desired resource no longer exists at the destination indicated by the identifier on the network due to the rearrangement of the network, update of information, replacement of providers, etc., this is dealt with by similarly inquiring to the above network mediator and obtaining a possible alternative resource.

Further, the information used for the inquiry is based on the service content at that time. Preferably, it is carried out by using the content attribute etc. added to the link.

### Network Spatial Management

An explanation will be made of the method of using the managing means on the network and the method of managing the network by such a managing means in the method of specifying the actual position of the resource explained above.

In this method, the network is managed while being dispersed by the managing means provided in every local area. In a network 310 shown in Fig. 1, management is carried out for every sub-network in mediators (M) 331 to 336 individually provided for the sub-networks 311 to 316.

The mediators 331 to 336 store the information of the node in each sub-network and the information of the adjoining sub-network. By this, they manage the input and output of the data to and from each node and the destination of output of the data to be transmitted.

The management information stored in the mediators 331 to 336 is successively updated based on addition or deletion of the nodes. For this reason, first, the mediators 331 to 336 monitor the nodes connected to the sub-network to be managed at predetermined time intervals. When a node is deleted, it immediately update the management information in that mediator. Further, when the node is added due to the connection of a new data processing device to the sub-network or connection of mobile terminal equipment, the data processing device immediately transmits the connection information of a predetermined format to the mediator. The mediator carries out the processing for giving an ID to the connected node or the like based on that information and updates the management information.

The processing is automatically carried out according to a predetermined protocol, therefore it is sufficient that the user merely connect the data processing device or mobile terminal to the network. No setup is required with respect to the network.

### Network Connection

In a network system managed by such a scheme, the connection among nodes is achieved by a hypothetical base connection for hypothetically constructing a path between nodes.

Specifically, first the node of the connection side designates the node of the destination of connection by the name of the node of the destination of connection or a function keyword indicating the nature of the node and outputs a connection request having the designation information to the mediator of the sub-network to which that node belongs.

Based on the data of the connection request, the mediator detects a route on which the destination of connection may exist and outputs the connection request to that route. This connection request is output to all of the possible routes of connection. Further, for another sub-network, this connection request is output to the mediator of that sub-network.

At this time, when the node is a node of a terminal in the network and not the destination of connection and when the mediator is a mediator managing the sub-network and there is no route on which the destination of connection might exist after this, the search for a route is ended.

By successively carrying out such a heuristic search, the finally desired nodes are connected to each other.

After the route between desired nodes is found, that is, they are substantially connected, any processing is carried out by using that route and by the connection request data thereof.

For example, it is possible to fixedly secure the route, maintain the line, and continuously communicate. Further, it is also possible to successively transmit the data of the packet format and perform the data transfer according to that route.

Also, when the object of connection of nodes is a request for certain processing other than the data transfer, preferably the control signal of that processing is added together with the connection request. The desired processing can be carried out at the node of the destination of connection based on the control signal immediately after a point of time when the connection route is secured, that is, the connection request is transmitted to the destination of connection.

Further, by immediately transmitting the result of that processing, it is also possible to quickly receive the processing result. For example, requests for the shopping environment, change of environment, requests for some sort of information, instructions for charging, changing the store, and ending the processing, etc. with respect to the video shopping server are executed if the control code thereof is added to the connection request. The result of execution thereof can be immediately obtained. The same is also true for requests for transmission of AV data to the video server, control of transmission such as fast forward, rewind, and pause, etc. or requests for distribution of games to a game server.

Note that this search is carried out based on the logical node name, in other words, information which is only managed locally, therefore there is a possibility that a plurality of nodes will be found in the entire network as a result.

In such a case, information for specifying the node is further transmitted. After the destination of connection is uniquely specified, the communication processing is commenced. Note that the method of specification of the node may be any other method. Generally, it is preferable to set up some sort of node evaluation method and select the node by this evaluation method. Specifically, for example, it is also possible to set data that indicates the attribute of the node in the connection request and compares the data and the attribute of the searched node to make the evaluation or use the distance of the route as the evaluation value and select the node having the shortest route.

Note that when a plurality of destinations of connection are found in this way, there are cases where it is sufficient to connect to any of the destinations of connection without having to specify one of them. In such a case, any node may be appropriately selected by for example the method of selecting the node having the shorter route.

Further, there are also cases where it is desired to connect a plurality of destinations of connection and instruct parallel processing or communicate simultaneously. In such a case, it is also possible to make the routes to all of the nodes found valid and perform the following processing.

Further, there are cases where a plurality of routes are found for the same connection destination node as a result of the search. In this case well, any route can be selected in accordance with the object of connection, transfer data, etc. For example, when the obtained routes are routes of the same format, for example all are routes via a public line, any one may be selected.

Further, when the obtained routes are routes of different formats, for example, a public line and ISDN line or a cable TV network and a network via a public telephone line, a preferred transmission route is selected in accordance with the type of the data to be transferred.

Further, it is also possible to use the obtained plurality of routes according to some connection objects. For example, when a VOD service is requested, it is also possible to transmit a request for AV data and processing commands such as fast forward and rewind via the public telephone line and receive the distribution of the AV data by utilizing the cable TV network or a network via a communication satellite.

Furthermore, there are also cases where the specified connection destination node not only does not exist within the search range in that mediator, but also can no longer exist on the network due to for example rearrangement of the network, update of information, or replacement of the providers. In such a case, an alternate node, if any, is connected to by the network mediation processing, explained later.

In this way, in the network 310, the network is managed for every sub-network.

Accordingly, a change of the node structure such as the addition or deletion of a node may be carried out independently for every sub-network. Therefore, the flexibility with respect to a change of the network structure becomes high.

Particularly in the case of an information provision service, it becomes possible to easily make a change such as addition and deletion to and from space for the installation of the user node and disposition of the server node and therefore a higher quality service can be provided.

Further, an increase of the management cost of the network can be prevented.

Further, the processing for connection is carried out by dynamically obtaining the spatial information at the time of connection - not just depending upon the spatial information determined in advance. Therefore, the spatial management is flexible. Namely, it is not just possible to connect to a destination of connection which is known in advance. It is also possible to communicate with a destination of connection existing at the time of the connection. Further, it is possible to perform the search and connect by the properties of the node etc.

Further, it is possible to dynamically add or delete the node to and from space in this way, therefore mobile computing can be effectively handled.

Further, the search for the node at the time of connection can be carried out in such a flexible space by crossing the sub-nets and different networks.

Since it becomes possible to connect desired nodes by a plurality of routes, it becomes possible to select networks of a plurality of different formats for every type of for example transmission data to perform the data transmission and the network can be more effectively utilized by linking the routes. For example, at the time of VOD service etc., depending on the type of the data to be communicated, a multiplex network where the video data is sent by satellite communication or cable and the control data is sent by the internet or a telephone line can be realized.

### Spatial Management by Logical Network

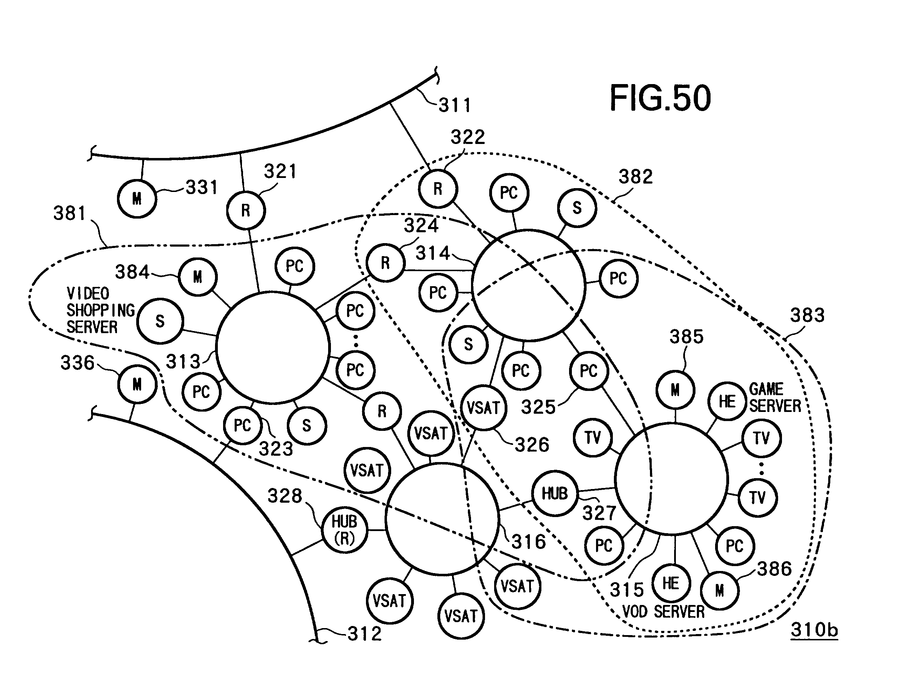

The spatial management of such a network is not limited to the case dependent upon a physical network configuration as shown in Fig. 1 and may be carried out by units of any logical configuration as shown in Fig. 50.

An explanation will be given next of such a network configuration by referring to Fig. 50.

Figure 50 is a view of the state where a logical sub-network in accordance with the domain structure of the service to be provided is configured on the physical network configuration. In Fig. 50, three logical sub-networks 381 to 383 exist for every provided service in a network 310b.

A video shopping service network 381 is constituted by a sub-network 313 and part of the nodes of sub-networks 314, 315, and 316. A video shopping environment is provided from a video shopping provision server 332 on the sub-network 313 to the nodes. In this environment, instructions such as a shop tour, product data request, purchase, and payment are transmitted from the nodes to the server 332.

The video-on-demand (VOD) service 382 is a network configured by the sub-network 315 and part of the sub-networks 314 and 316. The video data is sent from the VOD server 352 constituted by the head end device on the sub-net 315 to each node in accordance with a request from each node.

A game service network 383 is configured by the sub-networks 314 and 315. A game environment is sent to each node from the game server 353 configured on the sub-net 315 in accordance with a request from each node.

Mediators 384 to 386 are provided for each of these service networks. These mediators 384 to 386 manage the information of the nodes by the logical node structure in the logical network and the logical node name thereof and manage the information of the nearby logical sub-network adjoining it in the logical sub-network structure, that is, which can be directly connected. Accordingly, by using these logical node name and logical sub-network, the transmission of the data between any nodes is managed by exactly the same space search method as that mentioned above.

Note that, at this time, in the mediators 384 to 386, the configuration of these logical nodes and sub-networks and the correspondence of them on the physical networks are managed by separate reference tables etc.

Further, when such a logical sub-network is configured, there are also cases where one physical node is managed on a plurality of logical sub-networks, but such a state can be permitted. There is no disadvantage with this at all.

Further, there are also cases where nodes in the same logical sub-network exist on different physical networks, but since the correspondence with physical networks is managed by the mediator, this is also not a disadvantage.

In this way, if the network is managed by using the logical sub-network configuration and logical nodes, the network management matching the structure of the domain of the service is possible without being limited by the physical structure of the related art.

Spatial management, searches, and management of connections are possible by not only the physical node name, but also the logical node name and the logical network space.

### Mananagement of Program Module

Further, in this network system, it is possible to manage the program module on the network and operate a network wide dispersed processing system etc.

For this purpose, first, when for example the mediator monitors the node as mentioned above, it searches for the location of the program module loaded on the node to manage the module.

The program module is dynamically managed by the management of the reference table among nodes. At this time, preferably the reference to the physical node and the program module is expressed by a plurality of reference routes so that the communication route can be selectively used in accordance with the type of communication (specific one such as control, data transfer, or charging processing) and the type of the data (specific one such as the control data, video data, or charging information).

Then, at the time of a search, the program module existing on the node is treated as a type of property of the node for the search of the node or program module. Specifically, the module is searched for based on the module name, module class name, or module designation by functional keyword.

By making such a search possible, a search for a module becomes possible via a search of a node. It also becomes possible to load the program module of a certain node on another node. Namely, network wide dynamic dispersed processing can be carried out by appropriately loading the program module on any node on the network.

In this way, in this network system, at the most significant level, the network can be managed by three layers, that is, a node structure of the physical local area, a logical node structural level, and the structure of the program module.

Further, spatial management for connection can be also carried out in the node name set by the program module.

### Example of Specific Configuration of Search Data

Next, an explanation will be given of a specific method of construction of such a network system.

As explained above, in this network, the communication can be carried out by any system and format. There is no limit to the format of the data as well. However, for example, the transfer of the network management information and the transfer of the control information are preferably carried out by substantially successively transferring data of a packet format.

In the present embodiment, such a communication carried out among nodes will be referred to as a "message transfer". Particularly, the information for network connection transferred between the mediators mentioned above will be referred to as a "token". Namely, this token is transferred placed on the message for the connection of the node.

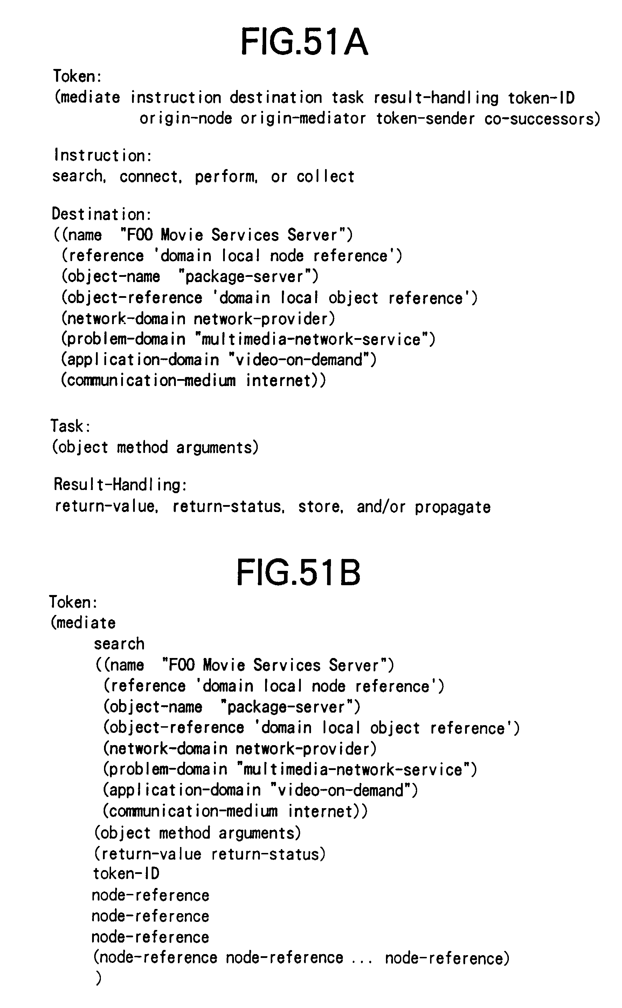

An explanation will be given next of the token by referring to Fig. 51.

Figure 51 is a view for explaining a token. Figure 51A shows the items contained in the token and shows the content of the items having contents other than the node reference. Further, Fig. 51B is a view of an example of the actually packaged token.

As shown in Fig. 51, a token usually contains various information such as instructions, a destination, task, result-handling, token-ID, origin-node, origin-mediator, token-sender and co-successors.

Note that the mediator of the consecutive stage through which the token from the current mediator is propagated will be referred to as a "successor", while the original mediator through which the token is propagated to the current mediator, that is, the mediator of the former stage, will be referred to as a "predecessor".

As the instruction information, commands of "search", "connect", "perform", and "collect" are set.

"Search" is a command for searching for the target object indicated in the destination.

"Connect" is a command for connection to the target object indicated at the destination.

"Collect" is a command for collecting the target objects indicated at the destination.

"Perform" is a command for execution of a task by the target object indicated at the destination.

The destination information is various information for specifying the target node or object that the token intends to search for, connect, or perform a certain processing on and is information such as the name, reference, object name, object reference, network domain, program domain, application domain, and communication media. Note that, in the token, any information among this information is selectively designated.

The name and reference indicate the target node. When this is a token for connection with respect to the information server 220 of the system as explained by referring to Fig. 2, a node name such as "FOO Movie Services server" is described as the name.

The object name and object reference indicate the program module, that is, the target object. For example, in the example shown in Fig. 51, the server unit 222₋₁ for the package-server 223₋₁ of the information server 220 shown in Fig. 25 is designated as the target object.

The network domain indicates the format of the network to which the desired node belongs such as the local area network and cable television network.

The program domain indicates the functional format realized by the desired node such as the multimedia mutual communication system.

The application domain indicates the form of the application realized by the desired node such as a video shopping service or video-on-demand service.

The "task" is for prescribing the task carried out at the destination node where the instruction is carried out and contains information such as the "object", "method", and "argument".

The "object" is the program module managed on the network by the node specified by the search and the identification in that node, the "method" is the function of the module, and the "argument" is the data used in that method.

This task is executed at the arrival node, whereby the program is called up and the data is transferred between the origin-node and the arrival node.

The result-handling information is information for designating the processing such as return of a result value (return-value), return of the result status (return-status), storage (store) of the result (value and status) , and propagation of the result to not only the origin-node (mediator), but also the mediators in the middle.

The result value is the node detail information resulting from the search or object information or the result of the execution of the task.

The result status is the status of the search and task execution, that is, completion, failure of search, error end, etc.

These results (value and status) are returned by transmitting the token holding them to the predetermined mediator.

Further, a plurality of the processing can be designated. For example, if store&propagate is designated, processing for storing the result in mediators in the middle can be designated.

Note that, according to the form of processing for the network connection, the result of the search (value and status) is finally substantially obtained as a plurality of routes by the relay of a plurality of arrival nodes and intermediate mediators.

A plurality of these nodes are used according to need or used after appropriately selecting them according to the node information and communication media information thereof.

The token-ID information is the ID information given to the token in the origin-node.

The origin-node information and the origin-mediator information are information indicating the source of the token.

The token-sender information is the information indicating the sender of the token in each transfer between nodes.

The co-successor information is the information indicating the mediator of the same level found as the mediator of the consecutive stage from one mediator and is the information for notifying a brother mediator of the other brother mediator.

### Example of Specific Configuration of Mediator

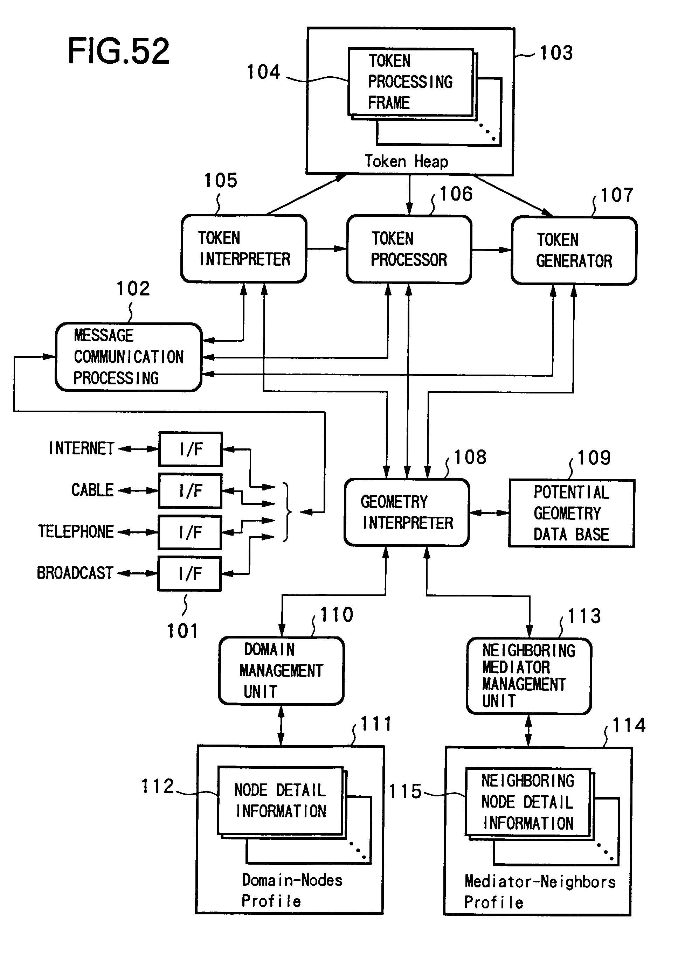

Next, the mediator which successively transfers such tokens and, at the same time, manages the network will be explained in detail by referring to Figs. 52 to 56.

Figure 52 is a view of the specific configuration of a mediator.

The mediator has a network interface 101, a message communication processing 102, a token heap 103, a token interpreter 105, a token processor 106, a token generator 107, a geometry interpreter 108, a potential geometry data base 109, a domain management unit 110, a domain node profile 111, a neighboring mediator management unit 113, and a neighboring mediator profile 114.

The interface (I/F) 101 is the interface with networks and is provided with an I/F portion carrying out message transfer with the internet, cable, telephone net, broadcast net, etc.

The message communication processing unit 102 actually carries out the communication between mediators via the I/F 101 or receives the request from a general node and transmits the result. In the communication between mediators, the message communication is carried out. The above token is contained in the message.

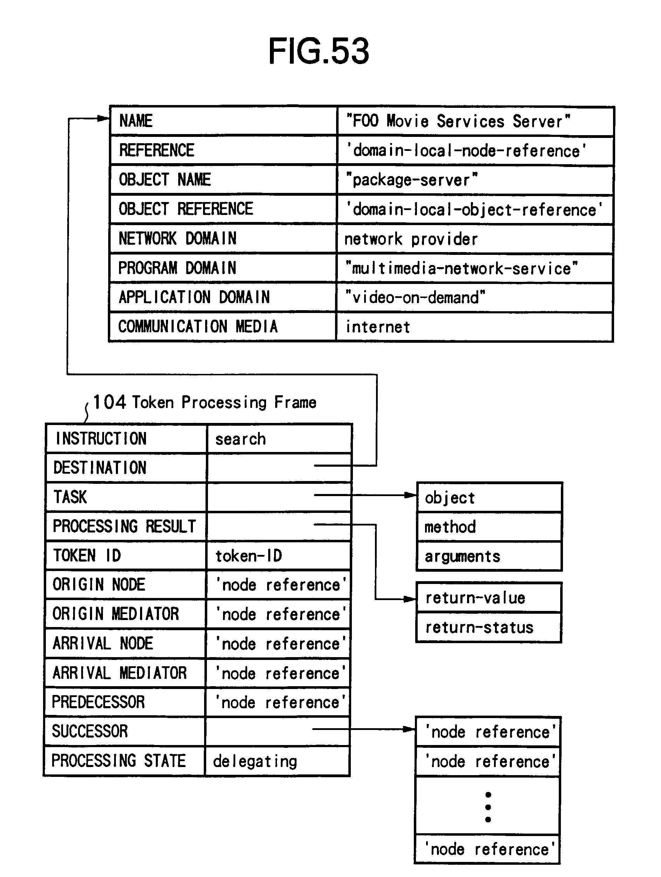

The token interpreter 105 generates a token processing frame 104 having a configuration as shown in Fig. 53 on the token heap 103 based on the token received at the message communication processing unit 102. This token processing frame 104 is generated on a memory as an execution image.

The main items of the content of the token processing frame 104 shown in Fig. 53 are the same as those of the above token.

The arrival node information and the arrival mediator information are information respectively indicating the node at which the data arrived based on the destination information and the last mediator specifying that node.

The predecessor and the successor are mediators of the former stage and the consecutive stage for processing the token as mentioned above.

The processing state indicates the state at the time of the token processing.

Note that, in the figure, "node reference" is the reference on the network.

Note that, in the token interpreter 105, at this time, a token is not generated if the token is the same as one which has been already generated or an unrequired token.

The token processor 106 carries out the status management of the token and, at the same time, carries out the interpretation, execution, and control of the token.

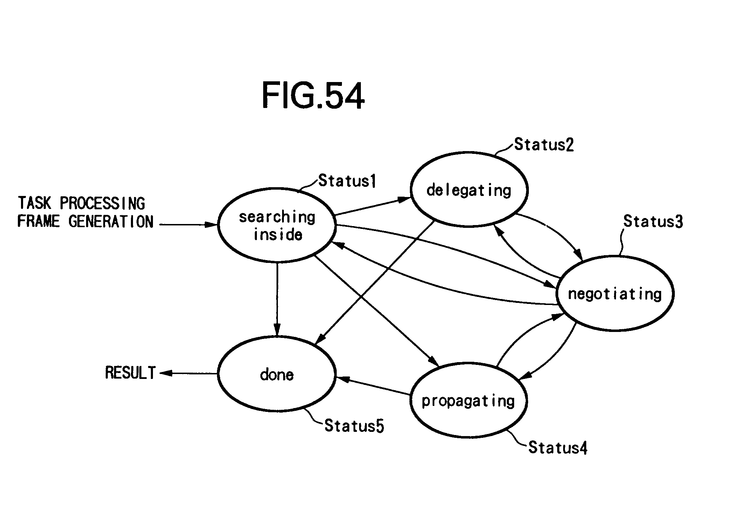

An explanation will be given next of the transition of the status at the time of token processing by referring to Fig. 54.

Figure 54 is a view of the transition states of the processing state.

In the token processor 106, when a task processing frame 104 is generated from the token interpreter 105, first a search is carried out in the same territory, that is, the sub-network managed by the current mediator (internal search state Status 1). When the search is completed in the territory, the routine shifts to the complete state Status 5.

Where the search is not completed in the territory, successors are selected, the search content is sent to these successors, the processing for the search is transferred, and the mediator shifts to the transfer state Status 2. When the result is obtained from the successor, the routine shifts to the completion state Status 5.

Where the instruction is "collect", a further search is requested to the successor and the routine shifts to a propagation state Status 4. When the result is obtained from the successor, the result is reflected on the node information in the mediator and the routine shifts to the completion state Status 5.

When in the search state Status 1, the transfer state Status 2, and the propagation state Status 4, in order to further augment the result content by the result state obtained from the successor, verification of the content is requested to the co-successors and the routine shifts to a negotiation state Status 3. Alternatively, a test of construction of the desired result by replacing insufficient results with each other is requested to co-successors and the routine shifts to the negotiation state Status 3. When the result is obtained from co-successors, the routine shifts to each original state.

Note that the processing state of these tokens is managed in the token processing frame for every token. Even when a plurality of tokens are simultaneously received and processed, they can be adequately processed.

Then, when finally the resolving is obtained and the connection is obtained, the result is returned from the completion state Status 5 and the task is terminated.

The token generator 107 generates a token based on the content of the token processing frame 104. When it is desired to request subsequent processing of the token to another mediator, the token generator generates a token based on the current content of the token processing frame and transmits this to a successor or co-successors.

The geometry interpreter 108 recognizes and determines the relative positional relationship of mediator nodes based on the data stored in the potential geometry data base 109. Specifically, processing for determining the next destination of transmission (successor) is carried out for a certain token. The determination is made by defining the mediator with a close distance from the home mediator and having a long distance from the origin-domain or mediator (predecessor) of the former stage as the successor paying attention to for example the domain designated as the destination of the token. Note that the distance D is calculated by (32).

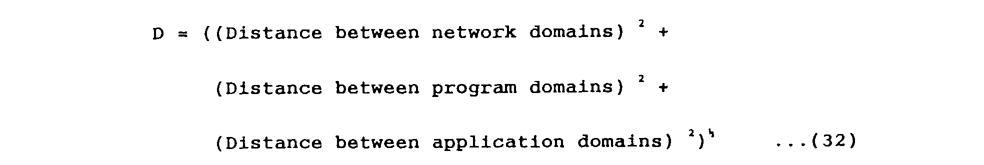

The potential geometry data base 109 is a knowledge base in which the geometry of the domain is stored and further the data expressing the distance between domains is stored.

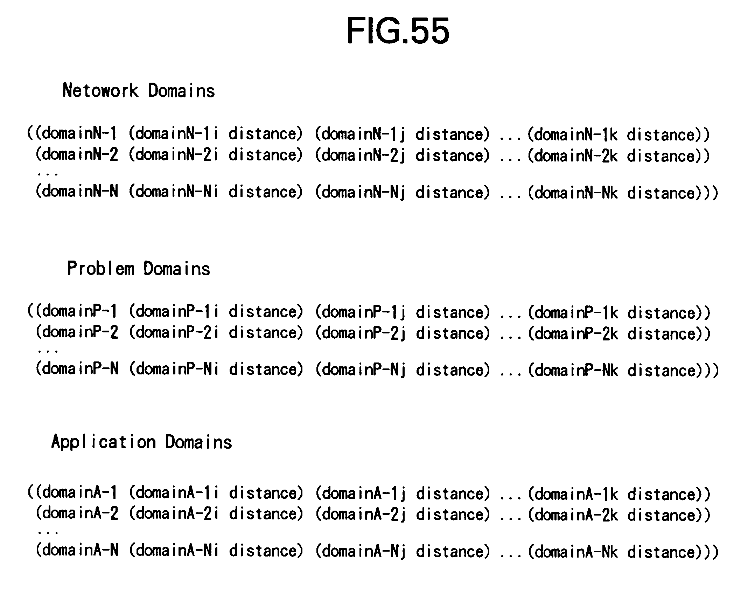

The example of the content of this potential geometry data base 109 is shown in Fig. 55.

As shown in Fig. 55, in the potential geometry data base 109, for every three types of domains, that is, the network domain, program domain, and application domain, the distance between them is stored.

The next destination (successor) of transmission of the token is determined from among neighboring mediators based on this knowledge.

The domain management unit 110 is a management unit for managing its own territory. It monitors the addition or deletion of a node in the territory (within the management range) and updates the content of the domain node profile based on this.

The domain management unit 110 corresponds to the relationship of the mediator 331 with respect to the sub-network 311 and the mediator 322 with respect to the sub-network 313 in the configuration shown in for example Fig. 1.

The domain node profile 111 is obtained by storage of node detail information 112 and is referenced by the domain management unit 110.

The neighboring mediator management unit 113 manages the reference of the neighboring mediator.

The neighboring mediator management unit updates the content of the neighboring mediator profile by the recognition of another mediator in the territory by the domain management unit or the notification of co-successors from the predecessor and the notification of a new mediator as the result information from the successor.

The neighboring mediator profile 114 is obtained by storage of the neighboring node detail information 115 and is referenced by the neighboring mediator management unit 113.

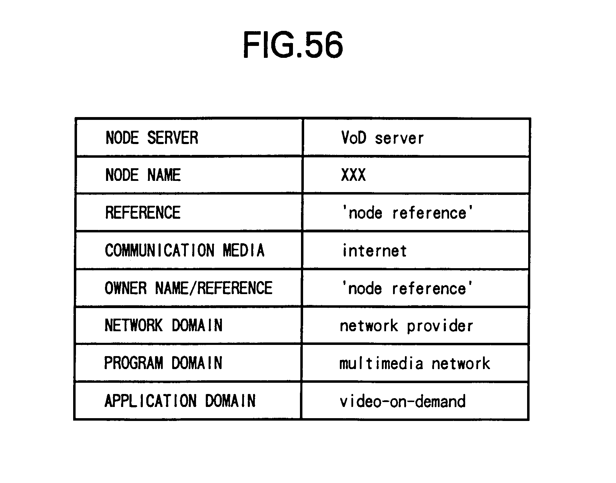

Figure 56 is a view of the content of the node detail information 112 stored in the domain node profile 111 and the content of the neighboring node detail information 115 stored in the neighboring mediator management unit 113.

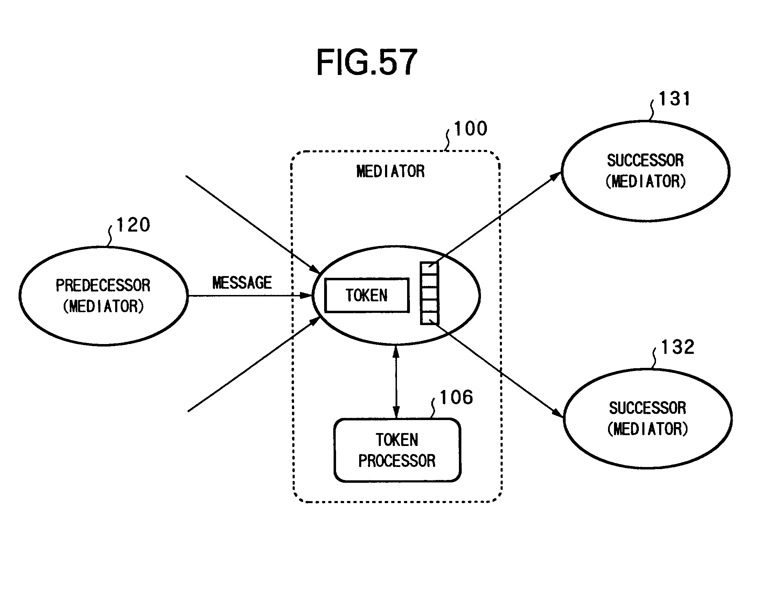

An explanation will be given next of the state where the above token is successively propagated in a mediator having such a configuration by referring to Fig. 57.

Figure 57 is a schematic view expressing the propagation in the mediation processing.

In Fig. 57, paying attention to the mediator 100, many tokens are successively simultaneously transmitted from a plurality of mediators (predecessors) of the former stage by the message transmission. In the mediator 100, this is interpreted and the token processing frame 104 is generated on the token heap 103. At this time, tokens arriving in duplicate etc. are eliminated at the token interpreter 105. Then, tokens registered in the token processing frame are successively processed at the token processor 106.

Then, when processing has been suitably carried out and the next transmission destination is determined, the token generator 107 generates a token and transmits it to the next mediator (successor).

Note that also the exchange of tokens for carrying out the negotiation processing is similarly carried out between mediators of the same stage.

Further, also tokens for returning the result (value and status) are transmitted between mediators.

In the processing for propagation in this method, the token is sent to the successor by assuming the suitably continued processing. Accordingly, during the period until the final result is obtained, the linkage of these mediators is held based on this assumption and processing is carried out based on the assumption that the state of connection finally giving a significant result is selected.

By using the token and mediator having for example such a configuration, a network system as mentioned above and an information distribution service etc. on the network system can be more flexibly realized.

### Management of Information Packages

As explained above, the information package refers to the content material and the other information package or is referenced by another information package. Further, the content material is also referenced by the information package. These references are formed by the generation of an information package such as authoring of content and become complex in structure. On the other hand, there are also information packages which are used over a long period of time.

While such information packages are generated, some will become unnecessary. It is however extremely difficult to distinguish between them. This is because it is necessary to judge if an information package can be disposed of by detecting when it is no longer referenced based on such a complex relationship of references.

When an unnecessary information package is left standing, this means that the hard disk or other storage device will continue to be filled up by the amount of newly generated packages. This is not practical as a resolving.

Further, when trying to dispose of the information package without managing the relationship of references, it is necessary to control the determination of validity procedurally. The processing therefore becomes complicated and, on top of this, there is a possibility of erroneous disposal. In particular, this is not suitable in a dynamic environment where information packages are newly successively generated.

Therefore, an explanation will be given next of a method of management of an information package which enables such a state of references to be suitably grasped and the information packages to be suitably disposed of.

The information consumer 260 etc. uses the information package temporarily. Further, the information package is used copied to the site (apparatus) of the information user temporarily. Further, in this type of use, the information user side frequently easily stops the reference. Accordingly, there is no particular need to manage the information package managed by the information user. Neither is it suitable as a subject of management.

On the other hand, in use by the information user, in most cases, the server side deals with the processing at the time of use, so the information package on the server is in the reference state.

Due to this, the entities of the more permanent information packages on the server are covered by the reference management.

In the management on the server, starting from when the content material is generated, all operations at the service provider side, for example, the storage in the server, the copying to dispersed servers, and the transfer to other providers are managed.

Further, where the entity of an information package held at the information user side for a long period is disposed of from the server or where a certain information package being referenced is erroneously disposed on the server and further where an information package having an old content is intentionally forcibly disposed of, this means that there is nothing which can be referenced in the link-part of the information package referring to the disposed information package. Such a case is dealt with by dynamically specifying the destination of reference by the function of a network search (network mediation) of the destination of reference as mentioned above.

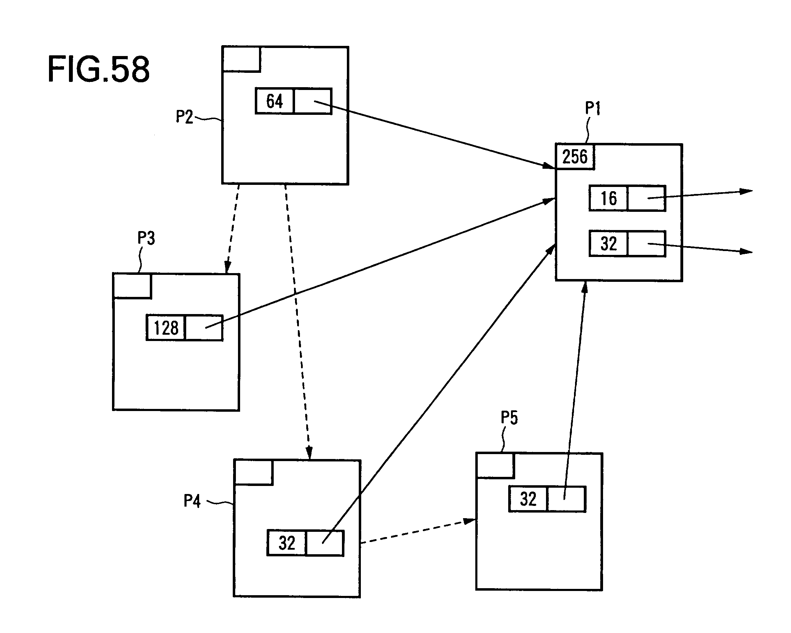

Below, the method of management of an information package will be explained in detail by referring to Fig. 58.

Basically, this method of management is a method referred to as a "weighted reference count". It weights the references and manages the referenced object by the total of the weights.

As the weighting for a reference, preferably a value of a power of 2 is used. In the following specific example, the total weight is assumed to be 256.

First, assume that the information package P1 is generated and that the information package P2 is generated by using this information package P1. (Alternatively, assume that the information package P1 is generated in the process of processing the information package P2 and that this is referenced). At this time, a referenced object 256 is set in the information package P1. The weight 256 is added to the reference to the information package P1 in the information package P2.

When the information package P3 is generated based on the information of the information package P2 and the information package P1 is referenced from the information package P3, a half of the weight of the information package P2 is given from this. Each weight is therefore made 128.

Further, when a reference is transferred from the information package P2 to the information package P4, the weight of each becomes 64. When the reference is further transferred from the information package P4 to the information package P5, the weight becomes 32.

By doing this, the total weight of the reference side and the weight of the referenced object coincide at all stages.

Then, when the information package is erased, if another information package is referenced, the weight thereof is given to the information package as the destination of reference, and the reference weight thereof is subtracted from the weight of the referenced object. For example, when the information package P4 is erased, the weight 32 thereof is subtracted from the referenced object weight of the information package P1 and the weight becomes 224. When the information package P2, the information package P3, and the information package P5 are erased, the referenced object weight of the information package P1 becomes 0. It is seen that there is no referenced object and it becomes possible to erase the information package P1. Such an information package having 0 referenced object weight is recorded in a zero reference table.

When there are references to other information packages in the information package P1, for example, references of weights 16 and 32, the referenced object weights of the destination of reference are subtracted by 16 and 32.

The processing is successively propagated in this way.

A value of, for example, -1, is specially given to a top level information package as the referenced object weight. An information package which is in service is processed in this way. An information package which is no longer in service and which is no longer referenced from other information packages is registered in a zero reference table.

The zero reference table is periodically checked, for example, one time a day. When the actual referenced object weight of the registered information package is 0, that information package is erased. Further, when the actual referenced object weight is not 0, the package is removed from the zero reference table.

Such a delay is provided in consideration of the asynchronicity of systems and for preventing erroneous erasure.

Note that, when a reference of a weight 1 is transferred to another information package, since 1 cannot be divided, the coincidence of the weight values of the reference side and the referenced object side can no longer be guaranteed. In this case, the reference weights of the two are made 0. In this case, even if the referenced object disappears, the referenced object weight does not become 0, so the information package is not erased, but remains in the storage device.

Further, where the relationship of references has a loop structure, this structure cannot be eliminated by the above weight method.

For this reason, information packages which are now being used or having references are all tracked at a frequency such as once a day and a specific mark is added to them. Thereafter, all storage regions are checked and information packages not given the mark are erased. At this time, the mark is erased from the information packages given the mark. This mark and sweep method is large in cost, but can reliably eliminate unnecessary information packages.

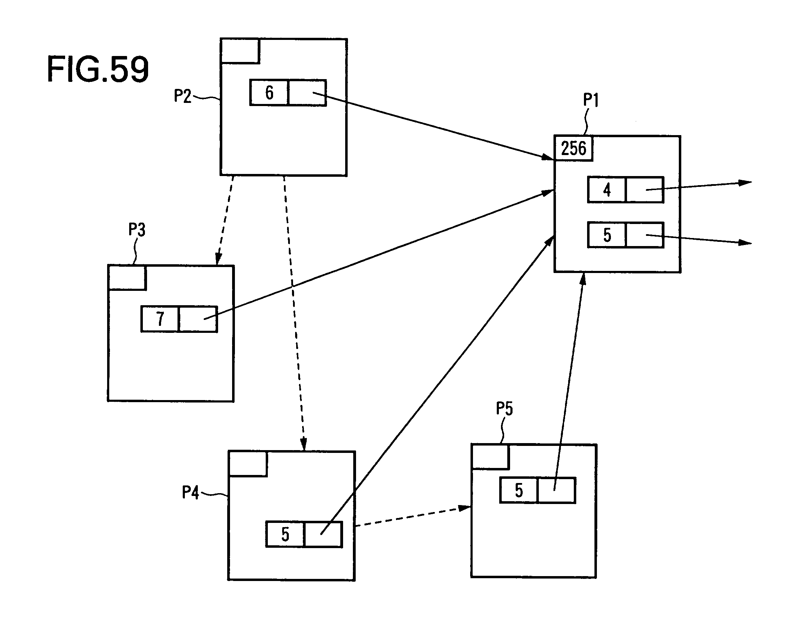

Note that, as the weighting for a reference, preferably a value of a power of 2 is used as mentioned above. In this case, as shown in Fig. 59, it is also possible to express the weight by the power in the information package. By doing this, the number of bits used for expressing it can be reduced. Note that a referenced object cannot be expressed by a power, so is handled by an actual value.

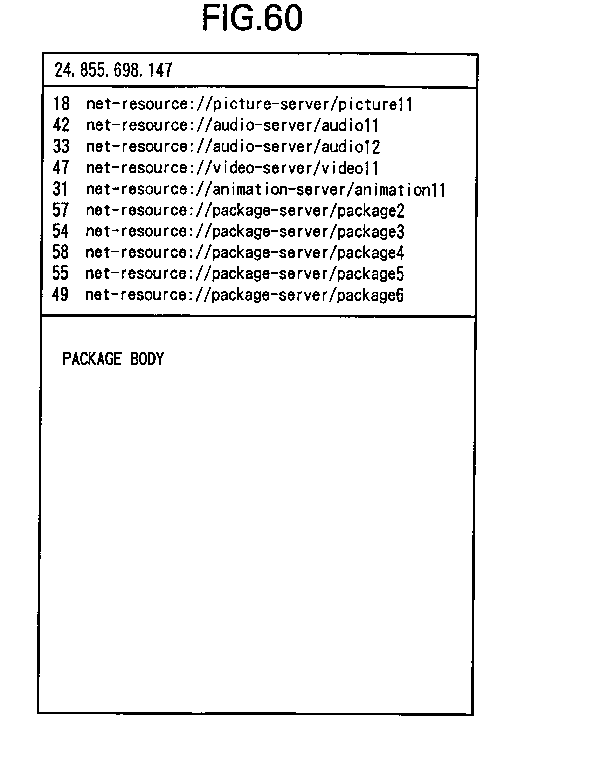

In an actual information package, this reference weight and the referenced object weight are added as the header to the information package as shown in Fig. 60.

Namely, when storing an information package in a server for a data base, the link information of the link-part is taken out and added as the reference information together with the reference weight or the weight of the referenced object is added as the header to the body of the information package as the referenced object information. Then, the processing of references and weights mentioned above is carried out on this header.

Note that this reference information is for storage, therefore the weight value is not circulated to the information consumer 260.

### Example of Other Information Packages

In the above embodiment, the present invention was explained by using first to fourth information packages. This type of information package having any function and content may be freely generated and transmitted on the network. Various formats can be considered. An explanation will be made of the configuration of some characteristic information packages other than the above first to fourth information packages and the processing based on the information packages.

### Nesting Type Information Package

The information package can be configured to fetch an independent information package and form another information package.

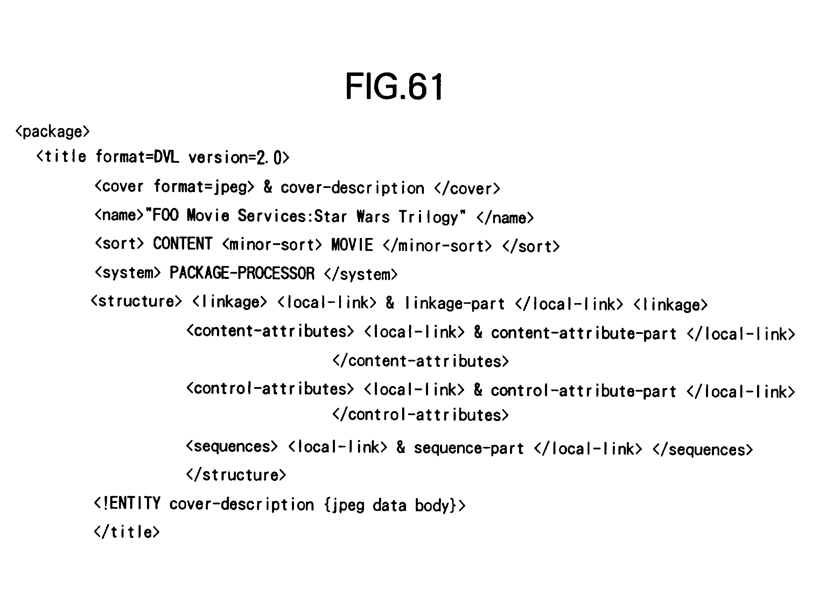

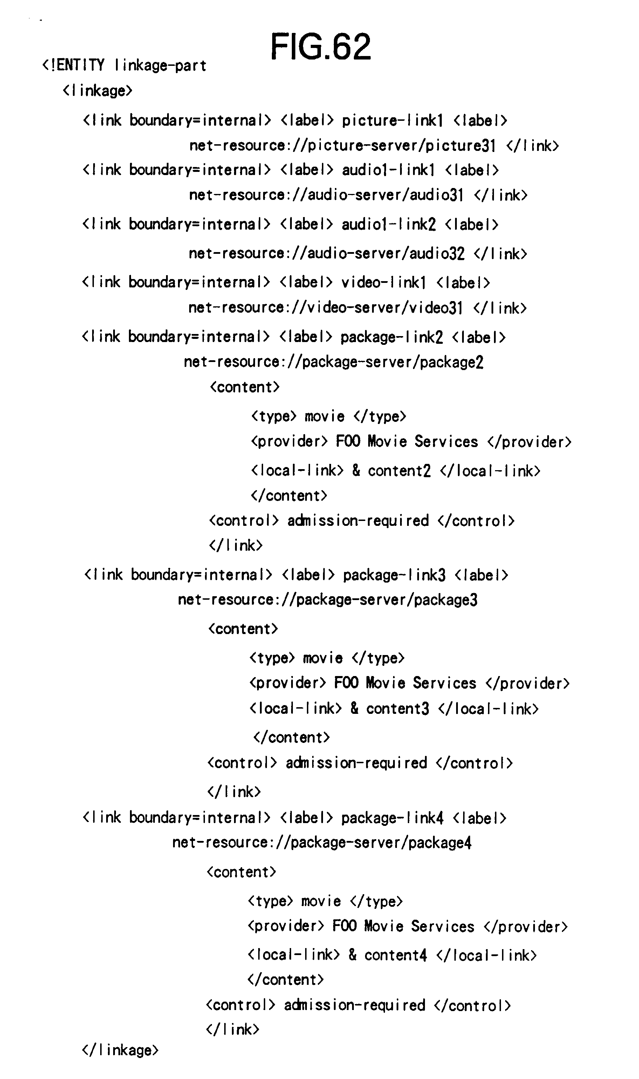

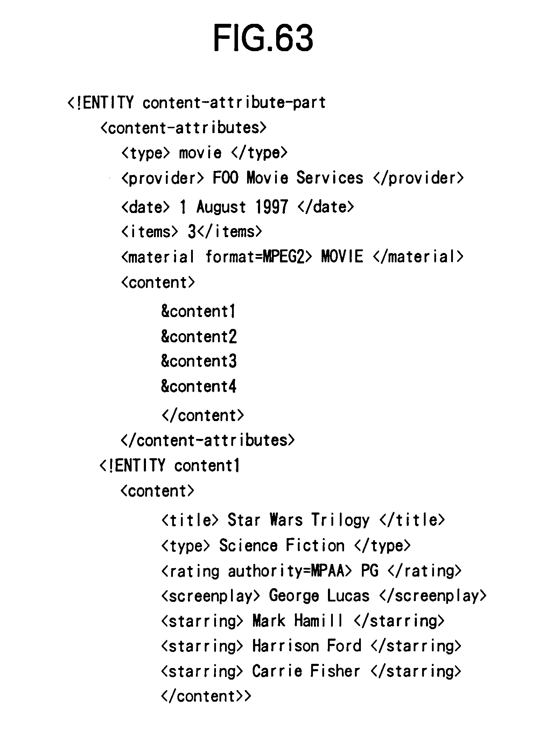

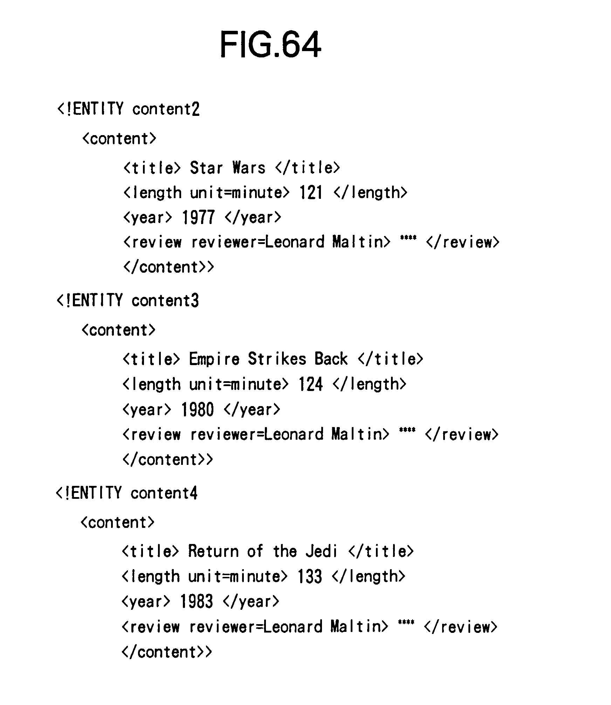

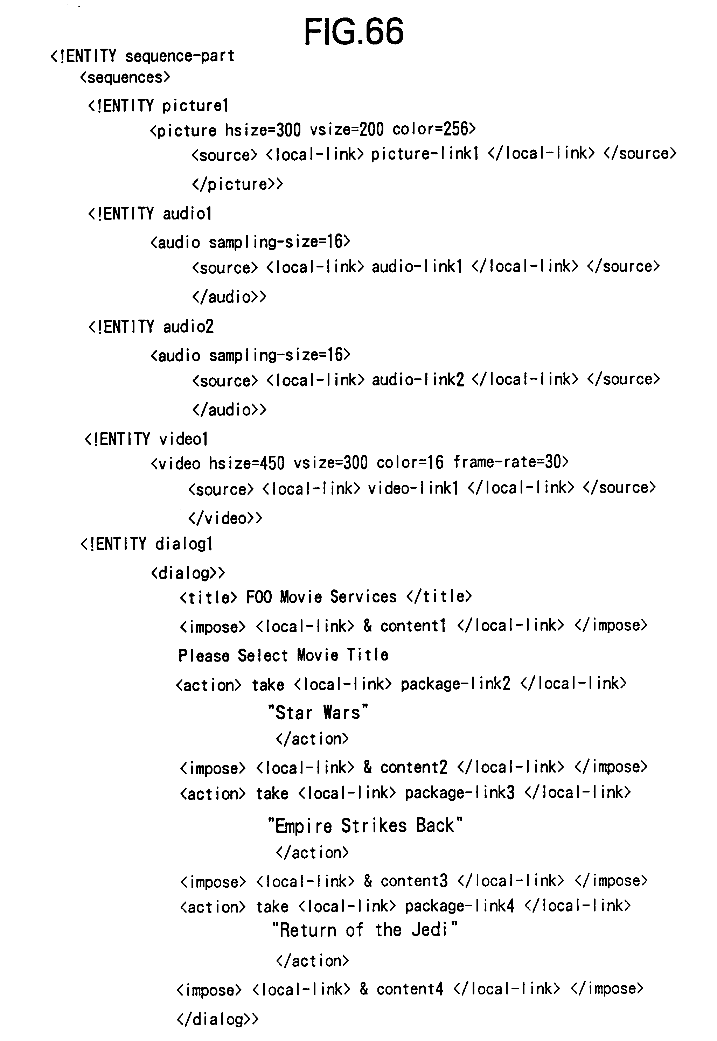

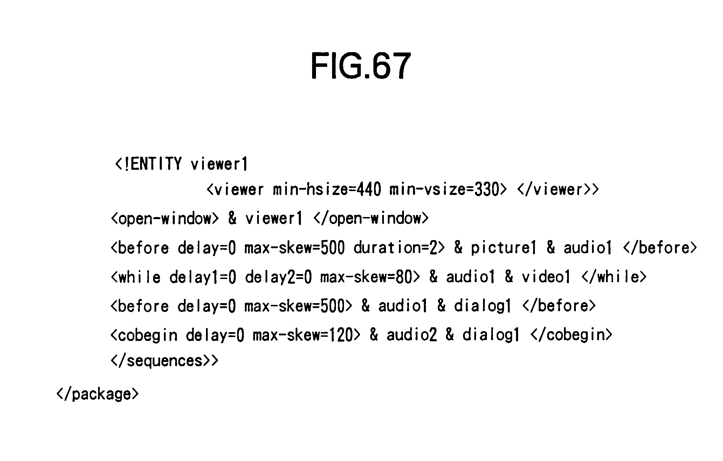

An example of such an information package is shown in Figs. 61 to 67.

In the example used here, there are three information packages Package 2, Package 3, and Package 4 corresponding to the above second information package having movie contents such as "Star Wars", "The Empire Strikes Back" and "Return of the Jedi". These are assembled to produce an information product called the "Star Wars Trilogy". The information package Package 1 shown in Figs. 61 to 67 is the list package for selecting the movie content.

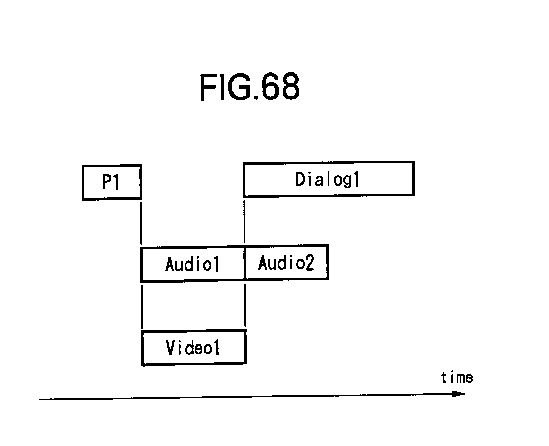

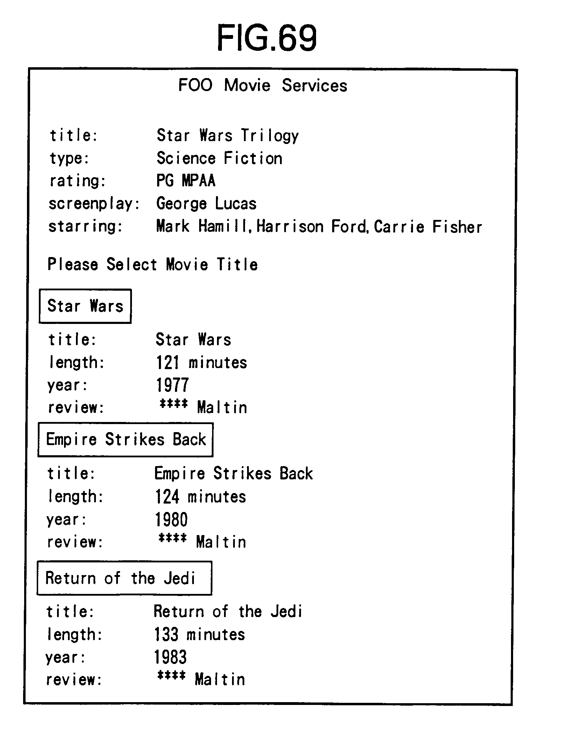

The flow of the sequence of this information package Package 1 is shown in Fig. 68, and the state of the dialog is shown in Fig. 69.

In the content of each stream, Picture 1 is the information and title screen, copyright display, etc., Audio 1 and Video 1 are streams for a brief explanation of the service and the content, Dialog 1 is the movie selection screen shown in Fig. 69, and Audio 2 and Animation 1 are the information for use of the selection screen.

Further, the links from this information package Package 1 to the information packages Package 2, Package 3, and Package4 are internal links.

When the information user obtains the information packages shown in Figs. 61 to 67, processing is carried out in the same way as that mentioned above and the sequence shown in Fig. 68 is displayed on the viewer. Then, when the user selects the information package Package 2 having for example the movie "The Empire Strikes Back" as its content by the dialog as shown in Fig. 69, the information package is requested to the information server and simultaneously a authentication package similar to the above mentioned third information package relating to authentication is transmitted to the information server.

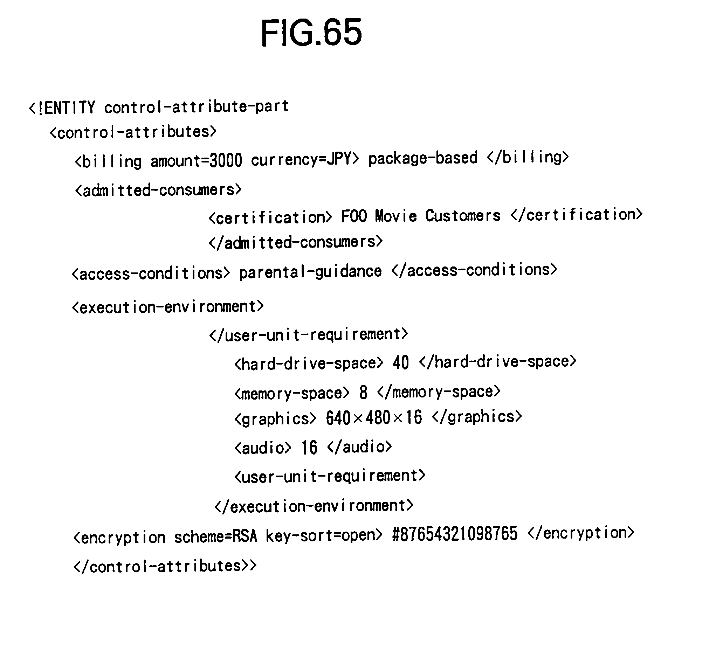

The information package having that movie as its content is transmitted based on this. Assuming, however, that the information package Package 2 is substantially the same as the second information package, usage-based charging is designated for this information package. However, as shown in the control attribute part shown in Fig. 65, the information package containing the information package Package 2 stipulates that 3,000 yen be charged per unit package. In such a case, the outermost charging stipulation, that is, the latter stipulation, is given priority.

As a result, once the information package Package 2 is certified, it is registered in the charging function of the server side that the charging processing has been already carried out based on the charging information of the information package Package 1 shown in Figs. 61 to 67. Therefore, at the time of the actual distribution of the stream, the charging function of the server side does not place any constraints on the stream transmission unlike the example of the operation explained above.

In this example, the providers of the information packages Package 1 and Package 2 are the same, so such a processing of authentication and charging is proper. Where the providers of Package 1 and Package 2 are different, for example, based on the difference of the providers, authentication between providers is generated (the authentication processing further extends to the provider of Package 1 at the time of authentication of Package 2). There, usage-based charging occurs from the provider of Package 2 to the provider of Package 1 (3,000 yen is billed to the information user from the provider of Package 1).

### Package Having Program

Next, an explanation will be given of an information package having a software program.

When such an information package is used, any program can be sent.

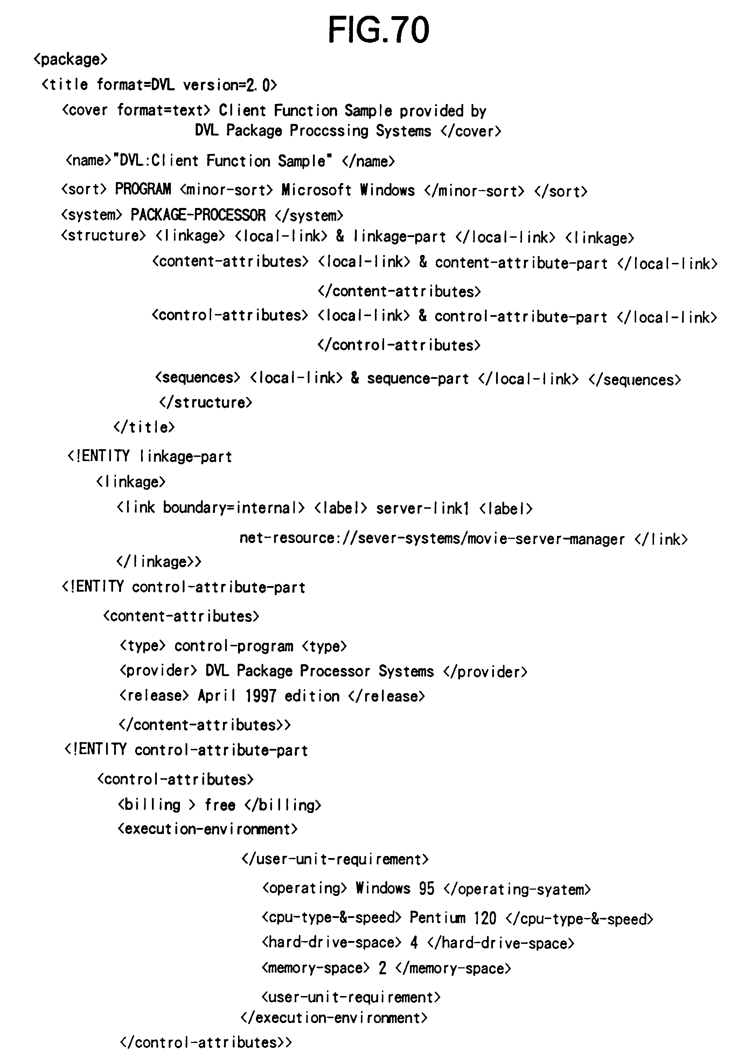

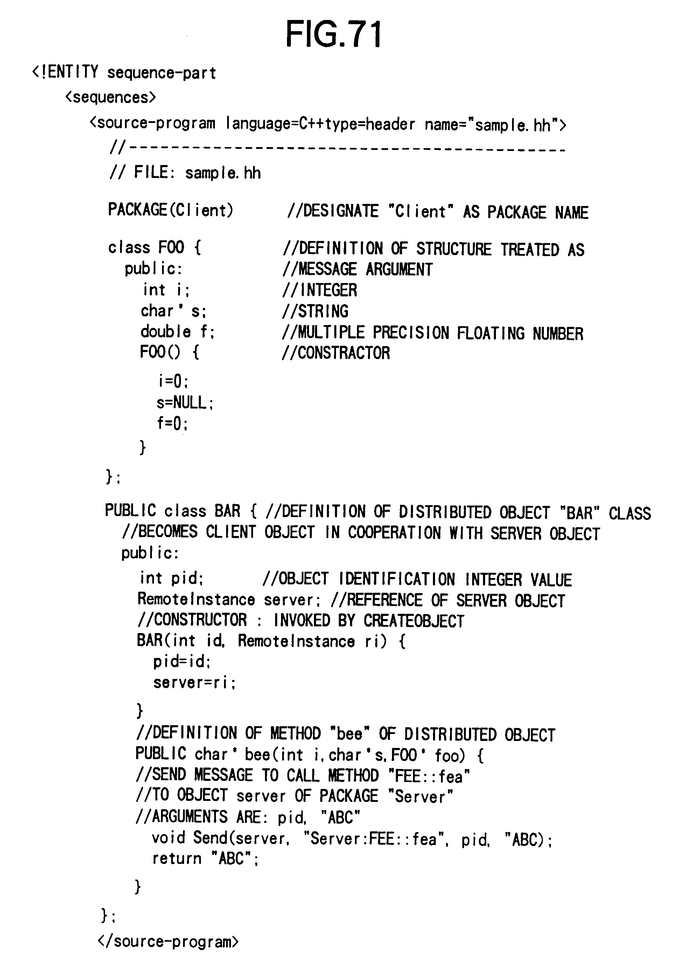

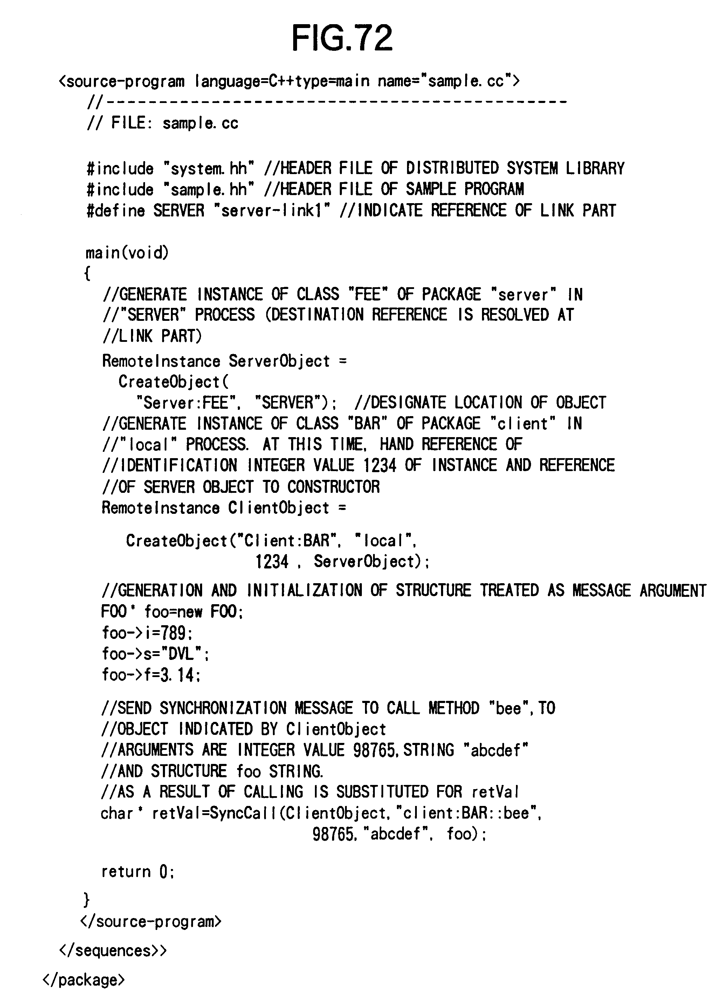

An example of such an information package is shown in Figs. 70 to 72.

In this information package, the first sort of the title-part becomes a "program".

Then, the program is given as the source program of C++ in the sequence description part. However, it is also possible to give the same by a compiled object code. In this case, the tag becomes <compile-program language=C++>.

Further, a program is generally constituted by a plurality of modules in many cases. In this case, it is also possible to form a package for every module, assemble them at the link part, and treat them as a single package as a whole. In this case, this configuration becomes the nesting type information package as mentioned above.

Further, in the charging, a fee in units of packages can be set in the case of buying the program. Further, when a user connects to the server for use of high speed computations, it is also possible to use a usage-based fee.

As the example of use of such an information package having a program, first, the distribution and purchase of a program can be mentioned.

When this program is a program distributed for utilization of a service from a service provider, the charge can for example be made free.

Further, when it is a program which is purchased from the network in place of a program which is purchased in the form of a CD-ROM of the related art, the charge may be made in units of packages and the program fee billed.

Further, an information package having such a program can also be used for services such as the use of a computation server.

Specifically, this is the case where, for example, a user program is distributed or ordered in order to perform high speed Fourier transformation, calculation of astronomical orbits, simulation of semiconductor processes, etc. by utilizing the server function of a high performance computer. In such a case, the charge is suitably usage-based based on the CPU processing time of the server computer used.

Further, an information package containing such a program is also used in a case of a dynamic download of functions relating to the network system as explained in the present embodiment.

For example, when obtaining a package having the content of the above second information package, if there is no program for processing this, the package processing unit of the information user obtains this program from the information server. The program is then started up and called up by the package processing unit.

More specifically, this is a case of the download of a program for controlling the usage-based charging used in the previous example of operation. By this, a "charging function" etc. can be generated and used at any site according to need.

In this case, this program is used for viewing the content, so normally no charging is made.

### Domain

Next, an explanation will be given of an information package having a domain.

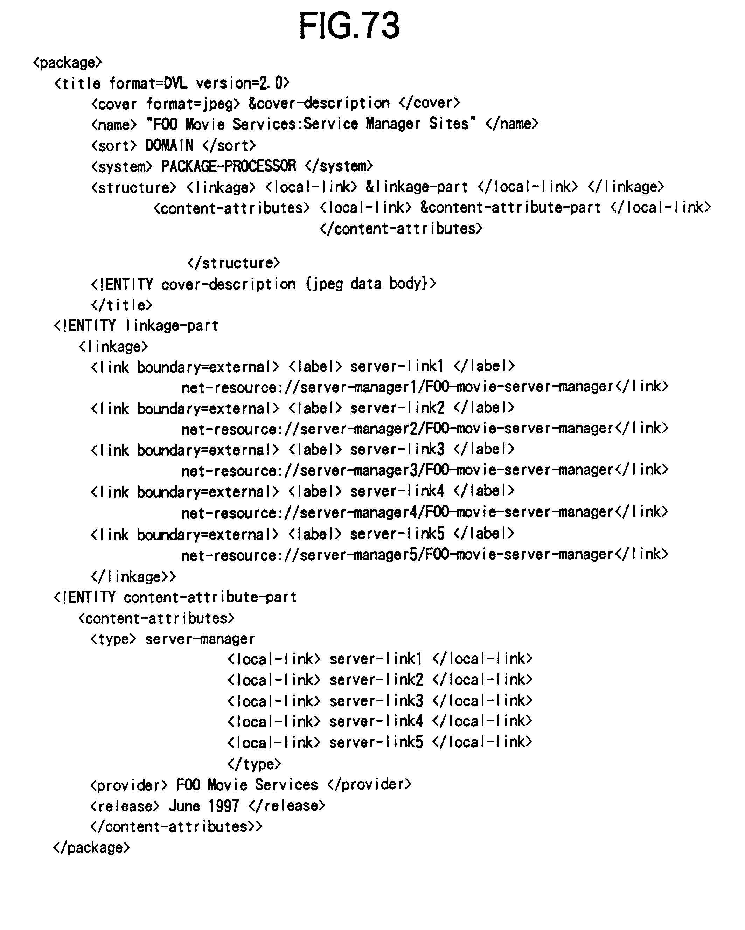

In this information package, the first sort of the title part is the "domain". A specific example of the information package is shown in Fig. 73.

This information package is for dealing with a set of links of content by referring to this per se from the outside.

At the service provider, it is used for customer management etc.

Further, at the information user, it can be used for classification of the service provider such as favorite providers, holding locations of the servers, holding information users having common interests, favorites, etc.

Further, the information package is sent from the service provider to the information user also for informing it of the location of the information server and the service content.

The example shown in Fig. 73 shows five locations of the service managers of the service provider (FOO Movie Services). This is transferred in advance to the information user at the time for example of subscribing to the service.

Note that, as illustrated in Fig. 73, such an information package becomes an information package without a control attribute part and the sequence description part. The information package can have such a configuration.

As explained above, according to the present invention, a network system and a data distribution method capable of adequately and suitably distributing various types of information via the network upon demand and further adequately providing information concerning the content, capable of adequately carrying out charging by a clear, common method, and thereby able to suitably handle electronic commerce via the network can be provided.

Further, the present invention can provide a recording medium on which a data package is recorded and which can be read by a computer where various types of information are recorded in a predetermined format which enables information concerning the content to be suitably provided and charging to be suitably carried out by a clear, common method and can be read by a computer connected to a network thereby enabling adequate and suitable distribution upon demand and enabling suitable use for electronic commerce via the network.

## Claims

1. A network system able to suitably distribute any content as a transactable product, comprising:
a data server means comprised on at least one node on the network and supplying through the network a data package (information package) having any content for which a boundary is set relating to a predetermined attribute for the transaction, information relating to the control for utilization of the content, and information of said predetermined attribute for the transaction,
a data utilization means comprised on at least one node on the network, receiving the supplied data package, and substantially acquiring at least the content, and
a transaction management means comprised on any node on the network and carrying out predetermined processing relating to the transaction based on the information of said predetermined attribute for the transaction of the content each time the content delineated by the boundary is newly substantially acquired by the data utilization means.

2. A network system as set forth in claim 1, wherein:
the boundary set for said data package ipcludes a boundary relating to charging for a transaction of said content,
said information of said predetermined attribute included in the data package includes information relating to charging for said content, and
said transaction management means has a charging processing means for carrying out processing based on said information relating to charging every time content delineated by said boundary is newly substantially acquired by said data utilization means.

3. A network system as set forth in claim 2, wherein:
the boundary set for said data package includes a boundary whereby the content delineated by said boundary is content for which a predetermined property right is set,
said information of said predetermined attribute included in the data package includes information relating to said property right of said content, and
said transaction management means has a property right management means for carrying out processing for updating a property right of content acquired based on said information relating to said property right every time content delineated by said boundary is newly substantially acquired by said data utilization means.

4. A network system as set forth in claim 3, wherein:
the boundary set for said data package includes a boundary whereby the content delineated by the boundary is content which at least delineated into a range for which substantial acquisition has been authorized by an authorization,
said information of said predetermined attribute included in the data package includes information relating to authorization for substantial acquisition of said content of said data package, and
said transaction management means has a transaction authorization means for carrying out processing for authorization of transactions to control said substantial acquisition of said content based on said information relating to authorization of transactions when said data utilization means attempts to newly substantially acquire content delineated by said boundary.

5. A network system as set forth in claim 4, wherein:
the boundary set for said data package includes a boundary whereby the content delineated by the boundary is content which at least delineated into a range relating to charging and for which substantial acquisition has been authorized by an authorization,
said information of said predetermined attribute included in the data package includes information relating to charging for said content, and
said transaction authorization means carries outs said processing for authorization of transactions based on said information relating to charging when said data utilization means attempts to newly substantially acquire content delineated by said boundary.

6. A network system as set forth in claim 5, wherein:
the boundary set for said data package includes a boundary whereby the content delineated by the boundary is content which is at least delineated into a range owned by a predetermined owner and for which substantial acquisition has been authorized by an authorization,
said information of said predetermined attribute included in the data package includes information relating to ownership of said content, and
said transaction authorization means of said transaction management means carries out said processing for authorization of transactions based on said information relating to ownership when said data utilization means attempts to newly substantially acquire content delineated by said boundary.

7. A network system as set forth in claim 6, wherein:
the boundary set for said data package includes a boundary whereby the content delineated by the boundary is content which is at least delineated into a range which has value as a creative work and for which substantial acquisition has been authorized by an authorization,
said information of said predetermined attribute included in the data package includes information relating to a copyright of said content, and
said transaction authorization means of said transaction management means carries out said processing for authorization of transactions based on said information relating to said copyright when said data utilization means attempts to newly substantially acquire content delineated by said boundary.

8. A network system as set forth in claim 7, wherein:
said information of said predetermined attribute of said data package includes information designating said transaction authorization means for carrying out processing relating to authorization of substantial acquisition and
said transaction authorization means is provided on any node on the network and is driven by being called up by said transaction management means based on said information designating said transaction authorization means.

9. A network system as set forth in claim 8, wherein the substantial acquisition of said content in said data utilization means includes acquisition of said data package and use of said content based on information relating to control for utilization of said content.

10. A network system as set forth in claim 9, wherein:
said information relating to control for utilization of said content included in said data package has information for control of said content from the node in which the content exists to the node of the data utilization means and
further provision is made of a transmission means for transmitting said content to said data utilization means through said network based on information for controlling said transmission when the data utilization means has requested substantial acquisition of said content.

11. A network system as set forth in claim 10, wherein:
said data package has, as its content, time series continuous data existing on any node on said network and has, as information for control for utilization of said content, information for control of transmission of said time series continuous data to said data utilization means,
provision is further made of a transmission management means generated on any node on the network for managing the transmission of said time series continuous data based on said information relating to control for utilization of said content when said data utilization means requests substantial acquisition of said time series continuous data,
a transmission means generated by said transmission management means on the node where said time series continuous data exists for acquiring said time series continuous data and transmitting it in a predetermined transfer format, and
a reception means generated by said transmission management means on the node where said data utilization means exists for receiving data transmitted by said predetermined format and supplying it to said data utilization means, and
a desired location of said time series continuous data is transmitted to said data utilization means and said data utilization means substantially acquires said transmitted time series continuous data through said transmission means and said reception means based on the control of said transmission management means.

12. A network system as set forth in claim 11, wherein said information relating to control for utilization of said content includes information designating a processing means for utilization of said content and all, some, or one of information on a type of the content, a property of the content, restrictions on utilization, owner, creator, type of content, and type of service.

13. A network system as set forth in claim 12, wherein said data package further includes information relating to the nature of the content itself.

14. A network system as set forth in claim 13, wherein any information of said information of the data package is information referring to information substantially existing in another data package.

15. A network system as set forth in claim 14, wherein said data package substantially has part of information substantially existing in said other data package.

16. A network system as set forth in claim 15, wherein further provision is made of:
a reference request generating means for generating a reference request for referring to the entity of said data when said data utilization means utilizes information of said data package referring to another data package and
a management means for managing information on nodes in the vicinity of any node on the network for any such node and for searching for a destination of reference by successively propagating said reference request to nodes which may might substantially connect with the node of the designation of reference of said reference request.

17. A network system as set forth in claim 16, wherein further provision is made of a data package disposal means for managing, for said data package, the state by which information of said data package is referenced from other data packages and managing the disposal of said data package based on said managed state.

18. A data distribution method in a network through which a plurality of nodes are connected for distributing any content as a transactable product to a data utilization means comprised of at least one node on the network, comprising:
sending through the network a data package (information package) having any content for which a boundary is set relating to a predetermined attribute for the transaction, information relating to the control for utilization of the content, and information of a predetermined attribute for the transaction,
receiving the data package supplied by the data utilization means, substantially acquiring at least the content, and
carrying out predetermined processing relating to the transaction based on the information of the predetermined attribute for the transaction of the content each time the content delineated by the boundary is newly substantially acquired by the data utilization means.

19. A data distribution method as set forth in claim 18, wherein:
the boundary set for said data package includes a boundary relating to charging for a transaction of said content,
said information of said predetermined attribute included in the data package includes information relating to charging for said content, and
said predetermined processing relating to a transaction includes charging processing based on said information relating to charging.

20. A data distribution method as set forth in claim 19, wherein:
the boundary set for said data package includes a boundary whereby the content delineated by said boundary is content for which a predetermined property right is set,
said information of said predetermined attribute included in the data package includes information relating to said property right of said content, and
said predetermined processing relating to a transaction includes processing for updating a property right of content acquired based on said information relating to said property right.

21. A data distribution method as set forth in claim 20, wherein:
the boundary set for said data package includes a boundary whereby the content delineated by the boundary is content which at least delineated into a range for which substantial acquisition has been authorized by an authorization,
said information of said predetermined attribute included in the data package includes information relating to authorization for substantial acquisition of said content of said data package, and
said predetermined processing relating to a transaction includes processing for authorization of said substantial acquisition of said content based on said information relating to authorization of transactions when said data utilization means attempts to newly substantially acquire content delineated by said boundary.

22. A data distribution method as set forth in claim 21, wherein:
the boundary set for said data package includes a boundary whereby the content delineated by the boundary is content which at least delineated into a range relating to charging and for which substantial acquisition has been authorized by an authorization,
said information of said predetermined attribute included in the data package includes information relating to charging for said content, and
said processing for authorization of substantial acquisition of said content includes processing carried out based on said information relating to charging.

23. A data distribution method as set forth in claim 22, wherein:
the boundary set for said data package includes a boundary whereby the content delineated by the boundary is content which is at least delineated into a range owned by a predetermined owner and for which substantial acquisition has been authorized by an authorization,
said information of said predetermined attribute included in the data package includes information relating to ownership of said content, and
said processing for authorization of substantial acquisition of said content includes processing carried out based on said information relating to ownership.

24. A data distribution method as set forth in claim 23, wherein:
the boundary set for said data package includes a boundary whereby the content delineated by the boundary is content which is at least delineated into a range which has value as a creative work and for which substantial acquisition has been authorized by an authorization,
said information of said predetermined attribute included in the data package includes information relating to a copyright of said content, and
said processing for authorization of substantial acquisition of said content including processing carried out based on said information relating to said copyright.

25. A data distribution method as set forth in claim 24, wherein:
said information of said predetermined attribute of said data package includes information designating said transaction authorization means for carrying out processing relating to authorization of substantial acquisition and
said processing for authorization of substantial acquisition being carried out by a transaction authorization means provided on any node on the network being selectively called up based on said information designating said transaction authorization means.

26. A data distribution method as set forth in claim 25, wherein the substantial acquisition of said content in said data utilization means includes acquisition of said data package and use of said content based on information relating to control for utilization of said content.

27. A data distribution method as set forth in claim 26, wherein:
said information relating to control for utilization of said content included in said data package has information for control of said content from the node in which the content exists to the node of the data utilization means and
said data package is transmitted by transmitting said data package including said content to said data utilization means through said network based on information for controlling said transmission in accordance with a request for substantial acquisition of said content by said data utilization means.

28. A data distribution method as set forth in claim 27, wherein:
said data package has, as its content, time series continuous data existing on any node on said network and has, as information for control for utilization of said content, information for control of transmission of said time series continuous data to said data utilization means,
a transmission management means for managing the transmission of said time series continuous data based on said information relating to control for utilization of said content is generated on any node on the network when said data utilization means requests substantial acquisition of said time series continuous data,
a transmission means for acquiring said time series continuous data and transmitting it in a predetermined transfer format is generated on the node where said time series continuous data exists, and
a reception means for receiving data transmitted by said predetermined format and supplying it to said data utilization means is generated on the node where said data utilization means exists, and
a desired location of said time series continuous data is transmitted to said data utilization means through said transmission means and said reception means based on the control of said transmission management means.

29. A data distribution method as set forth in claim 28, wherein said information relating to control for utilization of said content includes information designating a processing means for utilization of said content and all, some, or one of information on a type of the content, a property of the content, restrictions on utilization, owner, creator, type of content, and type of service.

30. A data distribution method as set forth in claim 29, wherein said data package further includes information relating to the nature of the content itself.

31. A data distribution method as set forth in claim 30, wherein any information of said information of the data package is information referring to information substantially existing in another data package.

32. A data distribution method as set forth in claim 31, wherein said data package substantially has part of information substantially existing in said other data package.

33. A data distribution method as set forth in claim 32, wherein:
said information substantially existing in said other data package generates a reference request by which said data utilization means refers to the entity of said data and
a network management means provided for any node of the network for managing information on nodes in the vicinity of any such node successively propagates said reference request to nodes which may might substantially connect with the node of the designation of reference of said reference request.

34. A data distribution method as set forth in claim 33, wherein:
the state by which information of said data package is referenced from other data packages is managed for said data package and
an unnecessary data package is suitably disposed of based on said managed state.

35. A computer readable recording medium on which a data package for distribution of any content as a product for transaction in a network through which a plurality of nodes are connected is recorded and which can be read by a computer substantially connected to the network, recorded a data package comprising:
any content for which a boundary is set relating to a predetermined attribute for the transaction,
information relating to the control for utilization of the content, and
information of said predetermined attribute for the transaction.

36. A computer readable recording medium as set forth in claim 35, wherein:
the boundary set for said data package includes a boundary relating to charging for charging processing carried out each time content delineated by said boundary is substantially transacted,
said information of said predetermined attribute included in the data package includes information relating to charging for said content and used for said charging processing.

37. A computer readable recording medium as set forth in claim 36, wherein:
the boundary set for said data package includes a boundary whereby the content delineated by said boundary is content for which a predetermined property right is set so as to perform processing for updating a property right of content acquired based on said information relating to said property right every time content delineated by said boundary is substantially transacted and
said information of said predetermined attribute included in the data package includes information relating to said property right of said content and used for processing for updating said property right.

38. A computer readable recording medium as set forth in claim 37, wherein:
the boundary set for said data package includes a boundary whereby the content delineated by the boundary is content which at least delineated into a range for which substantial transaction has been authorized by an authorization so as to perform processing for authorization of said transaction when the content delineated by said boundary is to be substantially transacted and
said information of said predetermined attribute included in the data package includes information relating to authorization for substantial transaction of said data package and is used for the processing for authorization of said transaction.

39. A computer readable recording medium as set forth in claim 38, wherein:
a boundary relating to charging is set as the boundary set in the data package giving a content at least delineated into a range for which substantial transaction has been authorized by an authorization and
information relating to charging for the content is included as the information relating to authorization of said transaction included in said data package.

40. A computer readable recording medium as set forth in claim 39, wherein:
a boundary whereby the content delineated by the boundary is content owned by a predetermined owner is set as the boundary set in the data package giving a content at least delineated into a range for which substantial transaction has been authorized by an authorization and
information relating to the owner of said content is included as the information relating to authorization of said transaction included in said data package.

41. A computer readable recording medium as set forth in claim 40, wherein:
a boundary whereby the content delineated by the boundary is content which has value as a creative work is set as the boundary set in the data package giving a content at least delineated into a range for which substantial transaction has been authorized by an authorization and
information relating to the copyright is included as the information relating to authorization of said transaction included in said data package.

42. A computer readable recording medium as set forth in claim 41, wherein:
said information of said predetermined attribute of said data package includes information designating said transaction authorization means provided on any node on the network, operating by being called up, and carrying out processing relating to authorization for substantial transaction.

43. A computer readable recording medium as set forth in claim 42, wherein the substantial transaction includes acquisition of said content and acquisition of said content and use of said content based on information relating to control for utilization of said content.

44. A computer readable recording medium as set forth in claim 43, wherein said information relating to control for utilization of said content included in said data package includes information for control of transmission of said content from the node on which said content exists to said data utilization means through said network when the medium is read by a computer connected to the network.

45. A computer readable recording medium as set forth in claim 44, wherein said data package includes time series continuous data as its content and information for control of transmission of said content from the node on which the content exists to said data utilization means through said network when the medium is read by a computer connected to the network.

46. A computer readable recording medium as set forth in claim 45, wherein said information relating to control for utilization of said content includes information designating a processing means for utilization of said content and all, some, or one of information on a type of the content, a property of the content, restrictions on utilization, owner, creator, type of content, and type of service.

47. A computer readable recording medium as set forth in claim 46, wherein said data package further includes information relating to the nature of the content itself.

48. A computer readable recording medium as set forth in claim 47, wherein any information of said information of the data package is information referring to information substantially existing in another data package.

49. A computer readable recording medium as set forth in claim 48, wherein said data package substantially has part of information substantially existing in said other data package.

50. A computer readable recording medium as set forth in claim 49, wherein said data package further has a region which is referenced when said data package is to be disposed of in which the state of information of said data package being referenced by other data packages is recorded.

51. A computer readable recording medium as set forth in claim 50, wherein said region in which the state of being referenced by other data packages is recorded is provided as a header of said data package.
